(19) Europäisches Patentamt
European Patent Office
Office européen des brevets

(11) **EP 2 641 123 B1**

(12) **EUROPÄISCHE PATENTSCHRIFT**

(45) Veröffentlichungstag und Bekanntmachung des Hinweises auf die Patenterteilung:
**18.01.2017 Patentblatt 2017/03**

(51) Int Cl.:
***G02C 7/02*** *(2006.01)*

(21) Anmeldenummer: **11790871.5**

(22) Anmeldetag: **16.11.2011**

(86) Internationale Anmeldenummer:
**PCT/EP2011/005781**

(87) Internationale Veröffentlichungsnummer:
**WO 2012/065737 (24.05.2012 Gazette 2012/21)**

(54) **VERFAHREN ZUR OPTIMIERUNG EINES BRILLENGLASES MIT EINEM DIFFRAKTIVEN GITTER**

METHOD FOR OPTIMIZING A SPECTACLE LENS WITH A DIFFRACTION GRATING

PROCÉDÉ D'OPTIMISATION D'UN VERRE DE LUNETTE PRÉSENTANT UN RÉSEAU DE DIFFRACTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.11.2010 DE 102010051627**

(43) Veröffentlichungstag der Anmeldung:
**25.09.2013 Patentblatt 2013/39**

(73) Patentinhaber: **Rodenstock GmbH**
**80687 München (DE)**

(72) Erfinder:
• **BECKEN, Wolfgang**
**82061 Neurid (DE)**
• **ESSER, Gregor**
**80686 München (DE)**
• **ALTHEIMER, Helmut**
**87650 Baisweil-Lauchdorf (DE)**
• **MÜLLER, Werner**
**75443 Ötisheim (DE)**
• **UTTENWEILER, Dietmar**
**82057 Icking (DE)**

(74) Vertreter: **Müller-Boré & Partner**
**Patentanwälte PartG mbB**
**Friedenheimer Brücke 21**
**80639 München (DE)**

(56) Entgegenhaltungen:
**EP-A1- 1 424 049        EP-A1- 2 108 993**
**WO-A1-2005/098518        WO-A1-2008/089999**
**US-A- 6 070 980        US-A1- 2004 080 710**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Ein Brillenglas mit einer refraktiven Vorderfläche und einer refraktiven Rückfläche, welches aus einem dispergierenden Material aufgebaut ist, erzeugt in der Peripherie immer einen Farbsaum. Dies gilt unabhängig davon, unter welchen monochromatischen Kriterien die Brillenglasflächen zunächst bestimmt worden sind. Insbesondere dann, wenn die Flächen durch eine individuelle Optimierung monochromatisch gesehen den bestmöglichen Kompromiss zwischen verschiedenen Anforderungen verwirklichen, so wie es etwa durch die Minimierung einer Zielfunktion geschieht, besitzt ein Glas mit diesen Flächen unter polychromatischen Bedingungen einen Farbsaum. Dieser Farbsaum kann durch den Einsatz mindestens eines diffraktiven Gitters zumindest teilweise kompensiert werden. Ein diffraktives Gitter, das zur Farbsaumkorrektur auf einem Brillenglas aufgebracht ist, kann in Abhängigkeit der dioptrischen. Wirkung des Glases gewählt werden. Umgekehrt trägt jedoch das Gitter ebenfalls zur Wirkung des Brillenglases bei. Durch das diffraktive Gitter wird somit zwar der Farbsaum eines Brillenglases mit Flächen, die ohne Gitter optimiert worden sind und einen Farbsaum erzeugen, zumindest teilweise aufgehoben. Ein solches Brillenglas weist jedoch einen durch das diffraktive Gitter eingeführten Refraktionsfehler auf.

US 6 070 980, EP 2 108 993 A2, US 2004/0080710 A1 offenbaren jeweils Brillengläser mit diffraktiven Strukturen zur Korrektur des Farbsaums der Brillengläser.

EP 1 424 049 A1 offenbart eine intraokulare multifokale Linse, die ausgelegt ist, im implantierten Zustand die Aberration des Auges für zumindest einen Fokus zu minimieren.

WO 2005/098518 A1 offenbart ein Verfahren zum Berechnen einer asphärischen ophthalmischen Linse mit diffraktiven Strukturen, so dass die chromatische Aberration und zumindest eine monochromatische Aberration des Auges minimiert werden.

Eine Aufgabe der Erfindung ist es, ein Verfahren zum Optimieren und Herstellen eines optischen Elements, beispielsweise eines Brillenglases, bereitzustellen, welches es ermöglicht, sowohl die Abbildungseigenschaften des optischen Elements als auch dessen Farbfehler optimal zu korrigieren.

Diese Aufgabe wird durch ein computerimplementiertes Verfahren zum Optimieren eines optischen Elements mit den im Anspruch 1 angegebenen Merkmalen; durch ein Computerprogrammeszeugnis mit den im Anspruch 12 angegebenen Merkmalen, durch eine Vorrichtung zum Optimieren eines optischen Elements mit den im Anspruch 13 angegebenen Merkmalen; durch ein Verfahren zum Herstellen eines optischen Elements mit den im Anspruch 14 angegebenen Merkmalen und durch eine Vorrichtung zum Herstellen eines optischen Elements mit den im Anspruch 15 angegebenen Merkmalen gelöst.

Ein erster Aspekt der Erfindung betrifft ein computerimplementiertes Verfahren zum Optimieren eines optischen Elements umfassend zumindest ein diffraktives Gitter, wobei zumindest eine zur refraktiven Lichtablenkung beitragende, refraktive Fläche und/oder das zumindest eine diffraktive Gitter des optischen Elements derart optimiert wird bzw. werden, den Farbsaum und zumindest einen Abbildungsfehler zweiter Ordnung des optischen Elements zu minimieren. Insbesondere betrifft ein Aspekt der Erfindung ein computerimplementiertes Verfahren zum Optimieren eines optischen Elements umfassend zumindest ein diffraktives Gitter, wobei zumindest eine zur refraktiven Lichtablenkung beitragende, refraktive Fläche und/oder das zumindest eine diffraktive Gitter des optischen Elements derart optimiert werden, den Farblängs- und/oder Farbquerfehler und zumindest einen (monochromatischen) Abbildungsfehler zweiter Ordnung des optischen Elements zu minimieren. Der Farblängs- und/oder der Farbquerfehler des optischen Elements stellt bzw. stellen dabei ein Maß für den Farbsaum des optischen Elements dar. Vorzugsweise wird der Farbquerfehler des optischen Elements minimiert.

Unter einem optischen Element im Sinne der vorliegenden Anmeldung wird ein beliebiges, abbildendes optisches Element oder System mit einer oder mehreren optischen Komponent(en) verstanden. Das optische Element kann z.B. eine Linse oder ein Linsensystem, ein Brillenglas, ein Prisma, etc. sein. Das optische Element weist zumindest zwei (refraktive) Grenzflächen und zumindest ein diffraktives Gitter auf. Das diffraktive Gitter kann z.B. auf eine der refraktiven Grenzflächen aufgebracht oder angeordnet sein. Das optische Element kann jedoch mehr als zwei Grenzflächen umfassen, wie z.B. bei einem Linsensystem, bei laminierten Linsen oder Brillengläsern, bei Brillengläsern, welche als ein so genanntes "Compoundsystem", umfassend zumindest ein Grundglas und ein Deckglas ausgebildet sind, etc..

Unter dem Begriff "diffraktives Gitter" im Sinne der vorliegenden Anmeldung wird jedes phasen- und/oder amplitudenmodulierende bzw. -ändernde optische Element verstanden, bei welchem Beugungseffekte von Relevanz sind. Insbesondere ist ein phasenänderndes optisches Element (POE) ein Element, welches phasenverzögernd oder phasenmodulierend ist, und zwar so, dass die Änderung der optischen Weglänge durch Hinzufügen des Elements vom Durchtrittspunkt des Strahls abhängt. Das diffraktive Gitter kann durch ein diffraktives optisches Element (Diffractive Optical Element oder DOE) realisiert werden oder durch jede andere Art der Phasen- und/oder Amplitudenmodulation.

Das diffraktive Gitter umfasst in der Regel eine im Wesentlichen regelmäßige, vorzugsweise periodische oder quasi-periodische, linienartige Anordnung von Strukturen oder Bereichen, in denen das Licht so beeinflusst wird, dass Beugungseffekte von Relevanz sind. Das diffraktive Gitter kann sowohl ein fein strukturiertes diffraktives Gitter sein, als auch ein grober strukturiertes diffraktives Gitter (wie z.B. MOD=<u>M</u>ulti-<u>O</u>rder-<u>D</u>iffraction Gitter) sein. Das diffraktive Gitter kann zum Beispiel ein Transmissionsgitter, ein mechanisch geteiltes Gitter, insbesondere ein Sägezahn- oder Blazegitter, ein holographisches Gitter, ein Gitter, welches durch eine dünne Folie oder Schicht mit variierendem Brechungsindex (Gradient-Index-Material) realisiert wird, etc. sein. Die Strukturen der eingesetzten diffraktiven Gitter können statisch oder schaltbar, insbesondere elektrisch schaltbar sein. Verfahren zum Herstellen von statischen oder schaltbaren diffraktiven Gittern sind aus dem Stand der Technik bekannt.

Vorzugsweise werden diffraktive Gitter eingesetzt, bei welchen der Gangunterschied zwischen zwei benachbarten Gitterlinien typischerweise einer Beugungsordnung von $|m|=1$ bis $|m|=4$ entspricht. Ebenfalls ist es möglich, ein MOD-Gitter zu verwenden, bei welchem der Gangunterschied typischerweise in der Größenordnung $|m|=20$ liegt.

Das diffraktive Gitter kann beispielsweise in der ersten Beugungsordnung verwendet werden. Es ist jedoch möglich, das diffraktive Gitter nicht in erster Beugungsordnung, sondern in einer höheren Ordnung zu verwenden. Das diffraktive Gitter kann eine Grenzfläche aufweisen, welche gegen Luft berechnet wird. Es ist ebenfalls möglich, eine Grenzfläche des diffraktiven Gitters nicht gegen Luft, sondern gegen ein anderes Material zu berechnen.

Das Profil des diffraktiven Gitters kann geeignet dimensioniert oder festgelegt werden. Das Profil des Gitters wird vorzugsweise so festgelegt, dass die Beugungseffizienz für eine bestimmte Beugungsordnung maximal ist. Anders ausgedrückt kann das Profil des Gitters so festgelegt werden, dass sich die Intensität des gebeugten Lichts möglichst in einer Beugungsordnung konzentriert. Vorzugsweise ist das Gitterprofil sägezahnförmig. Insbesondere kann eine sägezahnförmige (engl. blazed) Grenzfläche zwischen einem dispergierenden Grundmaterial und Luft eingesetzt werden. Die laterale Skala des Gitters, d.h. die Gitterkonstante kann in der Größenordnung der Wellenlänge liegen. Es ist jedoch auch möglich, diffraktive Gitter einzusetzen, wobei die Gitterkonstante nicht in der Größenordnung der Wellenlänge liegt, sondern um bis zu einem Faktor 100 darüber. Das diffraktive Gitter kann mit einem anderen Gitter überlagert/kombiniert werden, z.B. mit einem Fresnel-Gitter, welches eine von Null unterschiedliche dioptrische Wirkung aufweist. Die Periode des Gittes kann - wie nachfolgend im Detail beschrieben wird - geeignet bestimmt werden.

Das Gitter kann sich im Wesentlichen über den gesamten Winkelbereich des optischen Elements, z.B. über den gesamten Blickwinkelbereich eines Brillenglases erstrecken. Das Gitter kann in zentrierter Weise um einen vorgegebenen Bezugspunkt, insbesondere um den Prismenbezugspunkt, um den Zentrier- bzw. Anpaßpunkt, etc. oder um die geometrische Mitte des optischen Elements angeordnet werden. Es ist jedoch ebenfalls möglich, das Gitter dezentriert anzuordnen. Die Gitterlinien sind im allgemeinen Fall asymmetrische, geschlossene Kurven. Bei rotationssymmetrischen Elementen können die Gitterlinien kreisförmige oder elliptische Kurven sein.

Eine oder mehrere der Grenzflächen eines optischen Elements, z.B. eines Brillenglases können diffraktive Gitter aufweisen. So kann bei einem Brillenglas ein diffraktives Gitter auf der Vorder- und/oder der Rückfläche des Brillenglases angeordnet bzw. angebracht sein. Es ist jedoch möglich, ein Compoundsystem vorzusehen, welches aus einem Grundglas und einem Deckglas aufgebaut ist, wobei die Gitterstrukturen auf den geschützten Innenseiten des Grundglases und/oder des Deckglases (d.h. die sich gegenüber stehenden Seiten des Grund- und des Deckglases) aufgebracht sind.

Vorzugsweise ist der zumindest eine Abbildungsfehler zweiter Ordnung des optischen (abbildenden) Systems der Refraktionsfehler. Der Refraktionsfehler stellt insbesondere die Abweichung des sphärischen Äquivalents von einem vorgegebenen, z.B. durch Refraktionsbestimmung ermittelten Sollwert dar. Alternativ oder zusätzlich kann der zumindest eine Abbildungsfehler der astigmatische Fehler sein oder den astigmatischen Fehler umfassen. Der astigmatische Fehler stellt insbesondere den Betrag der astigmatischen Abweichung von einem vorgegebenen, z.B. durch Refraktionsbestimmung ermittelten Sollwert dar. Es ist ebenfalls möglich, Abbildungsfehler höherer Ordnung (z.B. Koma, Trefoil, sphärische Aberration, etc.) zu berücksichtigen.

Das Optimieren kann ein Abändern oder eine Variation zumindest eines variablen Parameters des diffraktiven Gitters und/oder zumindest eines variablen Flächenparameters der refraktiven Fläche umfassen. Vorzugsweise werden die zumindest eine refraktive Fläche und/oder das zumindest eine diffraktive Gitter mittels einer flexiblen mathematischen Darstellung, wie z.B. Spline-Darstellung oder eine polynomische Darstellung, beschrieben. Vorzugsweise wird das Gitter - wie nachfolgend beschrieben - mittels einer Phasenfunktion mit zumindest einem Freiheitsgrad bzw. mit zumindest einem variablen Parameter beschrieben. Die zumindest eine refraktive Fläche, welche zur refraktiven Lichtablenkung beiträgt und/oder das zumindest eine diffraktive Gitter werden vorzugsweise solange variiert oder optimiert, bis sowohl der zumindest eine Abbildungsfehler als auch der Farbsaum im Sinne eines, vorzugsweise bestmöglichen, Kompromisses optimal gering werden. Anders ausgedrückt, werden die zumindest eine refraktive Fläche und/oder das zumindest eine diffraktive Gitter solange variiert oder optimiert, bis sowohl der zumindest eine Abbildungsfehler als auch der Farbsaum minimiert werden. Das Optimieren kann ein Minimieren oder ein Maximieren einer Zielfunktion umfassen, welche die Abbildungsfehler an vielen Bewertungsstellen sowie Farblängs- und/oder Farbquerfehler berücksichtigt, wobei die Minimierung/Maximierung der Zielfunktion einen geeigneten Kompromiss zwischen den Anforderungen an vielen Blickrichtungen sucht.

Insbesondere kann das Optimieren derart erfolgen, dass der Farbsaum in einem vorgegebenen Bereich des optischen Elements unter einer vorgegebenen Wahrnehmungsschwelle liegt. Unterhalb der Wahrnehmungsschwelle wird der Farbsaum nicht als störend empfunden. Die Wahrnehmungsschwelle kann im Bereich zwischen 0,04 cm/m und 0,5 cm/m liegen. Eine typische Wahrnehmungsschwelle ist 0,12 cm/m. Der vorgegebene Bereich kann sich über das gesamte optische Element erstrecken. Vorzugsweise werden der zumindest eine Abbildungsfehler und der Farbsaum an mehreren Bewertungspunkten ermittelt und mittels einer Zielfunktion ausgewertet. Minimieren wird in diesem Fall im Sinne eines Auffindens eines, vorzugsweise bestmöglichen, Kompromisses verstanden, welcher durch eine Optimierung in einer Mehrzahl von Bewertungspunkten oder Blickwinkeln gesucht wird.

Unabhängig von der Art und Weise wie der Kompromiss zustande kommt, ist es vorteilhaft, das Optimieren der zumindest einen refraktiven Fläche und/oder des zumindest einen diffraktiven Gitters in Gebrauchsstellung des optischen Elements durchzuführen, wobei vorzugsweise die Eigenschaften des optischen Elements in Gebrauchsstellung und beim Vorhandensein eines diffraktiven Gitters berücksichtigt werden. Die Eigenschaften des optischen Elements in Gebrauchsstellung umfassen den zumindest einen Abbildungsfehler zweiter Ordnung. Die Berechnung der Eigenschaften eines optischen Elements mit zumindest einem diffraktiven Gitter in Gebrauchsstellung wird nachfolgend im Detail beschrieben.

Mit dem erfindungsgemäßen Verfahren kann ein optisches Element erhalten werden, welches sowohl hinsichtlich seiner Abbildungseigenschaften als auch hinsichtlich der Farbfehler optimal korrigiert ist. Des Weiteren ist es möglich, zusätzlich eine Reduktion der Dicke des optischen Elements zu erzielen.

So kann bei einem herkömmlichen dünnen Brillenglas aus einem hochbrechenden Material mit Abbezahl $v_d$ = 30, welches monochromatisch optimiert worden ist, der Bereich, in welchem der Farbsaum unter der Wahrnehmungsschwelle liegt, je nach Wirkung nur wenige Millimeter groß sein. Mit dem vorgeschlagenen Optimierungsverfahren gemäß einem bevorzugten Ausführungsbeispiel lässt sich dieser Bereich nahezu auf das ganze Brillenglas ausdehnen, was einer theoretischen Abbezahl von $v_d$ =100 bis $v_d$ = 200 entspricht. Somit kann ein Brillenglas erhalten werden, das praktisch über den gesamten Blickwinkelbereich farbsaumkorrigiert ist. Eine solche Verbesserung lässt sich sowohl für Einstärkengläser als auch für asymmetrische Gläser und insbesondere für progressive Brillengläser erzielen.

Um ein optisches Element, z.B. ein Brillenglas, zu berechnen, dessen Wirkung sowohl durch Flächenkrümmungen als auch durch mindestens ein diffraktives Gitter zustande kommt, werden vorzugsweise sowohl die zumindest eine refraktive Fläche als auch das zumindest eine diffraktive Gitter des optischen Element optimiert bzw. variiert. Dies kann durch eine Optimierung bzw. eine Variation der Flächenparameter und Parameter des diffraktiven Gitters erfolgen.

Vorzugsweise umfasst das Verfahren ein simultanes, d.h. gleichzeitiges Optimieren bzw. Variieren der zumindest einen refraktiven Fläche und des zumindest einen diffraktiven Gitters. Das Optimieren kann durch ein Minimieren oder ein Maximieren einer Zielfunktion, welche von dem zumindest einen Abbildungsfehler und von dem Farblängs- und/oder Farbquerfehler des optischen Elements abhängt, erfolgen. Diese Zielfunktion wird nachfolgend - im Gegensatz zu einer herkömmlichen, monochromatischen Zielfunktion - auch als "polychromatische" Zielfunktion bezeichnet. Die Optimierung erfolgt vorzugsweise für eine Mehrzahl von Bewertungsstellen, z.B. für 1000 bis über 10000 Bewertungsstellen.

Der Farbsaum bzw. die Farbfehler (Farblängs- und/oder Farbquerfehler) des optischen Elements kann bzw. können mittelbar durch die Wellenlängenabhängigkeit der in die Zielfunktion eingehenden Abbildungsfehler berücksichtigt werden. Der Farblängs- und/oder der Farbquerfehler des optischen Elements können ebenfalls unmittelbar, z.B. durch zusätzliche Terme, welche von den Farblängs- und/oder Farbquerfehler abhängen, in die Zielfunktion eingehen. Die Zielfunktion wird vorzugsweise an einer Mehrzahl von Bewertungsstellen ausgewertet.

Vorzugsweise werden sowohl das diffraktive Gitter als auch die refraktiven Flächen, welche zur refraktiven Lichtablenkung beitragen, gleichzeitig solange variiert bis sowohl der zumindest eine Abbildungsfehler als auch der Farbsaum im Sinne eines bestmöglichen Kompromisses optimal gering werden. Ohne Farbsaumproblematik ist das Problem, ein optisches Element für mehrere Bewertungspunkte, wie z.B. ein Brillenglas für mehrere Blickrichtungen, sowohl refraktionsrichtig als auch astigmatismusfrei zu berechnen, überbestimmt, solange die Freiheitsgrade lediglich durch eine oder zwei variable Flächen gegeben sind. Ein Lösungsansatz nach dem Stand der Technik ist in einem solchen Fall die Minimierung/Maximierung einer Zielfunktion, welche die Abbildungsfehler an vielen Bewertungsstellen berücksichtigt, wobei die Minimierung/Maximierung der Zielfunktion einen geeigneten Kompromiss zwischen den Anforderungen an vielen Blickrichtungen sucht. Wird der Farbsaum berücksichtigt, so muss in der Regel ebenfalls ein überbestimmtes Problem gelöst werden, und zwar auch dann, wenn mit dem Gitter noch ein Freiheitsgrad hinzukommt. Wieder besteht das Problem in der Suche nach einem geeigneten Kompromiss. Anders als bei einer rein monochromatischen Optimierung gleicht der Kompromiss gemäß einem bevorzugten Ausführungsbeispiel jedoch nicht nur Anforderungen zwischen verschiedenen Blickrichtungen aus, sondern auch zwischen mindestens zwei verschiedenen Wellenlängen.

Gemäß einem nicht erfindungsgemäßen Vergleichsbeispiel ist die Zielfunktion eine Zielfunktion $F_1$ der Form:

$$F_1 = \sum_\lambda F_{\text{monochrom}}(\lambda) \, ,$$

**4**

wobei $F_{\text{monochrom}}(\lambda)$ eine monochromatische Zielfunktion für die Wellenlänge $\lambda$ ist; und wobei die polychromatische Zielfunktion $F_1$ für zumindest zwei unterschiedliche Wellenlängen ausgewertet wird.

Eine solche Zielfunktion kommt insbesondere dadurch zustande, dass eine beliebige monochromatische Zielfunktion als Funktion der Wellenlänge aufgefasst wird und für zumindest zwei unterschiedliche Wellenlängen ausgewertet und über den Satz von zumindest zwei unterschiedlichen Wellenlängen summiert wird. Wie bereits oben ausgeführt, werden in diesem Fall die Farbfehler des optischen Elements mittelbar durch die Wellenlängenabhängigkeit der in die Zielfunktion eingehenden Größen berücksichtigt. Die monochromatische Zielfunktion kann z.B. eine aus dem Stand der Technik bekannte monochromatische Zielfunktion sein.

Insbesondere kann die Zielfunktion $F_1$ eine Zielfunktion der Form:

$$F_1 = \sum_{i,\lambda} g_Z(i,\lambda)(Z_\Delta(i,\lambda) - Z_{\Delta,\text{Soll}}(i,\lambda))^2 + g_S(i,\lambda)(S_\Delta(i,\lambda) - S_{\Delta,\text{Soll}}(i,\lambda))^2$$

sein.

In der obigen Formel bezeichnen:

$Z_\Delta(i,\lambda)$ den Ist-Wert des Betrags des astigmatischen Fehlers an der $i$-ten Bewertungsstelle des optischen Elements für die Wellenlänge $\lambda$;

$Z_{\Delta,\text{Soll}}(i,\lambda)$ den Sollwert des Betrags des astigmatischen Fehlers an der $i$-ten Bewertungsstelle des optischen Elements für die Wellenlänge $\lambda$;

$S_\Delta(i,\lambda)$ den Ist-Wert des Refraktionsfehlers an der $i$-ten Bewertungsstelle des optischen Elements für die Wellenlänge $\lambda$;

$S_{\Delta,\text{Soll}}(i,\lambda)$ den Sollwert des Refraktionsfehlers an der $i$-ten Bewertungsstelle des optischen Elements für die Wellenlänge $\lambda$;

$g_Z(i,\lambda)$ die Gewichtung des Betrags der astigmatischen Abweichung an der $i$-ten Bewertungsstelle des optischen Elements für die Wellenlänge $\lambda$; und

$g_S(i,\lambda)$ die Gewichtung des Refraktionsfehlers an der $i$-ten Bewertungsstelle des optischen Elements für die Wellenlänge $\lambda$.

Die Zielfunktion kann eine Zielfunktion $F_2$ der Form:

$$F_2 = F_{\text{monochrom}}(\lambda_0) + \sum_i g_{\text{FLF}}(i) \times f\left(\mathbf{S}_{\text{SK}}(i,\lambda_2) - \mathbf{S}_{\text{SK}}(i,\lambda_1)\right)^2$$

sein.

In der obigen Formel bezeichnen:

$F_{\text{monochrom}}(\lambda)$ eine monochromatische Zielfunktion für eine vorgegebene Wellenlänge $\lambda_0$;

$g_{\text{FLF}}(i)$ die Gewichtung des Farblängsfehlers an der $i$-ten Bewertungsstelle des optischen Elements;

$\mathbf{S}_{\text{SK}}(i,\lambda_1)$ die Vergenzmatrix der Wellenfront an der Scheitelpunktkugel für die Wellenlänge $\lambda_1$ und für die $i$-te Bewertungsstelle;

$\mathbf{S}_{\text{SK}}(i,\lambda_2)$ die Vergenzmatrix der Wellenfront an der Scheitelpunktkugel für die Wellenlänge $\lambda_2$ und für die $i$-te Bewertungsstelle; und

$f(\mathbf{S}_{\text{SK}}(i,\lambda_2) - \mathbf{S}_{\text{SK}}(i,\lambda_1))$ eine Funktion der Differenz der Vergenzmatrizen der Wellenfront an der Scheitelpunktkugel für zwei unterschiedlichen Wellenlängen $\lambda_1$ und $\lambda_2$.

Eine Zielfunktion des obigen Typs kommt insbesondere dadurch zustande, dass eine beliebige monochromatische Zielfunktion bei einer vorgegebenen Wellenlänge $\lambda_0$ (Arbeitswellenlänge) ausgewertet wird und zu dieser Funktion noch ein Term hinzugenommen wird, welcher von der Differenz $(\mathbf{S}_{SK}(i,\lambda_2) - \mathbf{S}_{SK}(i,\lambda_1))$ der Vergenzmatrizen für zumindest zwei unterschiedlichen Wellenlängen $\lambda_1$ und $\lambda_2$ abhängt. Die Art der Abhängigkeit kann verschieden ausgewählt werden. Insbesondere kann die Funktion $f$ für den dioptrischen Abstand zwischen den Vergenzmatrizen oder für die Differenz der sphärischen Äquivalente stehen. Im letzteren Fall stellt die Funktion $f$ einen Strafterm für den Farblängsfehler dar. Die Funktion $f$ kann eine beliebige Funktion sein, für die $f(\mathbf{0})=0$ erfüllt ist. Bevorzugt ist $f$ so zu wählen, dass $f(\mathbf{S}_{SK}(i,\lambda_2) - \mathbf{S}_{SK}(i,\lambda_1))$ umso größer ist, je größer der dioptrische Abstand zwischen $\mathbf{S}_{SK}(i,\lambda_2)$ und $\mathbf{S}_{SK}(i,\lambda_2)$ ist. In einer anderen bevorzugten Ausführungsform ist $f(\mathbf{S}_{SK}(i,\lambda_2) - \mathbf{S}_{SK}(i,\lambda_1))$ umso größer, je größer der Abstand zwischen den sphärischen Äquivalenten von $\mathbf{S}_{SK}(i,\lambda_2)$ und $\mathbf{S}_{SK}(i,\lambda_1)$ ist.

Eine Zielfunktion $F_2$ des obigen Typs kann eine Zielfunktion der Form:

$$F_2 = \sum_i \left( g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 + g_{\text{FLF}}(i) \times f(S_{\text{SK}}(i,\lambda_2) - S_{\text{SK}}(i,\lambda_1))^2 \right)$$

sein. In dieser Formel bezeichnen:

$Z_\Delta(i,\lambda)$ den Ist-Wert des Betrags des astigmatischen Fehlers an der $i$-ten Bewertungsstelle des optischen Elements für die Wellenlänge $\lambda$;

$Z_{\Delta,\text{Soll}}(i,\lambda)$ den Sollwert des Betrags des astigmatischen Fehlers an der $i$-ten Bewertungsstelle des optischen Elements für die Wellenlänge $\lambda$;

$S_\Delta(i,\lambda)$ den Ist-Wert des Refraktionsfehlers an der $i$-ten Bewertungsstelle des optischen Elements für die Wellenlänge $\lambda$;

$S_{\Delta,\text{Soll}}(i,\lambda)$ den Sollwert des Refraktionsfehlers an der $i$-ten Bewertungsstelle des optischen Elements für die Wellenlänge $\lambda$;

$g_Z(i,\lambda)$ die Gewichtung des Betrags der astigmatischen Abweichung an der $i$-ten Bewertungsstelle des optischen Elements für die Wellenlänge $\lambda$; und

$g_S(i,\lambda)$ die Gewichtung des Refraktionsfehlers an der $i$-ten Bewertungsstelle des optischen Elements für die Wellenlänge $\lambda$.

Alternativ kann die Zielfunktion eine Zielfunktion $F_3$ der Form:

$$F_3 = F_{\text{monochrom}}(\lambda_0) + \sum_i g_{\text{FQF}}(i) \times g(\Delta\varphi_{\text{SK}}(i,\lambda_2,\lambda_1))^2$$

sein, wobei

$F_{\text{monochrom}}(\lambda)$ eine monochromatische Zielfunktion für eine vorgegebene Wellenlänge $\lambda_0$;

$g_{\text{FQF}}(i)$ die Gewichtung des Farbquerfehlers an der $i$-ten Bewertungsstelle des optischen Elements;

$S_{\text{SK}}(i,\lambda_1)$ die Vergenzmatrix der Wellenfront an der Scheitelpunktkugel für die Wellenlänge $\lambda_1$ und für die $i$-te Bewertungsstelle;

$S_{\text{SK}}(i,\lambda_2)$ die Vergenzmatrix der Wellenfront an der Scheitelpunktkugel für die Wellenlänge $\lambda_2$ und für die $i$-te Bewertungsstelle;

$\Delta\varphi_{\text{SK}}(i,\lambda_2,\lambda_1)$ den Winkel zwischen den objektseitigen Hauptstrahlen für unterschiedlichen Wellenlängen $\lambda_1$ und $\lambda_2$ und $g(\Delta\varphi_{\text{SK}}(i,\lambda_2,\lambda_1))$ eine Funktion des Winkels zwischen den objektseitigen Hauptstrahlen für unterschiedlichen Wellenlängen $\lambda_1$ und $\lambda_2$

bezeichnen.

Eine Zielfunktion dieses Typs kann insbesondere dadurch zustande kommen, dass eine beliebige monochromatische Zielfunktion bei einer vorgegebenen Wellenlänge $\lambda_0$ (Arbeitswellenlänge) ausgewertet wird und zu dieser Zielfunktion ein zusätzlicher Term aufgenommen wird, welcher von dem Farbquerfehler abhängt. So stellt die Funktion $g(\Delta\varphi_{\text{SK}}(i,\lambda_2,\lambda_1))$ einen Strafterm für den Farbquerfehler dar, welcher durch den Winkel $\Delta\varphi_{\text{SK}}(i,\lambda_2,\lambda_1)$ zwischen den objektseitigen Hauptstrahlen für unterschiedliche Wellenlängen $\lambda_1$ und $\lambda_2$ gegeben ist. Die Funktion $g$ kann z.B. die Identität, eine trigonometrische Funktion oder eine andere geeignete Funktion sein.

Eine beispielhafte Zielfunktion des obigen Typs ist eine Zielfunktion $F_3$ der Form

$$F_3 = \sum_i \left( g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 + g_{\text{FQF}}(i) \times g(\Delta\varphi_{\text{SK}}(i,\lambda_2,\lambda_1))^2 \right),$$

wobei

$Z_\Delta(i,\lambda)$ den Ist-Wert des Betrags des astigmatischen Fehlers an der $i$-ten Bewertungsstelle des optischen Elements für die Wellenlänge $\lambda$;

$Z_{\Delta,\text{Soll}}(i,\lambda)$ den Sollwert des Betrags des astigmatischen Fehlers an der $i$-ten Bewertungsstelle des optischen Elements für die Wellenlänge $\lambda$;

$S_\Delta(i,\lambda)$ den Ist-Wert des Refraktionsfehlers an der $i$-ten Bewertungsstelle des optischen Elements für die Wellenlänge $\lambda$;

$S_{\Delta,\text{Soll}}(i,\lambda)$ den Sollwert des Refraktionsfehlers an der $i$-ten Bewertungsstelle des optischen Elements für die Wellenlänge $\lambda$;

$g_Z(i,\lambda)$ die Gewichtung des Betrags der astigmatischen Abweichung an der $i$-ten Bewertungsstelle des optischen Elements für die Wellenlänge $\lambda$; und

$g_S(i,\lambda)$ die Gewichtung des Refraktionsfehlers an der $i$-ten Bewertungsstelle des optischen Elements für die Wellenlänge $\lambda$

bezeichnen.

Es ist ebenfalls möglich, eine andere geeignete Zielfunktion einzusetzen, z.B. eine Zielfunktion, welche eine Kombination der zuvor beschriebenen Zielfunktionen ist. Insbesondere kann die Zielfunktion Terme erhalten, welche sowohl von dem Farblängsfehler als auch von dem Farbquerfehler abhängen. Durch die Einführung einer Zielfunktion im Verfahren zum Optimieren eines optischen Elements mit zumindest einem diffraktiven Gitter kann weitgehend das Problem gelöst werden, sowohl die Refraktionsanforderung an das optische Element als auch die Reduktion chromatischer Fehler möglichst gut zu erreichen. Insbesondere kann mittels der Zielfunktion ein Kompromiss zwischen allen Anforderungen für eine Vielzahl von Bewertungsstellen und Richtungen, insbesondere Blickrichtungen gesucht werden. Um die vermehrten Anforderungen erfüllen zu können, wird vorgeschlagen, zusätzliche Freiheitsgrade bzw. variable Parameter einzuführen und zu variieren, nämlich die Freiheitsgrade mindestens eines diffraktiven Gitters, das vorzugsweise über eine modifizierte Wellenfrontdurchrechnung in die Zielfunktion eingeht.

Wie bereits oben beschrieben, kann das Verfahren zum Optimieren eines optischen Elements umfassend zumindest ein diffraktives Gitter ein simultanes, d.h. gleichzeitiges Optimieren oder Variieren der zumindest einen refraktiven Fläche und des zumindest einen diffraktiven Gitters umfassen. Statt simultan können die zumindest eine refraktive Fläche und das zumindest eine diffraktive Gitter des optischen Elements sequentiell (d.h. zeitlich nach einander) optimiert bzw. variiert werden. Insbesondere umfasst ein sequentielles Optimieren der zumindest einen refraktiven Fläche und des zumindest einen diffraktiven Gitters ein Optimieren der zumindest einen refraktiven Fläche beim festgehaltenen diffraktiven Gitter (d.h. bei festgehaltenem diffraktiven Anteil des optischen Elements) und ein Optimieren des zumindest einen diffraktiven Gitters bei festgehaltenen refraktiven Flächen (d.h. beim festgehaltenen refraktiven Anteil des optischen Elements).

Ein beispielhaftes Verfahren mit einem sequentiellen Optimieren umfasst die Schritte:

Vorgeben eines refraktiven optischen Elements,
Berechnen eines diffraktiven Gitters, welches den Farbsaum des vorgegebenen refraktiven optischen Elements minimiert, und Hinzufügen des so berechneten diffraktiven Gitters zu dem refraktiven optischen Element;
Optimieren zumindest einer der refraktiven Flächen des so entstandenen optischen Elements bei festgehaltenem diffraktiven Gitter derart, dass der durch das diffraktive Gitter eingeführte Refraktionsfehler minimiert wird; und
Optimieren des zumindest einen diffraktiven Gitters bei festgehaltenen refraktiven Flächen des optischen Elements derart, dass der durch die Flächenänderung der zumindest einen refraktiven Fläche eingeführten Farbsaum minimiert wird.

Das refraktive optische Element ist ein optisches Element, welches kein diffraktives Gitter aufweist. Das refraktive optische Element kann z.B. ein konventionelles Brillenglas oder eine Linse oder ein Linsensystem ohne diffraktive Gitter sein. Das refraktive optische Element ist vorzugsweise derart optimiert, zumindest einen Abbildungsfehler zweiter Ordnung, insbesondere den Refraktionsfehler und/oder den astigmatischen Fehler, zu minimieren. Minimieren ist im Sinne eines bestmöglichen Kompromiss zu verstehen, welches durch eine, eine Mehrzahl an Bewertungspunkte oder Blickwinkel umfassende Optimierung gesucht wird. Das refraktive optische Element kann z.B. nach einem aus dem Stand der Technik bekannten monochromatischen Optimierungsverfahren optimiert werden. Das monochromatische Optimieren kann durch ein Maximieren oder ein Minimieren einer monochromatischen Zielfunktion erfolgen, in welcher der zumindest ein Abbildungsfehler zweiter Ordnung als Zielgröße bzw. als Term eingeht.

Das Vorgeben eines refraktiven optischen Elements umfasst insbesondere das Vorgeben oder das Festlegen von Flächendaten des zumindest einen refraktiven optischen Elements. Die Flächendaten können in Form von numerischen Daten vorliegen. Vorzugsweise liegen die Flächendaten in Form einer funktionellen oder parametrischen Darstellung mit zumindest einem variablen Parameter vor. Eine geeignete Darstellung ist z.B. eine Spline-Darstellung. Die Flächendaten können in einem geeigneten Speicher gespeichert werden.

Das Berechnen des diffraktiven Gitters kann ein Optimieren des diffraktiven Gitters unter Berücksichtigung der Gebrauchsstellung des optischen Elements mit dem diffraktiven Gitter umfassen. Das Optimieren kann z.B. ein Minimieren einer der zuvor beschriebenen polychromatischen Zielfunktionen umfassen. In manchen Fällen ist es jedoch möglich, das diffraktive Gitter lediglich pauschal zu bestimmen oder zu berechnen. Das pauschale Bestimmen/Berechnen des diffraktiven Gittes kann z.B. in Abhängigkeit der Gesamtwirkung oder der refraktiven Wirkung des optischen Elements und/oder der Abbezahl des optischen Elements erfolgen.

Das Optimieren der zumindest einen Fläche und des zumindest einen diffraktiven Gitters können iterativ wiederholt werden. In der Regel konvergiert das Verfahren und kann nach einem passend gewählten Schritt abgebrochen werden.

Bei diesem Verfahren zum Optimieren eines optischen Elements mit einem sequentiellen, vorzugsweise iterativen Optimieren der zumindest einen refraktiven Fläche und des zumindest einen diffraktiven Gitters nehmen der zumindest einen Abbildungsfehler und der Farbsaum ihr denkbares Minimum lediglich approximativ an, da das Verfahren nach endlichen Schritten abgebrochen wird. Je nach Anzahl der Schritte kann jedoch die Qualität dieses Verfahrens nah an die Qualität des Verfahrens mit einem simultanen Optimieren der zumindest einen refraktiven Fläche und des zumindest einen diffraktiven Gitter herankommen. Ein Vorteil des Verfahrens mit einem sequentiellen, vorzugsweise iterativen Optimieren der zumindest einen refraktiven Fläche und des zumindest einen diffraktiven Gitters kann die Verwendung einer einfacheren Zielfunktion, z.B. einer Zielfunktion nach dem Stand der Technik sein. Es ist jedoch möglich, eine der zuvor beschriebenen polychromatischen Zielfunktion, zu verwenden.

Wenn ferner eine vollständige Kompensation des Farbsaums nicht angestrebt wird, sondern ein gewisser Rest-Farbsaumfehler zugelassen wird, dann genügt in der Regel jeweils eine relativ pauschale Wahl des Gitters, so dass dieses nicht durch eine Optimierung oder eine Zielfunktion bestimmt werden muss.

Vorzugsweise umfasst die Vorgabe eines refraktiven optischen Elements ein Optimieren zumindest einer der refraktiven Flächen des refraktiven optischen Elements, welches derart erfolgt, zumindest einen Abbildungsfehler zweiter Ordnung, vorzugsweise den Refraktionsfehler des optischen Elements, zu minimieren. Das Optimieren der zumindest einen refraktiven Fläche erfolgt vorzugsweise monochromatisch, d.h. das Optimieren erfolgt - wie aus dem Stand der Technik bekannt - ohne Berücksichtigung einer Wellenlängenabhängigkeit.

Vorzugsweise erfolgt die monochromatische Optimierung derart, den Refraktionsfehler und/oder den astigmatischen Fehler zu minimieren, wobei in zumindest einem Bezugspunkt die Brechkraft des optischen Elements im Wesentlichen gleich einem vorgegebenen Sollwert ($S_{\text{Rezept}}$) ist. Im Fall eines Brillenglases erfolgt die monochromatische Optimierung derart, dass in zumindest einem Bezugspunkt des Brillenglases die Brechkraft des Brillenglases im Wesentlichen gleich dem vorgegebenen, durch Refraktionsbestimmung ermittelten Rezeptwert $S_{\text{Rezept}}$ ist.

Der vorgegebene Bezugspunkt kann die optische Mitte des optischen Elements, der Scheitel des optischen Elements oder ein anderer geeigneter Bezugspunkt sein. Bei einem Brillenglas kann der Bezugspunkt beispielsweise der Fernbezugspunkt, der Anpaß- bzw. Zentrierpunkt, der Nahbezugspunkt, der Prismenbezugspunkt, die optische Mitte, die geometrische Mitte des rohrunden Brillenglases, etc. sein. Bei nicht prismatischen Brillengläsern fällt die optische Mitte in der Regel mit dem Prismenbezugspunkt zusammen. Bei prismatischen Brillengläser liegt die optische Mitte in der Regel in einem Punkt, dessen Lage im Allgemeinen numerisch bestimmt werden kann, und welcher mit keinem besonderen ausgezeichneten oder benannten Bezugspunkt im Brillenglas zusammen fallen muss. Näherungsweise ist die Position der optischen Mitte dadurch bestimmt, dass man die Gleichung für das Gesamtprisma, das sich nach der Prentice'schen Regel zu $\mathbf{Pr}:=\mathbf{Pr_0}-\mathbf{S'_\infty r}=0$ ergibt (wobei $\mathbf{Pr_0}$ das Verordnungsprisma und $\mathbf{S'_\infty}$ die Scheitelbrechwertmatrix ist), nach $\mathbf{r}$ zu $\mathbf{r}=(\mathbf{S'_\infty})^{-1}\mathbf{Pr_0}$ auflöst.

Gemäß einem anderen Ausführungsbeispiel umfasst das Verfahren zum Optimieren eines optischen Elements mit zumindest einem diffraktiven Gitter die Schritte

Vorgeben eines refraktiven optischen Elements;
Optimieren zumindest einer der refraktiven Flächen des refraktiven optischen Elements derart, dass der refraktive Anteil $S_{\text{ref0}}(\lambda_d)$ des Brechwerts in einem vorgegeben Bezugspunkt des refraktiven optischen Elements und für eine

vorgegebene Wellenlänge $\lambda_d$ den Wert $\dfrac{S_{\text{Rezept}}}{\left(1-\dfrac{1}{v_d}\cdot\dfrac{\lambda_d}{\lambda_F-\lambda_C}\right)}$ erreicht; und

Berechnen eines diffraktiven Gitters, welches den Farbsaum des refraktiven optischen Elements minimiert, und Hinzufügen des so berechneten diffraktiven Gitters zu dem optimierten refraktiven optischen Elements, wobei:

$S_{\text{Rezept}}$ einen vorgegebenen Sollwert;

$v_d$ die Abbezahl der Basisgläser;
$\lambda_F$ die F-Fraunhofer Linie, welche in die Definition der Abbezahl eingeht; und
$\lambda_C$ die C-Fraunhofer Linie, welche in die Definition der Abbezahl eingeht,

bezeichnen.

Das Optimieren der zumindest einen refraktiven Fläche des refraktiven optischen Elements erfolgt monochromatisch, d.h. ohne Berücksichtigung einer Wellenlängenabhängigkeit. Im Fall eines Brillenglases erfolgt die monochromatische Optimierung derart, dass in zumindest einem Bezugspunkt des Brillenglases die refraktive Brechkraft des Brillenglases im Wesentlichen gleich dem vorgegebenen, durch Refraktionsbestimmung ermittelten Rezeptwert $S_{\text{Rezept}}$

geteilt durch den Faktor $\left(1 - \dfrac{1}{v_d} \cdot \dfrac{\lambda_d}{\lambda_F - \lambda_C}\right)$ ist.

Aufgrund der prismatischen Wirkung des diffraktiven Gittes weist das diffraktive Element nach der Prentice'schen Regel ebenfalls eine dioptrische Wirkung auf. Für eine vorgegebene Wellenlänge $\lambda_d$ ist die tatsächliche Brechkraft $S_0(\lambda_d)$ eines farbsaumkorrigierten optischen Elements dessen refraktiven Brechkraft $S_{\text{ref},0}(\lambda_d)$ ist:

$$S_0(\lambda_d) = S_{\text{ref},0}(\lambda_d)\left(1 - \frac{1}{v_d} \cdot \frac{\lambda_d}{\lambda_F - \lambda_C}\right).$$

Anstatt in einem iterativen Verfahren die Flächen des optischen Elements so zu optimieren, dass die refraktive Brechkraft des optischen Elements den vorgegebenen Sollwert $S_{\text{Rezept}}$ annimmt (d.h. $S_{\text{ref},0}(\lambda_d)=S_{\text{Rezept}}$), wird gemäß diesem Beispiel vorgeschlagen, die Veränderung der Brechkraft durch das diffraktive Gitter vorzuhalten. Dies bedeutet insbesondere, dass das Optimieren der zumindest einen refraktiven Flächen von vornherein so gestaltet wird, dass die spätere gesamte Wirkung den vorgegebenen Sollwert $S_{\text{Rezept}}$ annimmt (d.h. $S_0(\lambda_d)=S_{\text{Rezept}}$). Das Optimieren des refraktiven optischen Elements findet folglich so statt, dass $S_{\text{ref},0}(\lambda_d) = \dfrac{S_{\text{Rezept}}}{\left(1 - \dfrac{1}{v_d} \cdot \dfrac{\lambda_d}{\lambda_F - \lambda_C}\right)}$ erfüllt ist.

In einem nächsten Schritt wird ein diffraktives Gitter so eingeführt, dass es den Farbsaum des optimierten refraktiven optischen Elements kompensiert bzw. minimiert.

Wie bereits oben erläutert, kann das Berechnen des diffraktiven Gitters ein Optimieren des diffraktiven Gitters unter Berücksichtigung der Gebrauchsstellung des optischen Elements mit dem diffraktiven Gitter umfassen. Das Optimieren kann z.B. ein Minimieren einer der zuvor beschriebenen polychromatischen Zielfunktionen umfassen. In manchen Fällen ist es jedoch möglich, das diffraktive Gitter lediglich pauschal zu bestimmen bzw. berechnen, z.B. in Abhängigkeit der Gesamtwirkung oder der refraktiven Wirkung des optischen Elements und von der Abbezahl des optischen Elements.

Das obige beispielhafte Verfahren hat den Vorteil, dass der Rechenaufwand vergleichsweise gering ist und dennoch eine optimale (im Rahmen der Möglichkeiten des Gitters) Korrektur des Farbsaums erzielt werden kann. Dagegen wird der Refraktionsfehler lediglich approximativ minimiert, da nach dem Hinzufügen des diffraktiven Gitters die Flächen nicht noch einmal in Gebrauchsstellung nachoptimiert werden. In vielen Fällen kann dies jedoch in Kauf genommen werden. Ein weiterer Vorteil ist die Möglichkeit, einfachere Zielfunktionen, z.B. aus dem Stand der Technik bekannte Zielfunktionen, zu verwenden.

Gemäß einem weiteren Beispiel umfasst das Verfahren zum Optimieren eines optischen Elements mit zumindest einem diffraktiven Gitter die Schritte

Vorgeben eines refraktiven optischen Elements mit einem Brechwert $S_{\text{ref},0}(\lambda_d) = \dfrac{S_{\text{Rezept}}}{\left(1 - \dfrac{1}{v_d} \cdot \dfrac{\lambda_d}{\lambda_F - \lambda_C}\right)}$

im einem vorgegebenen Bezugspunkt und für eine vorgegebene-Wellenlänge $\lambda_d$;
Berechnen eines diffraktiven Gitters, welches ausgelegt ist, den Farbsaum des refraktiven optischen Elements zu minimieren, und Hinzufügen des so berechneten diffraktiven Gitters zu dem refraktiven optischen Element; und

Optimieren zumindest einer der refraktiven Flächen des so entstandenen optischen Elements bei festgehaltenem diffraktiven Gitter derart, dass der durch das optische Gitter eingeführte Refraktionsfehler minimiert wird.

Anstatt wie in dem zuvor beschriebene Verfahren das diffraktive Gitter nachträglich zu bestimmen, kann das diffraktive Gitter von vornherein als dasjenige Gitter bestimmt werden, das den Farbsaum eines refraktiven optischen Element mit einer refraktiven Brechkraft

$$S_{\text{ref},0}(\lambda_d) = \frac{S_{\text{Rezept}}}{\left(1 - \frac{1}{v_d} \cdot \frac{\lambda_d}{\lambda_F - \lambda_C}\right)}$$

kompensiert.

Wie bereits oben ausgeführt, kann das Berechnen des diffraktiven Gitters ein Optimieren des diffraktiven Gitters unter Berücksichtigung der Gebrauchsstellung des optischen Elements mit dem diffraktiven Gitter umfassen. Das Optimieren kann z.B. ein Minimieren einer der zuvor beschriebenen polychromatischen Zielfunktionen umfassen. In manchen Fällen ist es jedoch möglich, das diffraktive Gitter lediglich pauschal zu bestimmen bzw. zu berechnen. Insbesondere kann das diffraktive Gitter in Abhängigkeit der Gesamt- oder der refraktiven Wirkung des optischen Elements und/oder der Abbezahl des optischen Elements bestimmt bzw. berechnet werden.

Das obige Verfahren hat den Vorteil, dass mit vergleichsweise geringem Rechenaufwand eine optimale Korrektur des Refraktionsfehlers bei einer approximativen Korrektur des Farbsaums erzielt werden kann. Insbesondere kann der Refraktionsfehler bestmöglich in Gebrauchsstellung des optischen Elements (z.B. des Brillenglases) minimiert werden. Dagegen wird der Farbsaum nur approximativ minimiert, da die Flächenoptimierung (vorzugsweise in Gebrauchsstellung und mittels einer Wellenfrontdurchrechnung) der letzte durchgeführte Schritt ist, bei welchem alle anderen Größen (wie z.B. das zumindest eine diffraktive Gitter) bereits bekannt sind. In vielen Fällen kann das approximative Minimieren des Farbsaumfehlers in Kauf genommen werden. Ein weiterer Vorteil ist die Möglichkeit, einfachere Zielfunktionen, z.B. aus dem Stand der Technik bekannte Zielfunktionen, zu verwenden.

Vorzugsweise wird der zumindest eine Abbildungsfehler des optischen Elements mit dem zumindest einen diffraktiven Gitter mittels einer Wellenfrontdurchrechnung unter Berücksichtigung des diffraktiven Gitters berechnet.

Die Wellenfrontdurchrechnung erfolgt vorzugsweise in einer vorgegebenen Gebrauchsstellung des optischen Elements, welche durch durchschnittliche oder individuelle Parameter charakterisiert ist. Wenn das optische Element ein Brillenglas ist, umfassen die Parameter der Gebrauchsstellung den Fassungsscheibenwinkel, die Vorneigung, den Hornhautscheitelabstand, die Pupillendistanz und gegebenenfalls weitere Parameter. Die Wellenfrontdurchrechnung unter Berücksichtigung des diffraktiven Gitters wird nachfolgend im Detail beschrieben.

Das Verfahren zum Optimieren eines optischen Elements umfassend zumindest ein diffraktives Gitter kann ferner Erfassen von Daten bezüglich einer zu erreichenden Wirkung des optischen Elements und/oder Daten bezüglich einer individuellen oder durchschnittlichen Gebrauchsstellung des optischen Elements (z.B. des Brillenglases) umfassen. Die zu erreichende Wirkung kann eine sphärische und/oder astigmatische und/oder prismatische Wirkung umfassen. Im Fall eines Brillenglases können die Daten bezüglich einer zu erreichenden Wirkung des optischen Elements Rezeptdaten eines Brillenträgers oder, anders ausgedrückt, Rezeptdaten für das zu optimierenden Brillenglas sein. Die Daten bezüglich einer individuellen oder durchschnittlichen Gebrauchsstellung des Brillenglases können den Fassungsscheibenwinkel und/oder den Hornhautscheitelabstand und/oder die Vorneigung und/oder die Pupillendistanz und/oder andere Daten, welche die Gebrauchsstellung des Brillenglases charakterisieren, umfassen.

Vorzugsweise ist das optische Element ein Brillenglas.

Ein weitere Aspekt der Erfindung betrifft ein Computerprogrammerzeugnis, d.h. ein in der Patentanspruchskategorie einer Vorrichtung beanspruchtes Computerprogramm, sowie ein Speichermedium mit darauf gespeichertem Computerprogramm, wobei das Computerprogramm ausgelegt ist, wenn geladen und ausgeführt auf einem Computer, ein bevorzugtes beispielhaftes Verfahren zum Optimieren eines optischen Elements mit zumindest einem diffraktiven Gitter durchzuführen.

Des weiteren wird eine Vorrichtung zum Optimieren eines optischen Elements mit zumindest einem diffraktiven Gitter vorgeschlagen, wobei die Vorrichtung Optimierungsmittel umfasst, welche ausgelegt sind, ein Optimieren des optischen Elements nach einem bevorzugten beispielhaften Verfahren zum Optimieren eines optischen Elements durchzuführen. Die Optimierungsmittel können mittels geeignet konfigurierten bzw. programmierten Computern, spezialisierter Hardware und/oder Computernetze oder Computersysteme und so weiter implementiert werden.

Die Vorrichtung kann ferner Erfassungsmittel umfassen, welche ausgelegt sind, Daten bezüglich einer zu erreichenden Wirkung des optischen Elements und/oder Daten bezüglich einer individuellen oder durchschnittlichen Gebrauchsstellung des optischen Elements (z.B. des Brillenglases) zu erfassen.

Ein weiterer Aspekt der Erfindung betrifft ein Verfahren zum Herstellen eines optischen Elements, insbesondere eines Brillenglases, mit zumindest einem diffraktiven Gitter, wobei das Verfahren ein Optimieren des optischen Elements nach einem beispielhaften, erfindungsgemäßen Verfahren zum Optimieren eines optischen Elements umfasst.

Das Verfahren zum Herstellen eines optischen Elements kann ferner

Bereitstellen von Bearbeitungsdaten des optimierten optischen Elements; und
Fertigen des optischen Elements nach den bereitgestellten Bearbeitungsdaten umfassen.

Die Bearbeitungsdaten können Flächendaten der optischen Komponenten, welche das optische Element bilden sowie Daten des zumindest einen diffraktiven Gitters umfassen. Die Flächendaten können z.B. Flächendaten der Grenzflächen einer Linse, eines Brillenglases oder eines Linsensystems umfassen. Die Daten des zumindest eines diffraktiven Gitters können z.B. die Gitterperiode, das Gitterprofil, die Gittertopologie, etc. umfassen. Ferner können die Bearbeitungsdaten Daten bezüglich des Brechungsindex der optischen Komponenten, welche das optische Element bilden, umfassen. Die Bearbeitungsdaten können in numerischer Form oder in funktionaler Form vorliegen.

Verfahren zum Fertigen eines optischen Elements mit zumindest einem diffraktiven Gitter anhand von vorgegebenen Daten sind aus dem Stand der Technik bekannt. Insbesondere kann das Fertigen eine Auswahl eines Blanks mit zwei refraktiven Grenzflächen umfassen. Eine der Flächen des Blanks oder eines Rohlings kann in Abhängigkeit der bereitgestellten Bearbeitungsdaten fertig bearbeitet werden. Verfahren zum Herstellen von Flächen mit einer beliebigen Topographie (Freiformflächen) und zum Formen oder Ausbringen eines diffraktiven Gitters sind aus dem Stand der Technik bekannt.

Ein weiterer Aspekt der Erfindung betrifft eine Vorrichtung zum Herstellen eines optischen Elements, insbesondere eines Brillenglases mit zumindest einem diffraktiven Gitter, umfassend Optimierungsmittel, welche ausgelegt sind, ein Optimieren des optischen Elements nach einem beispielhaften erfindungsgemäßen Verfahren zum Optimieren eines optischen Elements durchzuführen. Die Optimierungsmittel wurden bereits in Zusammenhang mit der Vorrichtung zum Optimieren eines optischen Elements mit zumindest einem diffraktiven Gitter im Detail beschrieben.

Die Vorrichtung zum Herstellen eines optischen Elements, insbesondere eines Brillenglases, mit zumindest einem diffraktiven Gitter, kann ferner Bearbeitungsmittel (z.B. numerisch gesteuerte Maschinen) umfassen, welche ausgelegt sind, das optimierte optische Element zu fertigen. Ferner kann die Vorrichtung Speichermittel umfassen, welche ausgelegt sind, Daten (z.B. Bearbeitungsdaten) des optimierten optischen Elements zu speichern.

Bevorzugte Ausführungsformen der Erfindung werden nachfolgend unter Bezugnahme auf die Figuren beispielhaft beschrieben. Es zeigen

Fig. 1A,B    den Farblängsfehler (Fig. 1A) und den Farbquerfehler (Fig. 1B) eines Glases gemäß einem ersten Vergleichsbeispiel, welches nach einer monochromatischen Zielfunktion optimiert worden ist;

Fig. 2A,B    den Farblängsfehler (Fig. 2A) und den Farbquerfehler (Fig. 2B) von Gläsern, welche jeweils nach einer polychromatischen Zielfunktion eines ersten Typs (erstes Beispiel) und eines zweiten Typs 2 (zweites Beispiel) optimiert worden sind;

Fig. 3A,B    die Rezeptwirkung, die refraktive Wirkung, die diffraktive Wirkung und die Gesamtwirkung in der Glasmitte als Funktion der Wellenlänge des Glases gemäß dem ersten Vergleichsbeispiel (Fig. 3A) und der Gläser gemäß dem ersten und zweiten Beispiel (Fig. 3B);

Fig. 4A,B    den Farblängsfehler (Fig. 4A) und den Farbquerfehler (Fig. 4B) eines Glases gemäß einem zweiten Vergleichsbeispiel, welches nach einer monochromatischen Zielfunktion optimiert worden ist;

Fig. 5A,B    den Farblängsfehler (Fig. 5A) und den Farbquerfehler (Fig. 5B) eines Glases gemäß einem dritten Beispiel, welches nach einer polychromatischen Funktion eines ersten Typs optimiert worden ist;

Fig. 6A,B    den Farblängsfehler (Fig. 6A) und den Farbquerfehler (Fig. 6B) eines Glases gemäß einem vierten Beispiel, welches nacht einer polychromatischen Funktion eines zweiten Typs optimiert worden ist;

Fig. 7A-C    die Rezeptwirkung, die refraktive Wirkung, die diffraktive Wirkung und die Gesamtwirkung in der Glasmitte als Funktion der Wellenlänge des Glases gemäß dem zweiten Vergleichsbeispiel (Fig. 7A), des Glases gemäß dem dritten Beispiel (Fig. 7B) und des Glases gemäß dem vierten Beispiel (Fig. 7C);

Fig. 8A-C    den Refraktionsfehler bei der Wellenlänge $\lambda_C$, den Refraktionsfehler bei der Wellenlänge $\lambda_F$ und den Farblängsfehler bei dem Glas gemäß dem zweiten Vergleichsbeispiel (Fig. 8A), bei dem Glas gemäß dem dritten Beispiel (Fig. 8B) und bei dem Glas gemäß dem vierten Beispiel (Fig. 8C);

Fig. 9A-C    den Farbsaum eines Brillenglases für verschiedene Blickwinkel a) 0° b) 10° c) 20° d) 30°, wobei Fig. 9A eine unkorrigierte Abbildung durch ein monochromatisch optimiertes Brillenglas zeigt, Fig. 9B eine Abbildung durch ein farbsaumkorrigiertes Brillenglas, ohne eine asphärische Nachoptimierung der refraktiven Flächen zeigt und Fig. 9C eine Abbildung durch ein Brillenglas, welches mittels einer simultanen Farbsaumoptimierung und einer asphärischen Nachoptimierung optimiert worden ist zeigt;

Fig. 10A-C    eine exemplarische Farbsaumkorrektur eines unkorrigierten Einstärkenglases, wobei Fig. 10A den Farbsaum eines unkorrigierten Einstärkenglases mit einer Abbezahl von 58,5 zeigt; Fig. 10B den Farbsaum eines Einstärkenglases mit einer Abbezahl von 40,5 zeigt und Fig. 10C den Farbsaum eines farbsaumkorrigiertes Einstärkenglases mit einer effektiven Abbezahl von ungefähr 130 zeigt;

Fig.11A-D     eine exemplarische Farbsaumkorrektur eines progressiven Brillenglases, wobei Fig. 11A den Astigmatismus in Gebrauchsstellung des Brillenglases zeigt, Fig. 11B die diffraktive Phase bzw. die Form der Gitterlinien des diffraktiven Gitters zeigt, Fig. 11C den Farbsaum des unkorrigierten Brillenglases zeigt und Fig. 11D den Farbsaum des korrigierten Brillenglases zeigt;

Fig. 12     die Beugung einer ebenen Wellenfront beim Einfall auf eine Grenzfläche mit einer periodischen Struktur;

Fig. 13     die Winkelverteilung der Intensität bei einem Sägezahngitter, welches auf einer der Flächen eines Prismas aufgebracht ist;

Fig. 14     die Beugungseffizienz als eine Funktion der Wellenlänge.

Fig. 15     das Prinzip der Farbsaumkorrektur durch ein diffraktives Gitter;

Fig. 16     eine Schemazeichnung des Strahlverlaufs für eine Strahldurchrechnung und Wellenfrontdurchrechnung bei einem optischen System;

Fig. 17     eine Schemazeichnung des Strahlverlaufs für eine Strahldurchrechnung und Wellenfrontdurchrechnung bei einem Brillenglas;

Fig. 18     den Strahlverlauf im Fall einer ebenen Grenzfläche mit einem diffraktiven Gitter;

Fig. 18A     die gegenseitige Lage des Koordinatensystems $x$, $y$, $z$ der einfallenden Wellenfront bezüglich des Koordinatensystems der Grundfläche;

Fig. 19     die Gitterlinien eines einfach periodischen, diffraktiven Gitters auf einer ebenen Grenzfläche;

Fig. 20     die Gitterlinien eines diffraktiven Gitters auf einer ebenen Grenzfläche;

Fig. 21     die Gitterlinien eines diffraktiven Gitters auf einer gekrümmten Grenzfläche;

Fig. 22     ein Ablaufschema, welches den Übergang zwischen dem Vektorfeld $\mathbf{d}(\bar{x}^0,\bar{y}^0)$ und der Phasenfunktion $\psi^0(\bar{x}^0,\bar{y}^0)$ illustriert.

In den nachfolgenden Beispielen ist das optische Element beispielhaft ein Brillenglas. Das optische Element kann jedoch ein beliebiges abbildendes optisches System sein, wie z.B. eine Linse, ein Linsensystem, etc.. Beispiele mit einer Zielfunktion vom Typ 1, F1 fallen nicht in den Schutzbereich von Anspruch 1.

Zur Durchführung eines bevorzugten erfindungsgemäßen Optimierungsverfahrens gibt es verschiedene Verfahrensweisen.

**Iteratives Verfahren**

Bei diesem Verfahren werden zumindest eine der zur Refraktion beitragenden, refraktiven Flächen des Brillenglases und das zumindest eine diffraktive Gitter nach einander optimiert oder verändert.

In einem ersten Schritt wird eine monochromatische Optimierung zumindest einer der zur Refraktion beitragenden Flächen (nachfolgend kurz Glasflächen) eines vorgegebenen Brillenglases, welches kein diffraktives Gitter aufweist, durchgeführt. Insbesondere wird zumindest eine der Glasflächen so lange verändert bzw. optimiert, bis der Refraktionsfehler und/oder der astigmatische Fehler minimiert wird/werden. Die monochromatische Optimierung erfolgt derart, dass die refraktive Brechkraft in zumindest einem Bezugspunkt des Brillenglases den z.B. Rezeptwert $S_{\text{Rezept}}$ annimmt ($S_{\text{ref},0}(\lambda_d)=S_{\text{Rezept}}$). Der Rezeptwert ist der für einen Brillenträger z.B. durch Refraktionsbestimmung ermittelte Wert, welcher notwendig ist, eine Fehlsichtigkeit des Brillenträgers zu korrigieren. Der Bezugspunkt kann z.B. der Fernbezugspunkt, der Anpaß- bzw. Zentrierpunkt, die optische oder geometrische Mitte des Brillenglases oder ein anderer geeigneter Punkt auf dem Brillenglas sein. Die monochromatische Optimierung kann für eine beliebige, geeignete Wellenlänge durchgeführt werden, vorzugsweise wird die monochromatische Optimierung für die Wellenlänge $\lambda_d$ durchgeführt, welche ebenfalls in die Definition der Abbezahl eingeht. Vorzugsweise wird das Brillengas in Gebrauchsstellung optimiert. Verfahren zu monochromatischer Optimierung von Brillengläsern sind aus dem Stand der Technik (z.B. WO 2008/089999 A1) bekannt.

In einem dritten Schritt wird bei festgehaltenen Glasflächen ein diffraktives Gitter hinzugefügt. Das diffraktive Gitter wird bestimmt oder berechnet, um den Farbsaum des im vorangegangenen Schritt optimierten Brillenglases optimal zu korrigieren. Durch das Hinzufügen des diffraktiven Gitters wird jedoch ein Refraktionsfehler hinzugefügt.

In einem vierten Schritt kann bei festgehaltenem Gitter zumindest eine der zur Refraktion beitragenden Glasflächen solange nachoptimiert werden, bis der durch das Gitter eingeführte zusätzliche Refraktionsfehler wieder kompensiert ist. In einem nächsten Schritt wird dann das Gitter angepasst, um den durch die Flächenveränderung im vierten Schritt entstandenen Farbsaum wieder auszugleichen.

Da für gewöhnliche Abbezahlen die Brechkraft eines Gitters, das den Farbsaum eines Brillenglases kompensieren soll, in der Größenordnung von 5% bis 10% der refraktiven Brechkraft des Brillenglases, liegt, werden die Änderungen in dem iterativen Verfahren immer kleiner, so dass das Verfahren im Allgemeinen konvergiert und nach einem passend gewählten Schritt abgebrochen werden kann.

In diesem Verfahren nehmen sowohl der Farbsaum als auch der Refraktionsfehler ihr denkbares Minimum nur approximativ an, weil das Verfahren nach endlich vielen Schritten abgebrochen wird.

**Vorhalten von refraktiver Brechkraft**

Wie bereits oben ausgeführt, weist ein diffraktives Gitter ebenfalls eine refraktive Brechkraft auf. Die tatsächliche Brechkraft eines Brillenglases, welches ein diffraktives Gitter aufweist, kann als die Summe der Brechkraft des durch rein refraktive Flächen zustande kommenden Brillenglases und der refraktiven Brechkraft des diffraktiven Gitters dargestellt werden. Insbesondere ist die tatsächliche Brechkraft $S_0(\lambda_d)$ eines farbsaumkompensierten Glases mit einer refraktiven Brechkraft $S_{ref,0}(\lambda_d)$ durch

$$S_0(\lambda_d) = S_{\text{ref},0}(\lambda_d)\left(1 - \frac{1}{v_d} \cdot \frac{\lambda_d}{\lambda_F - \lambda_C}\right), \qquad (1)$$

gegeben, wobei $v_d=(n_d-1)/(n_F-n_C)$ die (alternative) Abbezahl des optischen Materials des Brillenglases ist und $n_d$, $n_F$ und $n_C$ die Brechzahlen des optischen Materials bei den Wellenlängen $\lambda_d$, $\lambda_F$ und $\lambda_C$ sind. Vorzugsweise ist $\lambda_d$ = 587,562 nm, $\lambda_F$ = 486,134 nm und $\lambda_C$ =656,281 nm.

Anstatt in einem iterativen Verfahren zumindest eine der Glasflächen so zu optimieren, dass die refraktive Brechkraft des Brillenglases in zumindest einem Bezugspunkt den Rezeptwert $S_{\text{Rezept}}$ annimmt ($S_{ref,0}(\lambda_d)=S_{\text{Rezept}}$), kann die Veränderung der Brechkraft durch ein vorgegebenes Gitter vorgehalten werden. Dies bedeutet, dass das Optimieren zumindest einer der Glasflächen in einem ersten Schritt von vornherein so gestaltet wird, dass die spätere gesamte Brechkraft des Brillenglases mit dem Gitter in zumindest einem Bezugspunkt den Rezeptwert annimmt, so dass $S_0(\lambda_d)=S_{\text{Rezept}}$ erfüllt ist. Die refraktive, monochromatische Optimierung der Glasflächen findet folglich so statt, dass für die Brechkraft des Brillenglass im vorgegebenen Bezugspunkt die Bedingung

$$S_{\text{ref},0}(\lambda_d) = \frac{S_{\text{Rezept}}}{\left(1 - \frac{1}{v_d} \cdot \frac{\lambda_d}{\lambda_F - \lambda_C}\right)} \qquad (2)$$

erfüllt ist.

In einem zweiten Schritt wird dann ein diffraktives Gitter so berechnet und eingeführt, dass es den Farbsaum des Brillenglases aus dem ersten Schritt kompensiert. Der dabei hinzukommende Refraktionsfehler des Brillenglases ist dann genau so groß, dass die gesamte Brechkraft des Glases $S_0(\lambda_d)=S_{\text{Rezept}}$ ist.

Das Verfahren hat den Vorteil, dass der Farbsaum immer (im Rahmen der Möglichkeiten des Gitters) optimal kompensiert wird. Dagegen wird der Refraktionsfehler nur approximativ korrigiert, da nach Einführung des Gitters die Glasflächen des Brillenglases nicht noch einmal in Gebrauchsstellung nachoptimiert werden können.

**Vorhalten von diffraktiver Brechkraft**

Anstatt im zuvor beschriebenen Verfahren mit Vorhalten der refraktiven Brechkraft das benötigte Gitter nachträglich zu bestimmen, kann das Gitter von vornherein, also gleich in einem ersten Schritt, als dasjenige Gitter bestimmt werden, das den Farbsaum eines Glases mit refraktiver Brechkraft $S_{ref,0}(\lambda_d)$ kompensiert (siehe Gleichung (2)). In einem zweiten Schritt wird dann der Refraktionsfehler des Brillenglases optimiert, wobei bei festgehaltenem Gitter ein Optimieren zumindest einer der refraktiven Glasflächen durchgeführt wird. Vorzugsweise erfolgt das Optimieren zumindest einer der refraktiven Glasflächen unter Berücksichtigung der Wellenfrontdurchrechnung bei Anwesenheit eines diffraktiven Gitters.

Das Verfahren gemäß dem dritten Beispiel hat den Vorteil, dass der Refraktionsfehler bestmöglich in Gebrauchsstellung minimiert wird, da die Wellenfront-Optimierung in Gebrauchsstellung der letzte durchgeführte Schritt ist. Bei diesem Schritt sind alle anderen Größen, wie z.B. das Gitter, bereits bekannt. Ein Nachteil könnte sein, dass der Farbsaum unter Umständen nicht bestmöglich kompensiert wird, weil das Gitter vorab pauschal und nicht in Abhängigkeit von den aktuellen Flächen bestimmt wird.

**Simultanes Optimieren von Flächen und Gitter**

Zum simultanen Optimieren der refraktiven Anteile und der diffraktiven Anteile eines Glases wird gemäß einem bevorzugten Ausführungsbeispiel vorgeschlagen, sowohl die refraktiven Abbildungsfehler als auch die chromatischen Abbildungsfehler bzw. den Farbsaum durch Minimierung einer Zielfunktion zu minimieren.

Aus WO 2008/089999 A1 ist bekannt, eine monochromatische Optimierung eines Brillenglases durch ein Minimieren der folgenden monochromatischen Zielfunktion durchzuführen:

$$F_{\text{monochrom}} = \sum_i g_Z(i)(Z_\Delta(i) - Z_{\Delta,\text{Soll}}(i))^2 + g_S(i)(S_\Delta(i) - S_{\Delta,\text{Soll}}(i))^2, \qquad (3)$$

wobei $S_\Delta$ und $Z_\Delta$ den Refraktionsfehler des sphärischen Äquivalents bzw. den Betrag der astigmatischen Abweichung $S_{\Delta,\text{Soll}}$, $Z_{\Delta,\text{Soll}}$ die entsprechenden Sollwerte und $g_Z(i)$ und $g_S(i)$ die entsprechenden Gewichtungen bezeichnen.

Alle Abbildungseigenschaften werden dabei bei einer vorgegebenen Wellenlänge ausgewertet. Die Summe über den Index $i$ läuft über verschiedene Bewertungsstellen des Brillenglases. Freiheitsgrad bei der Minimierung der Zielfunktiön in Gleichung (3) ist üblicherweise eine Pfeilhöhe zumindest einer refraktiven Fläche, welche durch eine Funktion $z(x,y)$ beschrieben wird. Der Freiheitsgrad bei der Optimierung kann z.B. die Pfeilhöhe $z_1(x,y)$ der Vorderfläche oder die Pfeilhöhe $z_2(x,y)$ der Rückfläche eines Brillenglases sein. Es ist auch möglich, dass sowohl die Pfeilhöhe der Vorder- als auch der Rückfläche Freiheitsgrade bei der Optimierung sind, wie es z.B. bei einem doppelprogressiven Brillenglas der Fall sein kann. Die monochromatische Zielfunktion kann eine monokulare oder eine binokulare Zielfunktion sein. Eine monochromatische binokulare Zielfunktion ist z.B. in WO 2008 089999 A1 oder im Artikel von W. Becken, et al. "Brillengläser im Sport: Optimierung der Abbildungseigenschaften unter physiologischen Aspekten", Z. Med. Phys., 17 (2007), Seiten 56 - 66 beschrieben. Auf diese Druckschriften wird hinsichtlich der verwendeten Fachterminologie und insbesondere der in Gleichung (3) verwendeten Symbole, sowie bezüglich des Zusammenhangs der Sphäre, Zylinder, Achse (SZA-Werte) mit Wellenfronteigenschaften verwiesen. Die entsprechenden Ausführungen stellen insoweit einen integralen Offenbarungsbestandteil der vorlegenden Anmeldung dar.

Gemäß einem Ausführungsbeispiel der Erfindung wird vorgeschlagen, die monochromatische Zielfunktion dahingehend zu erweitern, die Wellenlängenabhängigkeit des Glases mit einem Gitter zu berücksichtigen. Insbesondere werden folgenden drei Typen von Zielfunktionen vorgeschlagen:

$$\text{Typ1)} \quad F_1 = \sum_\lambda F_{\text{monochrom}}(\lambda) \qquad (4)$$

$$\text{Typ2)} \quad F_2 = F_{\text{monochrom}}(\lambda_0) + \sum_i g_{\text{FLF}}(i) \times f\left(\mathbf{S}_{\text{SK}}(i,\lambda_2) - \mathbf{S}_{\text{SK}}(i,\lambda_1)\right)^2 \qquad (5)$$

$$\text{Typ3)} \quad F_3 = F_{\text{monochrom}}(\lambda_0) + \sum_i g_{\text{FQF}}(i) \times g\left(\Delta\varphi_{\text{SK}}(i,\lambda_2,\lambda_1)\right)^2. \qquad (6)$$

Ein Beispiel einer Zielfunktion des Typs 1 ist die Zielfunktion

$$F_1 = \sum_{i,\lambda} g_Z(i,\lambda)(Z_\Delta(i,\lambda) - Z_{\Delta,\text{Soll}}(i,\lambda))^2 + g_S(i,\lambda)(S_\Delta(i,\lambda) - S_{\Delta,\text{Soll}}(i,\lambda))^2. \qquad (4a)$$

Ein Beispiel einer Zielfunktion des Typs 2 ist die Zielfunktion

$$F_2 = \sum_i \left( g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 \right. \\ \left. + g_{\text{FLF}}(i) \times f\left(\mathbf{S}_{\text{SK}}(i,\lambda_2) - \mathbf{S}_{\text{SK}}(i,\lambda_1)\right)^2 \right) \qquad (5a)$$

Ein Beispiel einer Zielfunktion des Typs 3 ist die Zielfunktion

$$F_3 = \sum_i \left\{ \begin{matrix} g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 \\ + g_{\text{FQF}}(i) \times g(\Delta\varphi_{\text{SK}}(i,\lambda_2,\lambda_1))^2 \end{matrix} \right\} \tag{6a}$$

In den obigen Gleichungen (4a) bis (6a) bezeichnen:

$Z_\Delta(i,\lambda)$ den Ist-Wert des astigmatischen Fehlers bzw. des Betrags der astigmatischen Abweichung an der $i$-ten Bewertungsstelle des Brillenglases für die Wellenlänge $\lambda$;

$Z_{\Delta,\text{Soll}}(i,\lambda)$ den Sollwert des astigmatischen Fehlers bzw. des Betrags der astigmatischen Abweichung an der $i$-ten Bewertungsstelle des Brillenglases für die Wellenlänge $\lambda$;

$S_\Delta(i,\lambda)$ den Ist-Wert des Refraktionsfehlers bzw. der Abweichung des sphärischen Äquivalents an der $i$-ten Bewertungsstelle des Brillenglases für die Wellenlänge $\lambda$; $S_{\Delta,\text{Soll}}(i,\lambda)$ den Sollwert des Refraktionsfehlers bzw. der Abweichung des sphärischen Äquivalents an der $i$-ten Bewertungsstelle des Brillenglases für die Wellenlänge $\lambda$;

$g_Z(i,\lambda)$ die Gewichtung des astigmatischen Fehlers/des Betrags der astigmatischen Abweichung an der $i$-ten Bewertungsstelle des Brillenglases für die Wellenlängen $\lambda$; $g_S(i,\lambda)$ die Gewichtung des Refraktionsfehlers bzw. der Abweichung des sphärischen Äquivalents an der $i$-ten Bewertungsstelle des Brillenglases für die Wellenlänge $\lambda$;

$g_{\text{FLF}}(i)$ die Gewichtung des Farblängsfehlers an der $i$-ten Bewertungsstelle des Brillenglases;

$g_{\text{FQF}}(i)$ die Gewichtung des Farbquerfehlers an der $i$-ten Bewertungsstelle des Brillenglases;

$S_{\text{SK}}(i,\lambda_1)$ die Vergenzmatrix der Wellenfront an der Scheitelpunktkugel für Wellenlänge $\lambda_1$ und für die $i$-te Bewertungsstelle;

$S_{\text{SK}}(i,\lambda_2)$ die Vergenzmatrix der Wellenfront an der Scheitelpunktkugel für Wellenlänge $\lambda_2$ und für die $i$-te Bewertungsstelle; und

$\Delta\varphi_{\text{SK}}(i,\lambda_2,\lambda_1)$ den Winkel zwischen den objektseitigen Hauptstrahlen für zwei unterschiedlichen Wellenlängen $\lambda_1$ und $\lambda_2$.

Bei der Zielfunktion vom Typ 1 wird die gewöhnliche monochromatische Zielfunktion als Funktion der Wellenlänge aufgefasst, d.h. $F_{\text{monochrom}} = F_{\text{monochrom}}(\lambda)$. Diese Zielfunktion wird anschließend für mehrere Wellenlängen wiederholt ausgewertet und über einen vorzugebenden Satz von Wellenlängen summiert. Der Satz von Wellenlängen umfasst zumindest zwei Wellenlängen, z.B. $\lambda_1 = \lambda_F = 486{,}134$ $nm$ und $\lambda_2 = \lambda_C = 656{,}281$ $nm$. Die Summe läuft dementsprechend außer über den Index $i$ ebenfalls über die Wellenlänge $\lambda$.

Die Zielfunktion vom Typ 2 kommt insbesondere dadurch zustande, dass eine gewöhnliche monochromatische Zielfunktion bei einer Arbeitswellenlänge $\lambda_0$ ausgewertet wird und zu dieser Zielfunktion noch ein Term hinzugenommen wird, welcher von der Differenz $S_{\text{SK}}(i,\lambda_2) - S_{\text{SK}}(i,\lambda_1)$ der Vergenzmatrizen $S_{\text{SK}}$ für zwei verschiedene Wellenlängen $\lambda_1,\lambda_2$ abhängt. Die Art $f(S_{\text{SK}}(i,\lambda_2) - S_{\text{SK}}(i,\lambda_1))$ der Abhängigkeit kann dabei verschieden gewählt werden. Insbesondere kann $f(S_{\text{SK}}(i,\lambda_2) - S_{\text{SK}}(i,\lambda_1))$ für den dioptrischen Abstand zwischen den Vergenzmatrizen stehen oder für die Differenz der sphärischen Äquivalente. In Letzterem Fall ist der Term $f(S_{\text{SK}}(i,\lambda_2) - S_{\text{SK}}(i,\lambda_1))$ ein Strafterm für den Farblängsfehler.

Die Zielfunktion vom Typ 3 kommt analog zur Zielfunktion vom Typ 2 zustande, mit dem Unterschied, dass der Zusatzterm $g(\Delta\varphi_{\text{SK}}(i,\lambda_2,\lambda_1))$ ein Strafterm für den Farbquerfehler ist, der durch den Winkel $\Delta\varphi_{\text{SK}}(i,\lambda_2,\lambda_1)$ zwischen den objektseitigen Hauptstrahlen an der $i$-ten Bewertungsstelle gegeben ist. Dabei ist $g$ eine geeignete Funktion, z.B. die Identität, eine trigonometrische Funktion oder eine andere Funktion.

Unabhängig von der Art der Zielfunktion (Zielfunktion des Typs 1, des Typs 2 oder des Typs 3) ist eine Funktion, welche das diffraktive Gitter beschreibt, ein Freiheitsgrad der Optimierung. Zusätzlich ist die Pfeilhöhe $z(x,y)$ zumindest einer der Flächen des Brillenglases ein Freiheitsgrad der Optimierung. Die Pfeilhöhe kann parametrisch beschrieben werden. Eine geeignete Darstellung der Pfeilhöhe ist z.B. eine polynomiale Darstellung oder eine Darstellung mittels Splines.

Vorzugsweise ist die Funktion, welche das diffraktive Gitter beschreibt, eine Phasenfunktion $\Psi(x,y)$. Die Phasenfunktion $\Psi(x,y)$ stellt die optische Pfadlängendifferenz (Optical Path Difference oder OPD), welche durch das diffraktive Gitter eingeführt wird, als Funktion der Koordinaten $x$, $y$ eines geeignet gewählten Koordinatensystems dar. Vorzugsweise wird die Phasenfunktion $\Psi(\overline{x},\overline{y})$ in einem lokalen Koordinatensystem $(\overline{x},\overline{y},\overline{z})$ angegeben, wobei $\overline{x},\overline{y}$ die Koordinaten tangential zur brechenden Fläche sind. Die Beschreibung eines diffraktiven Gitters durch eine Phasenfunktion wird nachfolgend im Detail erläutert.

Die Phasenfunktion kann vorzugsweise parametrisch beschrieben werden, wobei die Anzahl der Parameter gleich der Anzahl der Freiheitsgrade der Phasenfunktion ist. Eine solche Beschreibung ist insbesondere für den Fall geeignet, dass die Phasenfunktion bestimmte Symmetrien aufweisen soll. Im allgemeinen Fall kann die Phasenfunktion wie eine Freiformfläche durch Splines beschrieben werden, wobei dann bei der Optimierung gegebenenfalls bis zu mehreren Tausend Spline-Koeffizienten zur Variation zur Verfügung stehen.

Die Berechnung der Gebrauchseigenschaften in Gleichungen (4) bis (6) erfolgt bei Anwesenheit des diffraktiven Gitters, beschrieben durch die aktuelle Phasenfunktion $\Psi(x,y)$. Der bei den Durchrechnungen relevante Brechungsindex ist dabei durch seinen Wert $n(\lambda)$ bei der jeweiligen Wellenlänge $\lambda$ gegeben. Das ermittelte Gitter kann im Allgemeinen asymmetrisch sein, da die Funktion $\Psi(x,y)$ frei optimiert wird und a priori keinerlei Symmetrien enthält bzw. enthalten muss.

Anstatt nur eine oder zwei refraktive Flächen kann in den Gleichungen (4) bis (6) ebenfalls eine höhere Anzahl an refraktiven Flächen berücksichtigt werden. Mehrere refraktive Flächen kommen z.B. bei Compundsystemen vor. In den Gleichungen (4) bis (6) kann ebenfalls eine höhere Anzahl (zwei oder mehr) von Gittern berücksichtigt werden. Die mehrere Gitter können z.B. jeweils auf den Grenzflächen eines Compoundsystems angeordnet sein.

Die Zielfunktion kann ebenfalls Terme, welche von den Abbildungsfehlern höherer Ordnung, wie z.B. Koma, Trefoil, sphärische Aberration, abhängen, umfassen. Weiterhin kann statt der monokularen Zielfunktion wie in Gleichung (3) auch eine binokulare Zielfunktion eingesetzt werden. Eine monochromatische binokulare Zielfunktion ist z.B. in WO 2008/089999 A1 oder in der Publikation von W. Becken, et al. "Brillengläser im Sport: Optimierung der Abbildungseigenschaften unter physiologischen Aspekten", Z. Med. Phys., 17 (2007), Seiten 56 - 66 beschrieben.

Durch die Einführung einer Zielfunktion im Verfahren zum Optimieren eines Brillenglases mit zumindest einem diffraktiven Gitter kann weitgehend das Problem gelöst werden, sowohl die Refraktionsanforderung an ein Brillenglas als auch die Reduktion chromatischer Fehler möglichst gut zu erreichen. Insbesondere kann mittels der Zielfunktion ein Kompromiss zwischen allen Anforderungen für eine Vielzahl von Blickrichtungen gesucht werden. Die Zielfunktion kann auf gewöhnlichen monochromatischen Zielfunktionen nach dem Stand der Technik basieren; wobei gemäß einem bevorzugten Beispiel vorgeschlagen wird, Zusatzterme einzuführen, welche direkt die Farbquerfehler (Typ 3) und/oder direkt die Farblängsfehler (Typ 2) enthalten. Alternativ können die Farbfehler indirekt korrigiert werden, indem eine monochromatische Zielfunktion für mehrere verschiedene Wellenlängen ausgewertet wird und über alle Wellenlängen summiert wird (Typ 1). Um die vermehrten Anforderungen erfüllen zu können, wird vorgeschlagen, zusätzliche Freiheitsgrade (Parameter) einzuführen und zu variieren, nämlich die Freiheitsgrade mindestens eines diffraktiven Gitters, das vorzugsweise über eine modifizierte Wellenfrontdurchrechnung in die Zielfunktion eingeht.

Wie gut die Qualität des zuvor beschriebenen iterativen Verfahrens, des Verfahren mit Vorhalten von refraktiver Brechkraft und des Verfahren mit Vorhalten von diffraktiver Brechkraft an die Qualität des Verfahrens mit simultaner Optimierung der Glasflächen und des Gitters mittels einer Zielfunktion herankommen können, hängt vom Durchführen der Optimierungsschritte ab. Wird z.B. beim iterativen Verfahren ebenso eine Zielfunktion des Typs 1 verwendet, dann kann die Qualität des iterativen Verfahrens mit einer sequentiellen Optimierung der Glasflächen und des Gitters je nach Länge der Iteration bis an die Qualität des Verfahrens mit einer simultanen Optimierung der Glasflächen und des Gitters mittels einer Zielfunktion herankommen. Ein Vorteil des iterativen Verfahren mit einer sequentiellen Optimierung der Glasflächen und des Gitters kann jedoch darin bestehen, dass ebenfalls einfachere Zielfunktionen gemäß dem Stand der Technik verwendet werden können, solange als letzten Schritt die Gebrauchsstellungs-Optimierung der Fläche durchführt wird. Wenn ferner eine vollständige Kompensation des Farbsaums nicht angestrebt wird, sondern ein gewisser Rest-Farbsaumfehler zugelassen wird, dann genügt in der Regel jeweils eine relativ pauschale Wahl des Gitters, so dass dieses nicht durch eine Optimierung oder eine Zielfunktion bestimmt werden muss. Dieselbe Aussage gilt auch für das Verfahren mit Vorhalten mit diffraktiver Brechkraft, da auch hierbei der letzte Schritt wieder die Gebrauchsstellungs-Optimierung der Fläche ist.

Im Gegensatz dazu ist das Verfahren mit Vorhalten von refraktiver Brechkraft vorwiegend für die Optimierung von Einstärkengläsern mit Gittern geeignet, da sich durch das nachträglich hinzugefügte Gitter der Strahlengang so verändert, dass das Glas in Gebrauchsstellung im Allgemeinen nicht mehr vollständig die Sehanforderungen erfüllt. Bei Einstärkengläsern können jedoch vorhandene Symmetrien so ausgenutzt werden, dass das Vorhalten der richtigen Brechkraft in der optischen Mitte auch in der Peripherie noch genügend Qualität erwarten lässt.

**Ausführungsbeispiele**

Die folgenden Ausführungsbeispiele beziehen sich auf rotationssymmetrische Einstärkengläser mit einem diffraktiven Gitter, wobei der Einfachheit halber der Astigmatismus außer Acht gelassen wird, und lediglich eindimensionale Probleme betrachtet werden. Die Einstärkengläser haben eine Rezeptwirkung von $S_{Rezept}$=+6,0$dpt$ und sind aus einem optischen Material mit Brechungsindex $n_d$=1,597 mit einer Abbezahl von $v_d$=42,0. Alle Brillengläser gemäß den Beispielen der Erfindung werden nach dem Verfahren zur simultanen Optimierung von Glasflächen und Gitter mit einer Zielfunktion optimiert. Die konkret bei dem Ausführungsbeispiel 1 und dem Ausführungsbeispiel 2 verwendeten Optimierungsverfahren unterscheiden sich jedoch in einigen Optimierungsvorgaben.

Ausführungsbeispiel 1 ist, anders als die meisten Optimierungsprobleme, kein überbestimmtes Problem und daher exakt lösbar. Es führt zu einem im Rahmen der Modellannahmen vollständig korrigierten Glas. Ausführungsbeispiel 2 ist so gewählt, dass auch im Rahmen der eindimensionalen Behandlung ohne Astigmatismus ein Kompromiss über mehrere Blickrichtungen gesucht werden muss, welcher von der Art der Zielfunktion abhängt. Diese Situation entspricht dem allgemeinen Fall eines Brillenglases mit einem diffraktiven Gitter. So bewirkt z.B. der Satz von Minkwitz bei Gleitsichtgläsern schon ohne Berücksichtigung von Farbfehlern, dass das Optimierungsproblem überbestimmt ist und deshalb ein Kompromiss gesucht werden muss.

In beiden Ausführungsbeispielen zeigt sich, dass das eingeführte Gitter die Farbfehler des Glases stark verbessern und gleichzeitig die Refraktionsfehler des Glases mitoptimieren kann. Selbstverständlich ist das Verfahren nicht auf eindimensionale Probleme beschränkt, sondern ist ebenfalls auf die Durchrechnung eines Brillenglases in Gebrauchsstellung anwendbar. In diesem allgemeineren Fall wird bei der Wellenfrontdurchrechnung ein schiefwinkligen Strahleinfall berücksichtigt.

Nachfolgend wird die Optimierung eines rotationssymmetrischen Brillenglases mittels einer Zielfunktion näher erläutert. Wie bereits oben ausgeführt wird der Astigmatismus des Brillenglases der Einfachheit halber vernachlässigt.

Eine beispielhafte Zielfunktion vom Typ 1 ist in diesem Fall eine Zielfunktion der Form:

$$F_1 = \sum_{i,\lambda} g_S(i,\lambda)(S_\Delta(i,\lambda) - S_{\Delta,\text{Soll}}(i,\lambda))^2. \tag{4b}$$

Eine beispielhafte Zielfunktion des Typs 2 ist die Zielfunktion der Form:

$$F_2 = \sum_i g_S(i)(S_\Delta(i,\lambda_0) - S_{\Delta,\text{Soll}}(i,\lambda_0))^2 + g_{\text{FLF}}(i) \times f\left(S_{SK}(i,\lambda_2) - S_{SK}(i,\lambda_1)\right)^2 \dots \tag{5b}$$

Eine beispielhafte Zielfunktion des Typs 3 ist die Zielfunktion der Form:

$$F_3 = \sum_i g_S(i)(S_\Delta(i,\lambda_0) - S_{\Delta,\text{Soll}}(i,\lambda_0)^2 + g_{\text{FQF}}(i) \times g\left(\Delta\varphi_{SK}(i,\lambda_2,\lambda_1)\right)^2. \tag{6b}$$

Die Berechnung der in den Gleichungen (4b) bis (6b) eingehenden Werte kann mittels Wellenfrontdurchrechnung erfolgen. Anders als die Wellenfrontdurchrechnung in dem oben genannten Artikel von W. Becken, et, al. "Brillengläser im Sport: Optimierung der Abbildungseigenschaften unter physiologischen Aspekten", Z. Med. Phys., 17(2007), Seiten 56 - 66, wird die im Artikel beschriebene, verallgemeinerte Coddington-Gleichung für den rein refraktiven Fall noch durch einen Zusatzterm für die diffraktive Phase $\Psi$ erweitert. Die Erweiterung der Coddington-Gleichung für ein optisches Element mit zumindest einem Gitter wird nachfolgend im Detail beschrieben.

Im Fall eines senkrechtem Lichteinfalls an der einzelnen Grenzfläche i(i = 1,2) für das dann eindimensionale Problem gilt für die Wellenfrontdurchrechnung

$$n'_i W'^{(2)}_{\text{Out},i}(0) - n_i W^{(2)}_{\text{In},i}(0) = (n'_i - n_i)\overline{S}^{(2)}_i(0) - \Psi^{(2)}_i(0). \tag{7}$$

In Gleichung (7) bezeichnen:

$n'_i$ den Brechungsindex des Materials nach der $i$-ten Fläche;
$n_i$ den Brechungsindex des Materials vor der $i$-ten Fläche;
$\overline{S}_i$ die Brechkraft der $i$-ten Fläche;

$W'^{(2)}_{\text{Out},i}(0)$ die Krümmung der ausfallenden Wellenfront an der $i$-ten Fläche;

$W^{(2)}_{\text{In},i}(0)$ die Krümmung der einfallenden Wellenfront an der $i$-ten Fläche;

$\Psi_i^{(2)}(0)$ die Phase des $i$-ten diffraktiven Gitters.

Wie aus Gleichung (7) ersichtlich, ist der refraktive Anteil der Brechkraft durch $(n'_i - n_i)\overline{S}^{(2)}_i(0)$ und der diffraktive Anteil zur Brechkraft durch $-\Psi_i^{(2)}(0)$ gegeben. Im vorliegenden Beispiel werden zwei refraktive Flächen $\overline{S}_1$ und $\overline{S}_2$ und zwei diffraktiven Gitter $\Psi_1$ und $\Psi_2$, welche ein Brillenglas mit Brechungsindex $n$ in Luft begrenzen, betrachtet. In diesem Fall ist $n_1 = 1$, $n'_1 = n$, $n_2 = n$, $n'_2 = 1$.

Die Änderung der Wellenfront bei der Propagation durch das Brillenglas und vom Brillenglas, zur Scheitelpunktkugel kann vernachlässigt werden. Wenn die einfallende Wellenfront eben ist (d.h. $W_{In,1}^{(2)}(0) = 0$) kann folglich die Krümmung $W'^{(2)}_{Out,2}(0)$ der ausfallenden Wellenfront direkt mit der Brechkraft des Glases gleichgesetzt werden. Für den refraktiven und den diffraktiven Beitrag zur Brechkraft gilt dementsprechend:

$$S(\bar{x},\lambda) = S_{ref}(\bar{x},\lambda) + S_{diff}(\bar{x},\lambda), \tag{8}$$

wobei

$$
\begin{aligned}
S_{ref}(\bar{x},\lambda) &= (n(\lambda)-1)\bar{S}^{(2)}(\bar{x}) \\
&= (n(\lambda)-1)\left(\bar{S}_1^{(2)}(\bar{x}) + \bar{S}_2^{(2)}(\bar{x})\right) \\
S_{diff}(\bar{x},\lambda) &= -\Psi^{(2)}(\bar{x},\lambda) \\
&= -\left(\Psi_1^{(2)}(\bar{x},\lambda) + \Psi_2^{(2)}(\bar{x},\lambda)\right)
\end{aligned}
\tag{9}
$$

Wenn angenommen wird, dass $n(\lambda)$ linear von der Wellenlänge abhängt, gilt

$$
\begin{aligned}
n(\lambda)-1 &= (n_0-1) + \frac{\partial n}{\partial \lambda}(\lambda - \lambda_0) \\
&= (n_0-1) + \frac{n_C - n_F}{\lambda_C - \lambda_F}(\lambda - \lambda_0) \\
&= (n_0-1)\left(1 + \frac{n_C - n_F}{n_0-1}\left(\frac{\lambda - \lambda_0}{\lambda_C - \lambda_F}\right)\right)
\end{aligned}
\tag{10}
$$

In der obigen Gleichung ist $\lambda_F = 486,1nm$ und $\lambda_C = 656,3nm$. Die Wellenläge $\lambda_0$ im Ausdruck $n_0 = n(\lambda_0)$ ist eine geeignet gewählte Wellenlänge.

Bevorzugt ist $\lambda_0 = \lambda_d = 587,1nm$ diejenige Wellenlänge, bei der die Abbezahl $v_d = -\dfrac{n_d - 1}{n_C - n_F}$ definiert ist, so dass

$$n(\lambda) - 1 = (n_d - 1)\left(1 - \frac{1}{v_d}\left(\frac{\lambda - \lambda_d}{\lambda_C - \lambda_F}\right)\right) \tag{10a}$$

ist.

Die Phase $\Psi$ ist proportional zur Wellenlänge und lautet in einer Raumdimension:

$$\Psi(\bar{x};\lambda,m) = m\lambda \cdot \psi(\bar{x}). \tag{11}$$

Die Gesamtbrechkraft kann durch die gesuchten Funktionen $\bar{S}^{(2)}(\bar{x})$ der Flächenkrümmung und $\psi^{(2)}(\bar{x})$ der Phasenkrümmung ausgedrückt werden:

$$S(\bar{x},\lambda) = (n_d - 1)\left(1 - \frac{1}{v_d}\left(\frac{\lambda - \lambda_d}{\lambda_C - \lambda_F}\right)\right)\bar{S}^{(2)}(\bar{x}) - m\lambda \cdot \psi^{(2)}(\bar{x}). \tag{12}$$

In den folgenden Beispielen wird die Zielfunktion vom Typ 1 für 2 Wellenlängen ausgewertet. Für die Gewichtsfunktionen gilt $g_S(i,\lambda)=1$, $g_{\mathrm{FLF}}(i)=1$ und $g_{\mathrm{FQF}}(i)=1$. Die Sollvorgaben für den Refraktionsfehler werden auf $S_{\Delta,\mathrm{Soll}}(i,\lambda)=0$ gesetzt. Die Größe $S_{\Delta}(i,\lambda)$ ist dabei die Differenz aus der vorhandenen Brechkraft $S(\bar{x},\lambda)$ und der verlangten Rezeptwirkung des Glases $S_{\mathrm{Rezept}}$.

Unter diesen Bedingungen weisen die Zielfunktionen unterschiedlicher Typen jeweils die folgenden Formen auf:

$$\mathrm{Typ\,1)} \quad F_1 = \sum_i \left(S(\bar{x}_i,\lambda_1) - S_{\mathrm{Rezept}}\right)^2 + \sum_i \left(S(\bar{x}_i,\lambda_2) - S_{\mathrm{Rezept}}\right)^2$$

$$\mathrm{Typ\,2)} \quad F_2 = \sum_i \left(S(\bar{x}_i,\lambda_0) - S_{\mathrm{Rezept}}\right)^2 + f\left(\mathbf{S}_{\mathrm{SK}}(i,\lambda_2) - \mathbf{S}_{\mathrm{SK}}(i,\lambda_1)\right)^2 \tag{13}$$

$$\mathrm{Typ\,3)} \quad F_3 = \sum_i \left(S(\bar{x}_i,\lambda_0) - S_{\mathrm{Rezept}}\right)^2 + g\left(\Delta\varphi_{\mathrm{SK}}(i,\lambda_2,\lambda_1)\right)^2.$$

Ausführungsbeispiel 1

Das Brillenglas gemäß dem ersten Vergleichsbeispiel ist nach einem herkömmlichen Verfahren mittels Minimierung einer monochromatischen Zielfunktion optimiert worden. Die Einstärkengläser gemäß dem Beispiel 1 oder dem Beispiel 2 werden jeweils nach einem der oben dargestellten Verfahren mittels Zielfunktionen des Typs 1 (Beispiel 1) oder des Typs 2 (Beispiel 2) optimiert. Die für die polychromatische Optimierung ausschlaggebenden Wellenlängen sind $\lambda_1=\lambda_F=486{,}1$ nm und $\lambda_2=\lambda_C=656{,}3$ nm. Die nachfolgende **Tabelle 1** fasst die Vorgaben für die Optimierungsverfahren zusammen.

Tabelle 1:

|  | **Zielfunktion** | **Freiheitsgrade** | **Bewertungsstellen** |
|---|---|---|---|
| **Vergleichsbeispiel 1** | monochromatisch | 1 (refraktiv) | 1 ($\bar{x}_i = 0$) |
| **Beispiel 1** | Typ 1 | 1 (refraktiv) + 1 | 1 ($\bar{x}_i = 0$) |
|  |  | (diffraktiv) = 2 |  |
| **Beispiel 2** | Typ 2 | 1 (refraktiv) + 1 (diffraktiv) = 2 | 1 ($\bar{x}_i = 0$) |

Die zu optimierenden Glasflächen und die eingesetzten Gitter können durch eine Parameterdarstellung oder durch Splines oder eine andere geeignete Form beschrieben werden. Bei den Brillengläsern des Vergleichsbeispiels 1 sowie des ersten und des zweiten Beispiels wird die brechende, zur optimierende Fläche durch den einen Freiheitsgrad der Krümmung $k$ wie folgt beschrieben

$$\bar{S}(\bar{x}) = \frac{k}{2}\bar{x}^2. \tag{14a}$$

Die Gitterphase wird durch die Funktion

$$\psi(\bar{x}) = \frac{\alpha_2}{2}\bar{x}^2 \tag{14b}$$

beschrieben, wobei $\alpha_2$ ein variabler Parameter ist.

Vergleichsbeispiel 1

Die monochromatische Zielfunktion aus Gleichung (3) lautet unter den Annahmen des vorliegenden Beispiels

$$F_{\text{monochrom}} = (a_d u + c)^2 , \qquad (15)$$

wobei $a_d = (n_d - 1)$ und $c = -S_{\text{Rezept}}$ ist. Hier spielt $u = \overline{S}^{(2)}(0) = k$ die Rolle des einzigen Freiheitsgrades, da das Gitter bei der monochromatischen Optimierung nicht vorkommt.

Eine Optimierung des Brillenglases gemäß dem Vergleichsbeispiel 1 anhand der monochromatischen Zielfunktion aus Gleichung (3) aufgrund einer Wellenfrontdurchrechnung ohne diffraktiven Zusatzterm liefert das Ergebnis $u = -c/a_d$, wie z.B. durch Differenzieren der Gleichung (15) nach $u$ und anschließendes Nullsetzen ersichtlich.

Dies ist gleichbedeutend mit

$$\overline{S}^{(2)}(0) = \frac{S_{\text{Rezept}}}{n_d - 1} \approx 10{,}05 dpt . \qquad (16)$$

Die Brechkraft eines solchen Glases ist nach Einsetzen von Gleichung (16) in Gleichungen (10), (11), (12):

$$S(\overline{x}, \lambda) = (n(\lambda) - 1)\overline{S}^{(2)}(\overline{x}) = \left(1 - \frac{1}{v_d}\left(\frac{\lambda - \lambda_d}{\lambda_C - \lambda_F}\right)\right) S_{\text{Rezept}} . \qquad (17)$$

In diesem Fall ist $S(x,\lambda)$ des Brillenglases gleich $S_{\text{Rezept}}$ nur für $\lambda = \lambda_d$. Für andere Wellenlängen weist das Brillenglas gemäß dem Vergleichsbeispiel 1 einen Refraktionsfehler auf.

Der Farblängsfehler (FLF) eines Brillenglases gemäß dem Vergleichsbeispiel 1, welches durch

$$FLF(\overline{x}) := S(\overline{x}, \lambda_1) - S(\overline{x}, \lambda_2) \qquad (18)$$

definiert ist, verschwindet daher nicht, sondern ist durch

$$FLF(\overline{x}) = \frac{S_{\text{Rezept}}}{v_d} = 0{,}14 dpt \qquad (18a)$$

gegeben.

Der Farbquerfehler (FQF) eines Brillenglases kann unter den Voraussetzungen des vorliegenden Beispiels, insbesondere unter Vernachlässigung der Korrekturen für schiefen Strahleinfall, aus dem Farblängsfehler (FLF) durch Integration der Prentice'schen Regel ermittelt werden. In der differentiellen Form lautet die Prentice'schen Regel:

$$S(r) = \frac{\partial \text{Pr}}{\partial r} \quad \Rightarrow \quad \text{Pr}(r) = \text{Pr}(0) + \int_0^r S(r')dr' , \qquad (19)$$

wobei Pr die prismatische Wirkung ist. Da Pr(0 =0 gilt für den Farbquerfehler:

$$FQF(\overline{x}) := \left|\text{Pr}(\overline{x}, \lambda_1) - \text{Pr}(\overline{x}, \lambda_2)\right| = \left|\int_0^r FLF(r')dr'\right| \qquad (20)$$

Im vorliegenden Fall gilt

$$FQF(\bar{x}) = \left| \int_0^r \frac{S_{\text{Rezept}}}{v_d} dr \right| = 0{,}14 dpt \times |r| \ . \tag{20a}$$

Erstes Beispiel

Bei dem ersten Beispiel wird das Brillenglas polychromatisch unter Minimierung einer Zielfunktion vom Typ 1 optimiert. Eine beispielhafte Zielfunktion ist eine Zielfunktion der Form

$$F_1 = (a_1 u + b_1 v + c)^2 + (a_2 u + b_2 v + c)^2 \ , \tag{21}$$

wobei

$$a_i = (n_d - 1)\left(1 - \frac{1}{v_d}\left(\frac{\lambda_i - \lambda_d}{\lambda_C - \lambda_F}\right)\right), \quad i = 1,2;$$

$$b_i = -m\lambda_i, \quad i = 1,2;$$

$$c = -S_{\text{Rezept}}; \tag{22}$$

$$u = \bar{S}^{(2)}(0) = k;$$

$$v = \psi^{(2)}(0) = \alpha_2;$$

sind.

Direktes Ableiten von F nach u und v und Nullsetzen führt zu den Lösungen

$$u = \frac{(b_2 - b_1)c}{a_2 b_1 - a_1 b_2} \quad v = \frac{(a_2 - a_1)c}{a_1 b_2 - a_2 b_1} \ . \tag{23}$$

Dies ist gleichbedeutend mit

$$\bar{S}^{(2)}(0) = \frac{S_{\text{Rezept}}}{n_d - 1} \times \left(1 + \frac{1}{v_d}\frac{\lambda_d}{\lambda_C - \lambda_F}\right)^{-1}$$

$$\psi^{(2)}(0) = \frac{1}{m} \times \frac{S_{\text{Rezept}}}{-v_d(\lambda_C - \lambda_F)} \times \left(1 + \frac{1}{v_d}\frac{\lambda_d}{\lambda_C - \lambda_F}\right)^{-1} \ . \tag{24}$$

Für das erste Beispiel ergeben sich folgende numerische Werte:

$$\bar{S}^{(2)}(0) \approx 9{,}29 dpt$$

$$\psi^{(2)}(0) \approx 7{,}76 \times 10^5 m^{-2} \ . \tag{24a}$$

Die Brechkraft eines solchen Glases ist nach Einsetzen von Gleichung (22) in den Gleichungen (10), (11), (12):

$$S(\overline{x}, \lambda) = S_{\text{ref}}(\overline{x}, \lambda) + S_{\text{diff}}(\overline{x}, \lambda)$$

$$= (n(\lambda) - 1)\overline{S}^{(2)}(\overline{x}) - \Psi^{(2)}(\overline{x}, \lambda)$$

$$= (n_d - 1)\left(1 - \frac{1}{v_d}\left(\frac{\lambda - \lambda_d}{\lambda_C - \lambda_F}\right)\right)\frac{S_{\text{Rezept}}}{n_d - 1} \times \left(1 + \frac{1}{v_d}\frac{\lambda_d}{\lambda_C - \lambda_F}\right)^{-1} \qquad (25)$$

$$- m\lambda\frac{1}{m} \times \frac{S_{\text{Rezept}}}{-v_d(\lambda_C - \lambda_F)} \times \left(1 + \frac{1}{v_d}\frac{\lambda_d}{\lambda_C - \lambda_F}\right)^{-1}$$

$$= S_{\text{Rezept}}.$$

Der Farblängsfehler (FLF) eines solchen Glases ist

$$FLF(\overline{x}) = S_{\text{Rezept}} - S_{\text{Rezept}} = 0. \qquad (26)$$

Entsprechend gilt für den Farbquerlehler

$$FLF(\overline{x}) = 0. \qquad (27)$$

Die Minimierung der Zielfunktion vom Typ 1 liefert folglich ein Glas, das die Rezeptvorgabe exakt erfüllt und das vollständig hinsichtlich des Farblängsfehlers und des Farbquerfehlers korrigiert ist.

Zweites Beispiel

Bei dem zweiten Beispiel wird das Brillenglas polychromatisch, unter Minimierung einer Zielfunktion vom Typ 2 (vgl. Gleichung (5b)) optimiert. Eine beispielhafte Zielfunktion ist eine Zielfunktion der Form

$$F = (a_d u + b_d v + c)^2 + (a_2 u + b_2 v - a_1 u - b_1 v)^2, \qquad (28)$$

wobei

$$a_d = (n_d - 1);$$

$$a_i = (n_d - 1)\left(1 - \frac{1}{v_d}\left(\frac{\lambda_i - \lambda_d}{\lambda_C - \lambda_F}\right)\right), \quad i = 1, 2;$$

$$b_i = -m\lambda_i, \quad i = 0, 1, 2; \qquad (29)$$

$$c = -S_{\text{Rezept}};$$

$$u = \overline{S}^{(2)}(0);$$

$$v = \psi^{(2)}(0).$$

Direktes Ableiten von F nach u und v und Nullsetzen führt auf die Lösungen

$$u = \frac{(b_2 - b_1)c}{(a_2 - a_1)b_0 - (b_2 - b_1)a_0} \qquad v = \frac{(a_2 - a_1)c}{(b_2 - b_1)a_0 - (a_2 - a_1)b_0} \qquad , \qquad (30)$$

was gleichbedeutend ist mit

$$\overline{S}^{(2)}(0) = \frac{S_{\text{Rezept}}}{n_d - 1} \times \left(1 + \frac{1}{v_d}\frac{\lambda_d}{\lambda_C - \lambda_F}\right)^{-1}$$

$$\psi^{(2)}(0) = \frac{1}{m} \times \frac{S_{\text{Rezept}}}{-v_d(\lambda_C - \lambda_F)} \times \left(1 + \frac{1}{v_d}\frac{\lambda_d}{\lambda_C - \lambda_F}\right)^{-1} \qquad (31)$$

Somit ist die Lösung nach Gleichung (31) identisch mit der Lösung nach Gleichung (23), welche nach der Minimierung der Zielfunktion vom Typ 1 erhalten wird.

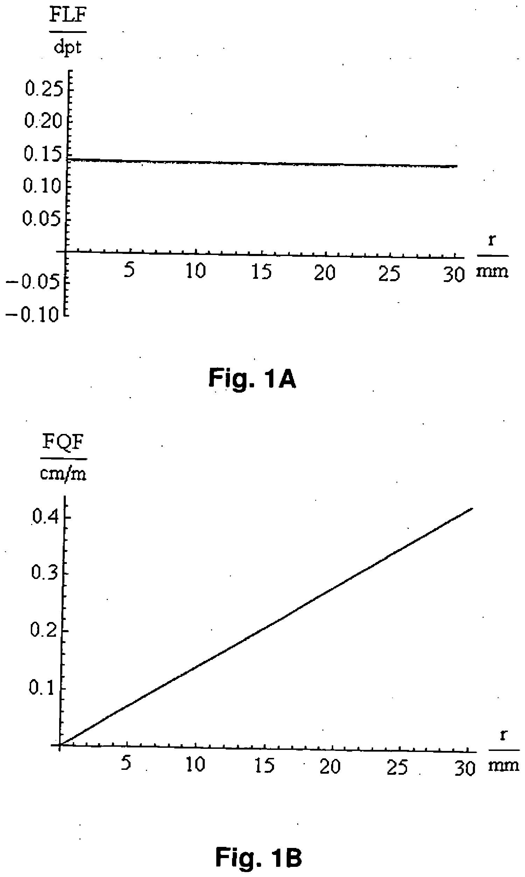

**Fig. 1** zeigt den Farblängsfehler (Fig. 1A) und den Farbquerfehler (Fig. 1B) des Beispielglases gemäß dem Vergleichsbeispiel 1. Wie aus Fig. 1 ersichtlich, tritt ein deutlicher Farblängsfehler (FLF) von 0,14dpt auf, so dass der Farbquerfehler (FQF) außerhalb eines Radius von $r \approx 8mm$ über der in der Physiologie üblichen Wahrnehmungsschwelle für den Farbsaum von 0,12 cm/m liegt.

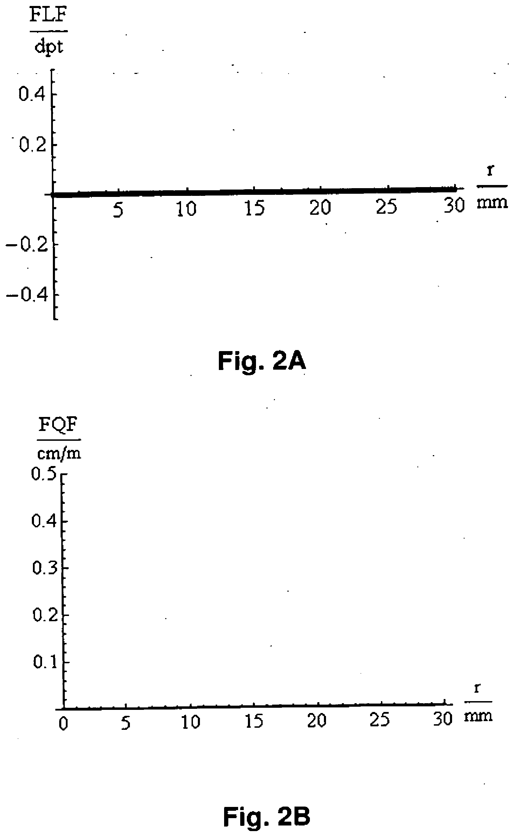

**Fig. 2** zeigt den Farblängsfehler (Fig. 2A) und den Farbquerfehler (Fig. 2B) des Beispielglases, welches nach einer Zielfunktion vom Typ 1 (Beispiel 1) oder vom Typ 2 (Beispiel 2) optimiert worden ist. Im Gegensatz zu dem Vergleichsbeispiel 1 ist durch eine Optimierung nach einer Zielfunktion vom Typ 1 oder vom Typ 2 möglich, den Farblängsfehler (FLF) und den Farbquerfehler FQF über das ganze Glas auf Null zu bringen.

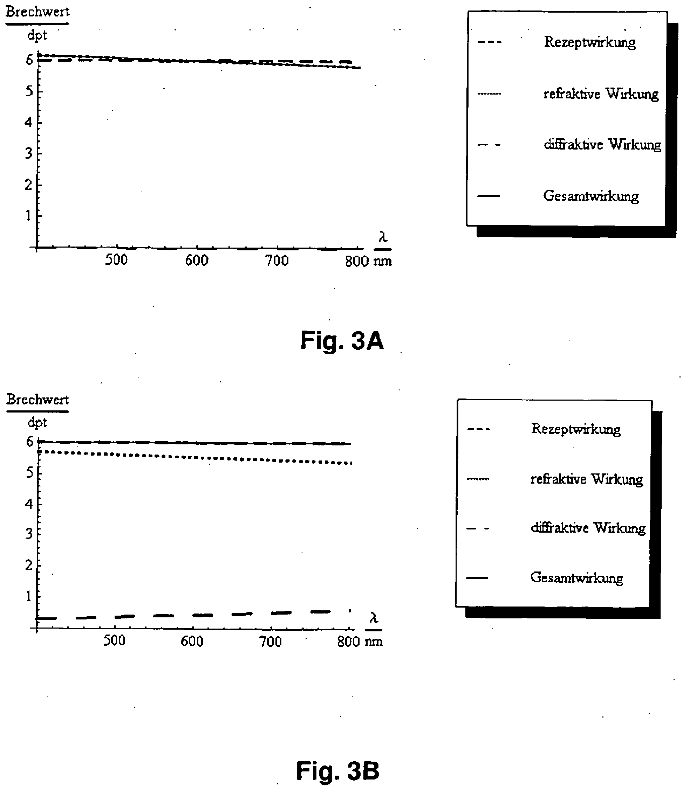

**Fig. 3A** zeigt die Rezeptwirkung, die refraktive Wirkung, die diffraktive Wirkung und die Gesamtwirkung in der Glasmitte als Funktion der Wellenlänge für das Brillenglas gemäß dem Vergleichsbeispiel 1, welches nach der monochromatischen Zielfunktion optimiert worden ist. **Fig. 3B** zeigt die Rezeptwirkung, die refraktive Wirkung, die diffraktive Wirkung und die Gesamtwirkung in der Glasmitte als Funktion der Wellenlänge für das Brillenglas, welches nach einer Zielfunktion vom Typ 1 (Beispiel 1) oder vom Typ 2 (Beispiel 2) optimiert worden ist.

Der Refraktionsfehler des Glases nach dem Vergleichsbeispiel 1 ist in Fig. 3A durch die leicht abfallende durchgezogene Kurve für die Gesamtwirkung gezeigt. Er ist ausschließlich durch den refraktiven Anteil (kurz gestrichelt) gegeben, der aufgrund der Dispersion für große Wellenlängen abfällt. Im Gegensatz dazu entfallen bei dem Beispiel 1 und dem Beispiel 2 nur etwas mehr als 90% der Gesamtwirkung auf den refraktiven Anteil (Fig. 3B). Hinzu kommt ein diffraktiver Anteil (lang gestrichelt), welcher mit steigender Wellenlänge leicht ansteigt und dadurch das abfallende Verhalten des refraktiven Anteils kompensiert. Das Ergebnis ist ein refraktionsrichtiges Glas für alle Wellenlängen.

**Ausführungsbeispiel 2**

Ein zweites Vergleichsbeispiel betrifft ein Brillenglas, welches nach einem Verfahren gemäß dem Stand der Technik mittels Minimierung einer monochromatischen Zielfunktion optimiert worden ist. Die Einstärkengläser gemäß dem Beispiel 3 oder dem Beispiel 4 werden jeweils nach einem der oben dargestellten Verfahren mittels Zielfunktionen des Typs 1 (Beispiel 3) oder des Typs 2 (Beispiel 4) optimiert. Wie bei dem Ausführungsbeispiel 1 sind auch im Ausführungsbeispiel 2 die für die polychromatische Optimierung ausschlaggebenden Wellenlängen $\lambda_1 = \lambda_F = 486,134nm$ und $\lambda_2 = \lambda_C = 656,281nm$. Die nachfolgende **Tabelle 2** fasst die Vorgaben für die Optimierung zusammen.

Tabelle 2

|  | Zielfunktion | Freiheitsgrade | Bewertungssteilen |
|---|---|---|---|
| **Vergleichsbeispiel 2** | monochromatisch | 1 (refraktiv) | 11 |
| **Beispiel 3** | Typ 1 | 1 (refraktiv) + 3 (diffraktiv) = 4 | 11 |
| **Beispiel 4** | Typ 2 | 1 (refraktiv) + 3 (diffraktiv) = 4 | 11 |

Die brechende, zu optimierende Glasfläche wird in diesem Ausführungsbeispiel durch eine exakte Sphäre, welche durch den einen Freiheitsgrad der Krümmung $k$ beschrieben wird, vorgegeben:

$$\overline{S}(\overline{x}) = \frac{1}{k} - \sqrt{\frac{1}{k^2} - \overline{x}^2} \; . \tag{32}$$

Die Gitterphase wird durch die Funktion

$$\psi(\overline{x}) = \frac{\alpha_2}{2}\overline{x}^2 + \frac{\alpha_3}{3!}\overline{x}^3 + \frac{\alpha_4}{4!}\overline{x}^4 \tag{33}$$

mit den drei Parametern $\alpha_2, \alpha_3, \alpha_4$ als Freiheitsgrade vorgegeben.

Für die Bewertungsstellen gilt

$$\overline{x}_i = -30mm + (i-1)\times 6mm \, , \; i = 1,2,...x \, . \tag{34}$$

Die 11 Bewertungsstellen sind folglich die Bewertungsstellen $\overline{x}_1 = -30mm$, $\overline{x}_2 = -24mm$, ..., $x_{11} = +30mm$.

Zweites Vergleichsbeispiel

Für die Optimierung nach dem zweiten Vergleichsbeispiel wird eine monochromatische Zielfunktion nach Gleichung (3) verwendet. Unter den Annahmen von Ausführungsbeispiel 2, weist die Zielfunktion die Form

$$F_{\mathrm{monochrom}} = \sum_{i=1}^{11}\left(a_d u_i + c\right)^2 \tag{35}$$

auf, wobei $u_i = S^{(2)}(x_i)$.

Eine Minimumsuche von Gleichung (35) nach dem Freiheitsgrad $k$, kann beispielsweise durch Differenzieren und Nullsetzen, oder durch ein numerisches Verfahren zur Minimumsuche erfolgen. Ein geeignetes numerisches Verfahren zur Minimumsuche ist z.B. die Methode der konjugierten Gradienten, die Methode durch Hauptachsenbestimmung, die Methode nach Levenberg-Marquardt, ein Newton'sches Verfahren oder ein Quasi-Newton-Verfahren.

Als Ergebnis dieser Minimumbestimmung wird für den Parameter $k$ der Wert

$$k \approx 9,49dpt \tag{36}$$

ermittelt.

Dieser Wert ist etwas geringer als der Wert, welcher bei einer der monochromatischen Optimierungen mit nur einer einzigen Bewertungsstelle gemäß dem Vergleichsbeispiel 1 ermittelt wurde (siehe Gleichung (16)).

Drittes Beispiel

Im Vergleich zu dem zweiten Vergleichsbeispiel ist die in dem dritten Beispiel verwendete Zielfunktion vom Typ 1 der Form

$$F_1 = \sum_{i=1}^{11}\left(a_1 u_i + b_1 v_i + c\right)^2 + \left(a_2 u_i + b_2 v_i + c\right)^2 \, , \tag{37}$$

wobei $u_i = S^{(2)}(x_i)$, $v_i = \psi^{(2)}(x_i)$.

Eine Minimumsuche von Gleichung (37) nach den Freiheitsgraden $k$, $\alpha_2, \alpha_3, \alpha_4$ führt zu den folgenden Ergebnissen:

$$k \approx 8,846 dpt;$$
$$\alpha_2 \approx 1,24 \times 10^6 m^{-2};$$
$$\alpha_3 \approx 4,04 \times 10^{-9} m^{-3}; \tag{38}$$
$$\alpha_4 \approx -2,33 \times 10^9 m^{-4}.$$

Dies liefert insbesondere:

$$\overline{S}^{(2)}(0) \approx 8,846 dpt$$
$$\psi^{(2)}(0) = 1,24 \times 10^6 m^{-2} \tag{38a}$$

und

$$\overline{S}^{(2)}(30mm) \approx 9,86 dpt$$
$$\psi^{(2)}(30mm) = 1,91 \times 10^5 m^{-2}. \tag{38b}$$

Bei einem Vergleich der Gleichung (24a) mit den Gleichungen (38a) und (38b) kann festgestellt werden, dass die Gleichung (24a), welche auf eine Optimierung mit lediglich einer Bewertungsstelle basiert, im Wesentlichen Durchschnittswerte von Gleichungen (38a) und (38b), welche jeweils auf eine Optimierung mit 11 Bewertungsstellen basieren, liefert.

Viertes Beispiel

Die bei der Optimierung des Brillenglases nach dem vierten Beispiel verwendete Zielfunktion ist der Form

$$F_1 = \sum_{i=1}^{11} \left(a_d u_i + b_d v_i + c\right)^2 + \left(a_2 u_i + b_2 v_i - a_1 u_i - b_1 v_i\right)^2. \tag{39}$$

Eine Minimumsuche von Gleichung (39) nach den Freiheitsgraden $k, \alpha_2, \alpha_3, \alpha_4$ führt zu den folgenden Ergebnissen:

$$k \approx 8,847 dpt;$$
$$\alpha_2 \approx 1,19 \times 10^6 m^{-2};$$
$$\alpha_3 \approx 2,34 \times 10^{-9} m^{-3}; \tag{40}$$
$$\alpha_4 \approx -2,12 \times 10^9 m^{-4}.$$

Dies liefert insbesondere:

$$\overline{S}^{(2)}(0) \approx 8,846 dpt$$
$$\psi^{(2)}(0) = 1,19 \times 10^6 m^{-2} \tag{40a}$$

und

$$\overline{S}^{(2)}(30mm) \approx 9,87 dpt$$

$$\psi^{(2)}(30mm) = 2,42 \times 10^5 \, m^{-2}. \tag{40b}$$

Die obigen Zahlenwerte sind vergleichbar, jedoch leicht abweichend von den entsprechenden Zahlenwerten, welche mittels einer Minimumsuche der Zielfunktion vom Typ 1 erhalten werden.

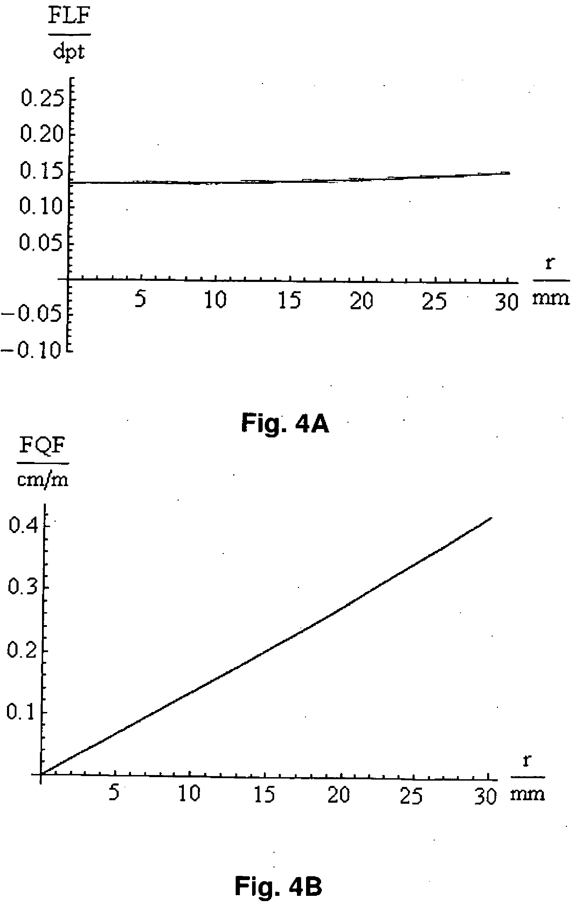

Die Ergebnisse der Brillenglasoptimierung jeweils nach der Zielfunktion vom Typ 1 (drittes Beispiel) und vom Typ 2 (viertes Beispiel) sind im Vergleich zu der Optimierung nach der monochromatischen Zielfunktion, (zweites Vergleichsbeispiel) in Figuren 4 bis 8 dargestellt.

In **Fig. 4** sind der Farblängsfehler (Fig. 4A) und der Farbquerfehler (Fig. 4B) des Brillenglases gemäß dem zweiten Beispiel als Funktion der radialen Koordinate dargestellt. Ähnlich wie beim ersten Vergleichsbeispiel (siehe Fig. 1A und Fig. 1B) mit nur einer Bewertungsstelle, liegt auch hier der Farblängsfehler über das ganze Glas über 0,12 dpt. Im Unterschied zu dem ersten Vergleichsbeispiel steigt er nach außen jedoch leicht an. Der Farbquerfehler weist praktisch einen ähnlichen Verlauf auf wie in Fig. 1B.

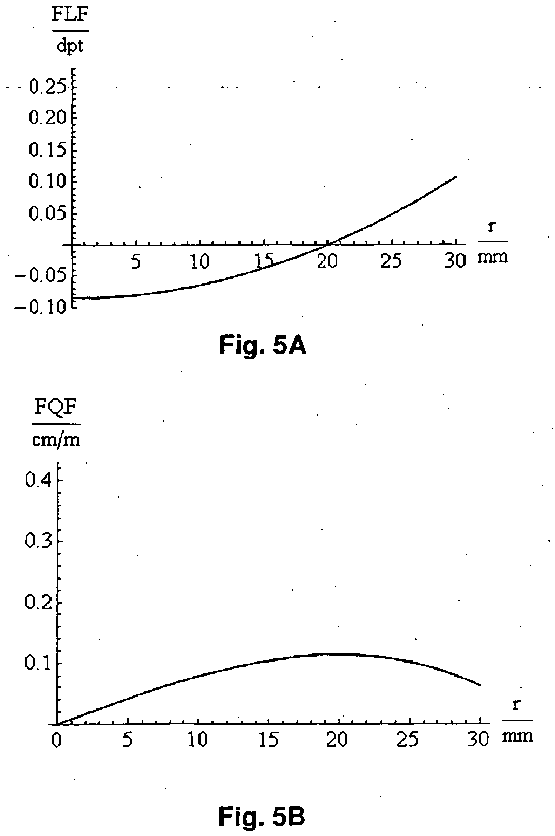

**Fig. 5** zeigt den Farblängsfehler (Fig. 5A) und Farbquerfehler (Fig. 5B) eines Beispielglases, welches gemäß dem dritten Beispiel nach einer Zielfunktion vom Typ 1 optimiert worden ist. Die Optimierung einer Zielfunktion vom Typ 1 führt zu einem Brillenglas, dessen Farblängsfehler im Betrag überall unter 0,1 dpt liegt (Fig. 5A). Der entsprechende Farbquerfehler liegt überall im Glas unter der Wahrnehmungsschwelle von 0,12cm/m (Fig. 5B).

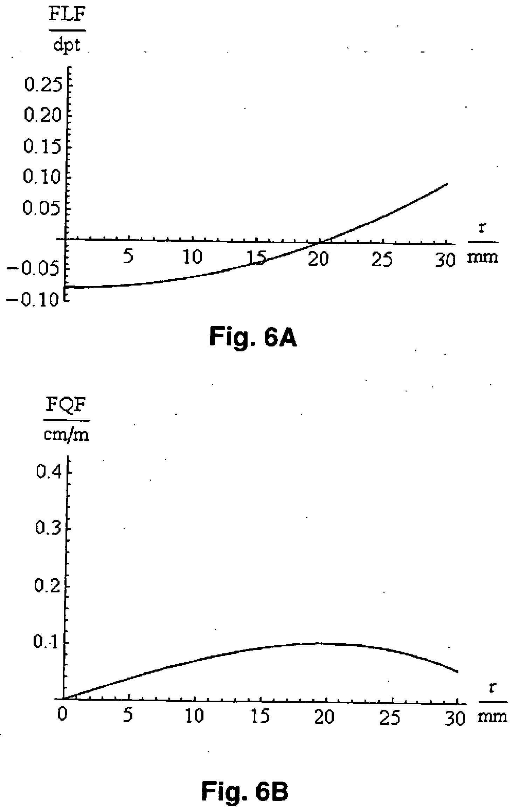

**Fig. 6** zeigt den Farblängsfehler (Fig. 6A) und Farbquerfehler (Fig. 6B) eines Beispielglases, welches gemäß dem vierten Beispiel nach einer Zielfunktion vom Typ 2 optimiert worden ist. Wird wie im vierten Beispiel eine Zielfunktion, vom Typ 2 optimiert, so sind die Resultate numerisch leicht unterschiedlich von denjenigen bei einer Zielfunktion vom Typ 1. Qualitativ ist jedoch die Verbesserung gegenüber dem Stand der Technik (siehe Vergleichsbeispiel 2) sehr ähnlich.

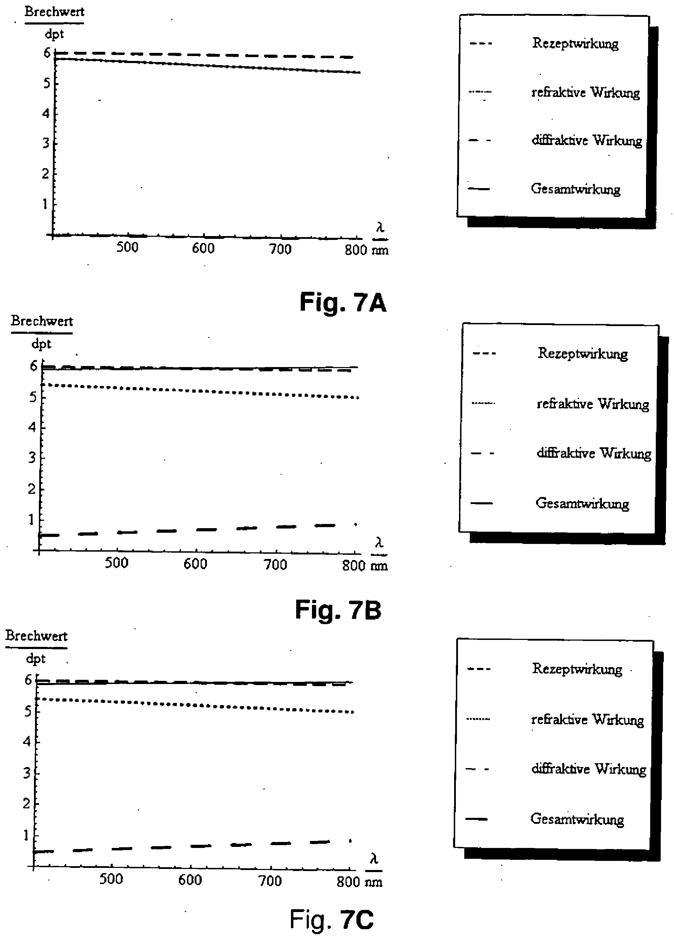

In **Fig. 7A-C** sind analog zu Fig. 3A-B die Wellenlängenabhängigkeiten verschiedener Größen (die Rezeptwirkung, die refraktive Wirkung, die diffraktive Wirkung und die Gesamtwirkung in der Glasmitte) aufgetragen. **Fig. 7A** zeigt die Verläufe für die monochromatische Optimierung nach dem zweiten Vergleichsbeispiel, **Fig. 7B** die Ergebnisse für eine Optimierung nach dem dritten Beispiel unter Verwendung einer Zielfunktion vom Typ 1 und **Fig. 7C** die Ergebnisse für eine Optimierung nach dem vierten Beispiel unter Verwendung einer Zielfunktion vom Typ 2. Wie aus den Figuren 7A-C ersichtlich, sind gegenüber Ausführungsbeispiel 1 keine auffälligen Änderungen durch die Hinzunahme von Bewertungsstellen sichtbar. Ebenfalls bestehen zwischen den Optimierungen nach Typ 1 und Typ 2 lediglich marginale Unterschiede.

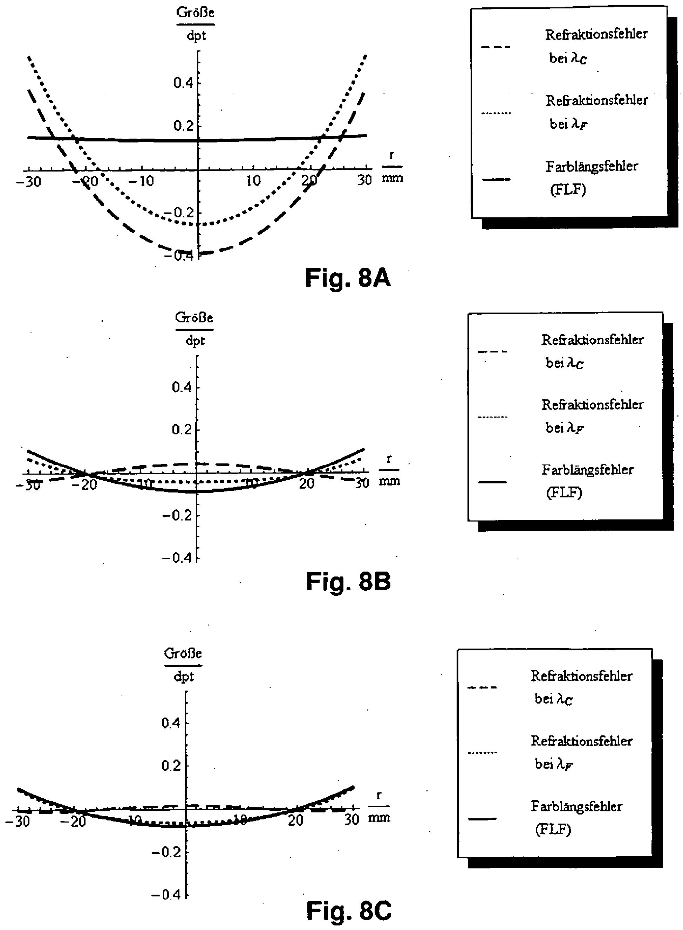

Im Gegensatz dazu sind in **Fig. 8A-C** die Refraktionsfehler bei verschiedenen Wellenlängen und der Farblängsfehler auf feinerer Skala gegen die radiale Koordinate aufgetragen. Insbesondere zeigt **Fig. 8A** den Refraktionsfehler bei der Wellenlänge $\lambda_C$, den Refraktionsfehler bei der Wellenlänge $\lambda_F$ und den Farblängsfehler eines Glases gemäß dem Vergleichsbeispiel 2, welches nach der oben beschriebenen monochromatischen Zielfunktion, optimiert worden ist. **Fig. 8B** zeigt den Refraktionsfehler bei der Wellenlänge $\lambda_C$, den Refraktionsfehler bei der Wellenlänge $\lambda_F$ und den Farblängsfehler eines Glases gemäß dem dritten Beispiel, welches nach einer polychromatischen Zielfunktion vom Typ 1 optimiert worden ist. **Fig. 8C** zeigt den Refraktionsfehler bei der Wellenlänge $\lambda_C$, den Refraktionsfehler bei der Wellenlänge $\lambda_F$ und den Farblängsfehler eines Glases gemäß dem vierten Beispiel, welches nach einer polychromatischen Zielfunktion vom Typ 2 optimiert worden ist.

Wie aus Fig. 8A ersichtlich, weist das nach einer monochromatischen Optimierung optimierte Brillenglas zunächst einen großen Hub der Refraktionsfehler bei beiden Wellenlängen auf. Dieser ist allerdings im Wesentlichen ein Merkmal des gewählten Flächenansatzes und ist durch die Auswahl eines flexibleren Flächenansatzes weitgehend vermeidbar. Im Gegensatz dazu ist der konstant hohe Farblängsfehler in Fig. 8A ein zwangsläufiges Merkmal des monochromatischen Optimierungsverfahrens nach dem Stand der Technik, bei welchem der Farbsaum nicht korrigiert wird. Durch die Hinzunahme eines diffraktiven Gitters und die Verwendung eines beispielhaften Verfahrens gemäß der Erfindung kann der Farblängsfehler stark verbessert werden (Fig. 8B). Die Optimierung mittels einer Zielfunktion vom Typ 1 führt zu einer deutlichen Reduktion des Farblängsfehlers verbunden mit einer simultanen deutlichen Reduktion der Refraktionsfehler. Eine Optimierung mittels einer Zielfunktion vom Typ 2 führt zu ähnlich starken Verbesserungen, jedoch zu einer im Einzelnen anderen Verteilung der Fehler als Funktion der Koordinate (Fig. 8C).

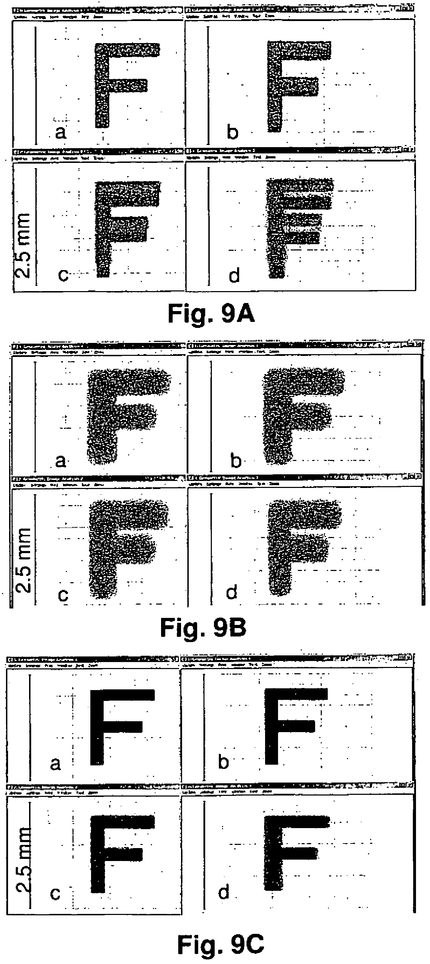

Figuren 9A bis **9C** illustrieren den Farbsaum eines Brillenglases für verschiedene Blickwinkel a) 0° b) 10° c) 20° d) 30°, wobei Fig. 9A eine unkorrigierte Abbildung durch ein monochromatisch optimiertes Brillenglas, Fig. 9B eine Abbildung durch ein farbsaumkorrigiertes Brillenglas, ohne eine asphärische Nachoptimierung der refraktiven Flächen und Fig. 9C eine Abbildung durch ein Brillenglas, welches mittels einer simultanen Farbsaumoptimierung und einer asphärischen Nachoptimierung optimiert worden ist, zeigen. Wie aus Fig. 9B ersichtlich, führt eine Farbsaumkorrektur ohne Berücksichtigung der Refraktionsfehler des Brillenglases mit dem Gitter zu einer etwas unscharfen Abbildung: Erst die Berücksichtigung sowohl des Farbsaums als auch des Refraktionsfehlers, z.B. mittels eines simultanen Optimierens des diffraktiven Gitters und zumindest einer der refraktiven Flächen des Brillenglases, führt zu einer scharfen, farbsaumkorrigieren Abbildung.

Mit der vorgeschlagenen Vorgehensweise gemäß einem bevorzugten Ausführungsbeispiel der Erfindung kann sowohl für Einstärkengläser und Mehrstärkengläser als auch Progressivgläser eine optimale Kombination aus refraktiven Flächen und diffraktiven Gitter ermittelt werden, welche sowohl mindestens die Abbildungseigenschaften zweiter Ordnung optimiert als auch den Farbsaum minimiert. Diesbezüglich eignet sich insbesondere das Verfahren gemäß dem vierten Beispiel der Erfindung. Jedoch kann ebenfalls mit den Verfahren gemäß dem ersten bis dritten Ausführungsbeispiel eine gute Approximation einer optimalen Kombination erzielt werden.

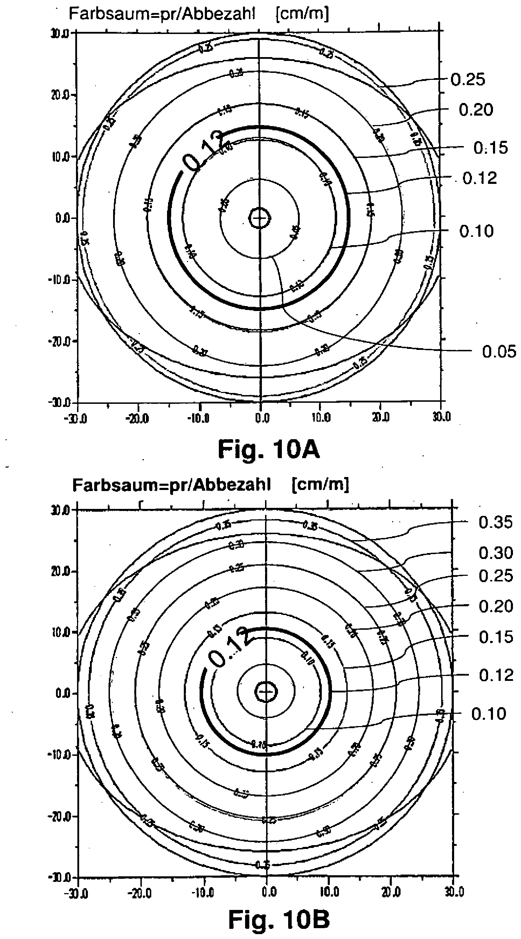

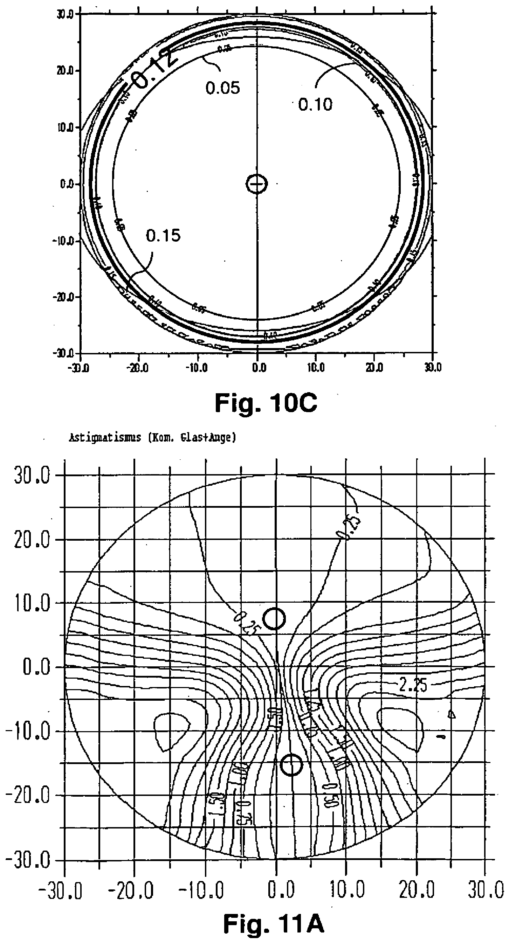

**Fig. 10A-10C** zeigen die Ergebnisse einer exemplarischen Farbsaumkorrektur bei einem rotationssymmetrischen Einstärkenglas mit einer sphärischen Wirkung (Sph) von -4,0 dpt, wobei die Glaseigenschaften als Funktion der Brillenglaskoordinaten in mm angegeben sind. Fig. 10A zeigt den Farbsaum eines herkömmlichen unkorrigierten Einstärkenglases aus dem optischen Material Perfalit 1,5 mit einem Brechungsindex 1,5 und einer Abbezahl von 58,5. Fig. 10B zeigt den Farbsaum eines herkömmlichen Einstärkenglases aus dem optischen Material Perfalit 1,6 mit einem Brechungsindex 1,6 und mit einer Abbezahl von 40,5. Fig. 10C zeigt den Farbsaum eines farbsaumkorrigierten Einstärkenglases aus dem hochbrechenden optischen Material Perfalit 1,74, mit einem Brechungsindex 1,74. Das farbsaumkorrigierte Einstärkenglas weist eine effektive Abbezahl von ungefähr 130 auf.

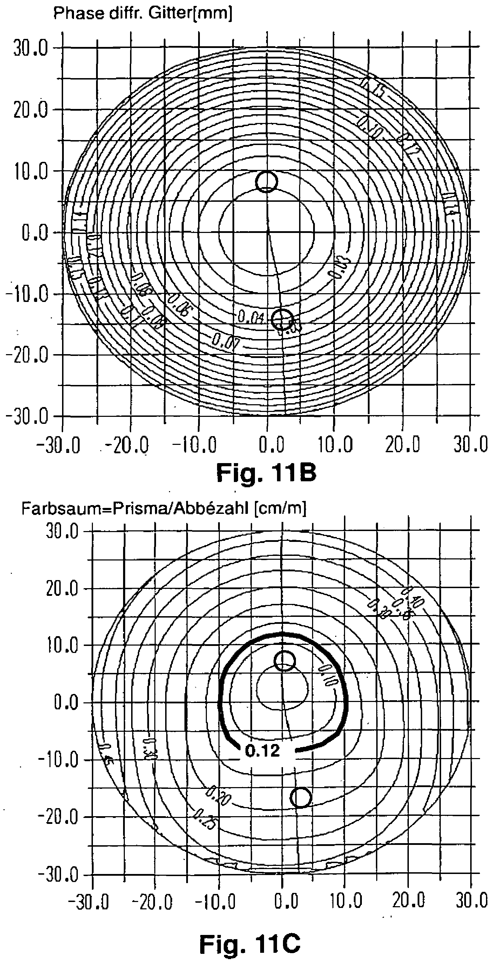

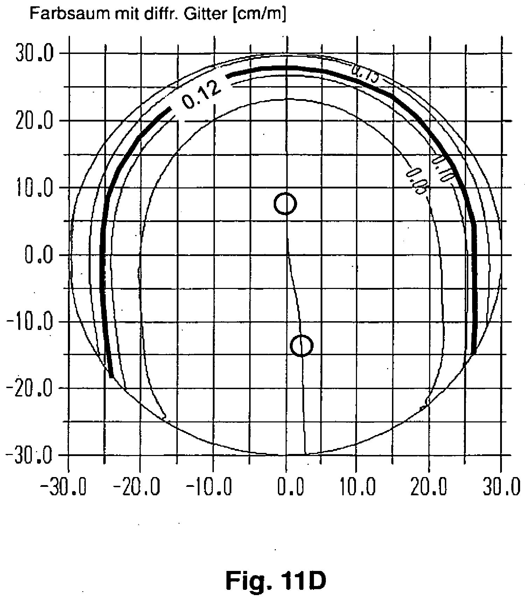

**Fig. 11A-11D** zeigen eine exemplarische Farbsaumkorrektur eines progressiven Brillenglases mittels eines diffraktiven Gitters, wobei Fig. 11A den Astigmatismus in Gebrauchsstellung des Brillenglases, Fig. 11B die diffraktive Phase bzw. die Form der Gitterlinien des diffraktiven Gitters, Fig. 11C den Farbsaum des unkorrigierten Brillenglases und Fig. 11D den Farbsaum des korrigierten Brillenglases zeigen. Das progressive Brillenglas weist eine sphärische Wirkung im Fernbezugspunkt (Sph) von -4,0 dpt und eine Addition von 2,5 dpt auf. Der Brechungsindex des optischen Materials des Brillenglases ist $n$=1,668 und die Abbezahl $v_d$ =31,81. Wie aus einem Vergleich der Figuren 11C und 11D ersichtlich, ist es möglich, auch bei relativ hoch asymmetrischen Flächen bzw. optischen Elementen, eine gute Farbsaumkorrektur zu erzielen.

Nachfolgend wird die Farbsaumkorrektur durch ein diffraktives Gitter detaillierter beschrieben.

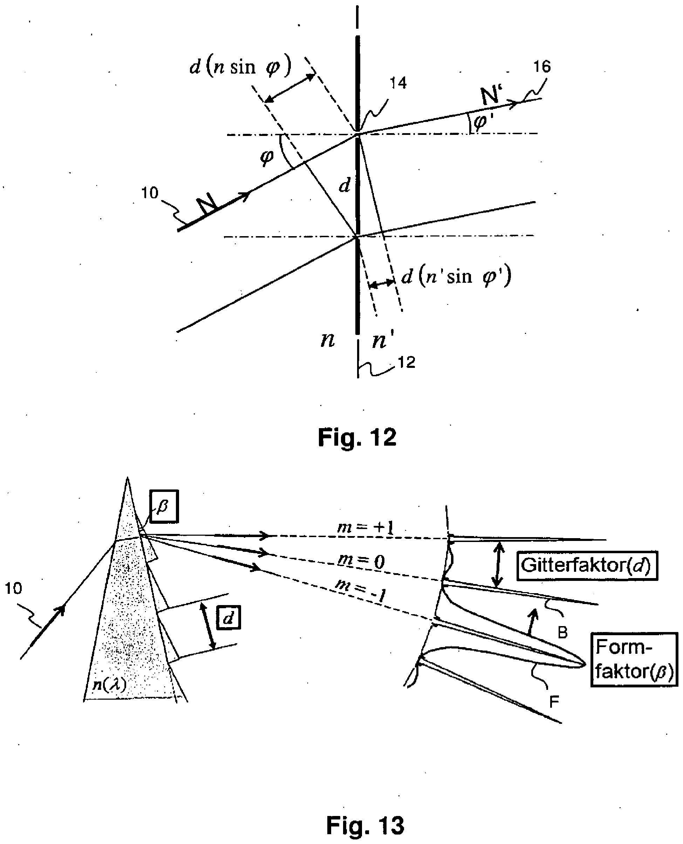

**Fig. 12** zeigt schematisch die Lichtbeugung bei Einfall einer ebenen Wellenfront 10 auf eine Grenzfläche 12 mit einer periodischen Struktur 14 (diffraktives Gitter). Aufgrund der Interferenz entsteht eine winkelabhängige Verteilung der Intensität der ausfallenden Wellenfront 16, welche mehrere Beugungsmaxima aufweist. Die Interferenzbedingung ist $d(n'\sin\varphi')-d(n\sin\varphi)=m\lambda$. Hierbei ist $\lambda$ die Wellenlänge, $\varphi,\varphi'$ die Ein- und Ausfallswinkel, n, n' die beiden Brechungsindizes (vor und nach der Grenzfläche mit dem Gitter) und $d$ die Gitterkonstante. Die Winkelverteilung der Intensität kann als Produkt aus zwei Faktoren, nämlich aus dem Beugungsfaktor und dem Formfaktor, geschrieben werden. Die Positionen der Maxima des Beugungsfaktors hängen nur von der Gitterkonstanten d und der Anzahl der Gitterlinien ab, die Maximumsposition des Formfaktors dagegen nur von der Elementarstruktur des Gitters (z.B. bei Sägezahnform vom Blazing-Winkel $\beta$).

Ein Hauptmerkmal eines diffraktiven Gitters ist dabei der Beugungsfaktor, der beschreibt, dass die Intensitätsverteilung mehrere Maxima enthält, die sich nach den Beugungsordnungen $m$ durchzählen lassen. Diese folgen einem modifizierten Brechungsgesetz $n'\sin\varphi'-n\sin\varphi=m\lambda/d$. Lediglich das Maximum der 0-ten Beugungsordnung ($m$=0) genügt dem klassischen Brechungsgesetz. Alle anderen Richtungen kämen refraktiv nicht vor. Im Strahlbild bedeutet dies, dass ein Strahl in mehrere Teilstrahlen aufgespalten wird. Wie sich die Intensität auf die einzelnen Beugungsordnungen aufteilt, wird durch den Formfaktor bestimmt. **Fig. 13** zeigt schematisch die Winkelverteilung der Intensität bei einem Sägezahngitter 14, welches auf einer der Flächen eines Prismas 20 aufgebracht ist. Die Linie F entspricht dem Formfaktor, die Linie B dem Beugungsfaktor.

Bei der Übertragung dieser Grundsachverhalte auf optische Elemente (z.B. Prismen, Linsen, Brillengläser, etc.) muss berücksichtigt werden, dass ein optisches Element zumindest zwei Grenzflächen besitzt. Dabei ist es üblich

1) Polarisationseffekte zu vernachlässigen, d.h. mit der skalaren Beugungstherorie weiterhin auszukommen,
2) das Rayleigh-Sommerfeldsche Beugungsintegral mit Fraunhofer- oder höchstens Fresnel-Beugung zu betrachten,
3) nur Fernfeldinterferenzen zu betrachten und
4) Streuungseffekte zu vernachlässigen

Die dritte Annahme wird oft stillschweigend getroffen. Diese ist jedoch gültig, solange die beiden Glasflächen weiter voneinander entfernt sind als die Kohärenzlänge vom Tageslicht oder Glühlampenlicht von $3\mu m$. Dies ist in der Regel bei Brillengläsern der Fall.

Der Farbsaum von optischen Elementen im Allgemeinen beruht darauf, dass diese zumindest zwei refraktive Grenzflächen aufweisen, wobei die beiden kombinierten refraktiven Grenzflächen eines optischen Elements eine wellenlängenabhängige prismatische Wirkung Pr$_{ref}$ besitzen. Die Anwendung von diffraktiver Optik zur Farbsaumkorrektur basiert darauf, auf zumindest einer der refraktiven Grenzflächen des optischen Elements ein diffraktives Gitter aufzubringen, für das aufgrund des diffraktiv modifizierten Brechungsgesetzes für $m\neq0$ eine zusätzliche prismatische Wirkung Pr$_{diff}$ eingeführt wird.

Bei geeigneter Auslegung oder Dimensionierung des diffraktiven Gitters (insbesondere der Periode d des diffraktiven Gitters) gibt es dann eine Ordnung $m=m_0$, für welche die Wellenlängenabhängigkeit von Pr$_{diff}$ der gewöhnlichen Dispersion des refraktiven Prismas Pr$_{ref}$ entgegengesetzt ist und ein derartige Größe hat, dass das Gesamtprisma Pr=Pr$_{ref}$+Pr$_{diff}$ nahezu wellenlängenunabhängig ist. Um genau für diese Ordnung $m_0$ eine möglichst hohe Intensität zu erreichen, d.h. um die Beugungseffizienz zu maximieren, kann die Gitterform geeignet gestaltet werden. Bei einem Sägezahngitter erfolgt dies durch eine geeignete Wahl des Biazing-Winkels.

Ein diffraktives Gitter, welches zur Korrektur des Farbsaums eines vorgegebenen Brillenglases dient, kann z.B. wie folgt ermittelt werden:

1) Modellbildung im wellenoptischen Bild;

2) Aus der wellenoptischen Intensitätsverteilung wird eine bestimmte Ordnung selektiert. Die Gitterkonstante wird so gewählt, dass der "Peak" dieser Ordnung wellenlängenunabhängig ist. Dadurch wird eine Farbsaumkorrektur ermöglicht. Die Form des Gitters (z.B. der Blazing-Winkel bei einem Sägezahngitter) wird so eingestellt, dass die Beugungseffizienz für diese Ordnung maximal ist. Schließlich wird die Ausfallsrichtung für diesen Peak durch einen Strahl beschrieben (geometrisches Strahlenbild, ray-tracing);

3) Simultane Optimierung des Gitters und der refraktiven Fläche, wobei die Abbildungseigenschaften zweier und höherer Ordnung des Brillenglases mit dem Gitter berücksichtigt werden. Gemäß einem Aspekt der Erfindung wird ein Übergang zu geometrischen Wellenfronten und wave-tracing vorgeschlagen, um die Abbildungseigenschaften des Brillenglases (vorzugsweise in Gebrauchsstellung) zu berechnen und gegebenenfalls zu optimieren.

**Modellbildung im wellenoptischen Bild**

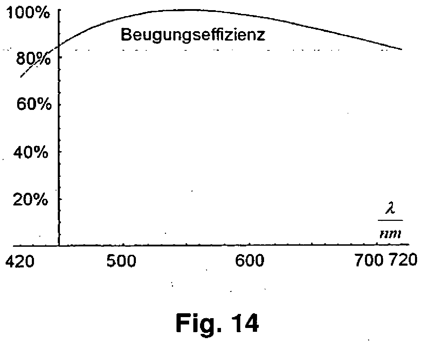

Eine zentrale Größe der Wellenoptik ist die Verteilung von Amplitude und Phase. Durch die Berechnung des Beugungsintegrals kann die Aufspaltung in Form- und Beugungsfaktor reproduziert werden. Unabhängig davon wie sich die Beugungsordnungen später zur Farbsaumkorrektur nutzen lassen, ist es vorteilhaft, dass die Intensität möglichst nur in einer einzigen Ordnung gesammelt wird. So kann z.B. mit Hilfe eines Sägezahngitters mit einem bestimmten Blazing-Winkel erreicht werden, dass zumindest bei einer definierten bzw. vorgegebenen Designwellenlänge praktisch eine Beugungseffizienz von ungefähr 100% für die gewählte Beugungsordnung erreicht werden kann. **Fig. 14** zeigt die Beugungseffizienz als eine Funktion der Wellenlänge. Wie aus Fig. 14 ersichtlich, kann ebenfalls erreicht werden, dass am Rande des sichtbaren Wellenlängenbereichs die Beugungseffizienz noch typischerweise Werte zwischen 70% und 90% annimmt.

Der Formfaktor ist eine relativ breite Glockenfunktion, die genau entlang derjenigen Richtung zentriert ist, die aufgrund der Steigung der Flächenabschnitte im Gitter auch schon nach dem klassischen Brechungsgesetz die Ausfallsrichtung wäre. Je nach Profil des Gitters (z.B. je nach Blazing-Winkel) kann diese Richtung nun auf ein Beugungsmaximum einer gewünschten Beugungsordnung verschoben werden (siehe Fig. 13). Alle anderen Beugungsmaxima werden dann gleichzeitig unterdrückt. Die Richtungsabhängigkeit des Formfaktors gilt unabhängig von der Gitterkonstante und bedeutet, dass sich über den kompletten Übergang hinweg, welcher sich von DOEs über MODs hin zu Fresnel-Gittern vollziehen lässt, Licht immer in der Nähe des klassischen Brechungsgesetzes ausfällt.

**Farbsaumkorrektur**

Wenn kein diffraktives Gitter vorhanden ist, wird die Intensitätsverteilung durch eine Kurve gegeben, deren Maximum durch die Kurve "F" des Formfaktors in Fig. 13 gegeben wäre. Der Peak aber wäre viel schmaler und wäre durch die Breite des Einfachspalts bestimmt, den die komplette Linse darstellt. Die Wellenlängenabhängigkeit der Maximumposition wäre dann durch die gewöhnliche Dispersion gegeben.

Bei Anwesenheit eines diffraktiven Sägezahngitters ändert sich daran nichts, außer, dass die Breite des Formfaktor-Peaks nun um Größenordnungen zunimmt und durch den Einfachspalt bestimmt wird, der nun durch eine Gitterperiode gegeben ist (siehe Kurve "F" in Fig. 13). Das Dispersionsverhalten dieses Peaks ist dasselbe wie ohne Gitter, aber der Peak bestimmt nicht mehr alleine die Intensitätsverteilung, weil diese nun zusätzlich durch die scharfen Peaks des Beugungsfaktors eingeschränkt wird. Derjenige dieser Peaks, der bei einer Arbeitswellenlänge zentral auf dem Formfaktor liegt, enthält die ganze Intensität und bestimmt *de facto* die Ausfallsrichtung des Lichts. Die Beugungseffizienz liegt dann bei annähernd 100%. Ziel ist es, die Position dieses Peaks wellenlängenunabhängig zu machen, so dass eine Farbsaumkorrektur erreicht wird.

Variiert nun die Wellenlänge, dann wandert der Formfaktor langsam mit nur geringen Verlusten an Beugungseffizienz über diesen konstanten Peak hinweg (siehe Fig. 14).

## Geometrisches Strahlenbild und Farbsaumkorrektur

Wie bereits oben ausgeführt, können durch eine geeignete Wahl des Profils des diffraktiven Gitters alle Beugungsmaxima zugunsten eines einzigen außer Acht gelassen werden. Die Ausfallsrichtung des verbliebenen Beugungsmaximums kann im geometrischen Strahlenbild durch das modifizierte Brechungsgesetz $n'\sin\varphi'-n\sin\varphi = m\lambda/d$ beschrieben werden.

Für eine Farbsaumkorrektur eines (lokalen) Prismas wird verlangt, dass die prismatische Ablenkung eines Strahls, welcher durch beide Grenzflächen des Prismas fällt und durch das Prisma abgelenkt wird, für eine vorgegebene Wellenlänge (Designwellenlänge) wellenlängenunabhängig ist. Die Wellenlängenunabhängigkeit ist im Sinne einer verschwindenden Ableitung nach der Wellenlänge zu verstehen.

Anhand dieser Bedingung kann dann die Gitterkonstante $d$ ermittelt werden, welche proportional zur Abbezahl und der Beugungsordnung und umgekehrt proportional zum Prisma ist. Überaschenderweise hat sich herausgestellt, dass der so ermittelte Wert der Gitterkonstante nicht (wie erwartet) in der Größenordnung der Wellenlänge, sondern z.B. für ein Prisma von $4cm/m$ und bei einer Abbezahl $v_d\approx40$ bei einem Wert von über $d\approx100\mu m$ liegt. Dies kann damit erklärt werden, dass nicht eine Brechkraft, sondern nur der geringere Effekt der Farbsaumkorrektur erreicht werden soll.

Wie oben gezeigt wurde, ist diejenige Beugungsordnung, für welche eine Farbsaumkorrektur eintritt, immer so gerichtet, dass eine Verstärkung des ursprünglichen Prismas eintritt. Das Gesamtprisma $Pr=Pr_{ref}+Pr_{diff}$ liegt dabei im Betrag immer um ca. 5% bis 10% über dem Betrag $|Pr_{ref}|$ des rein refraktiven Anteils.

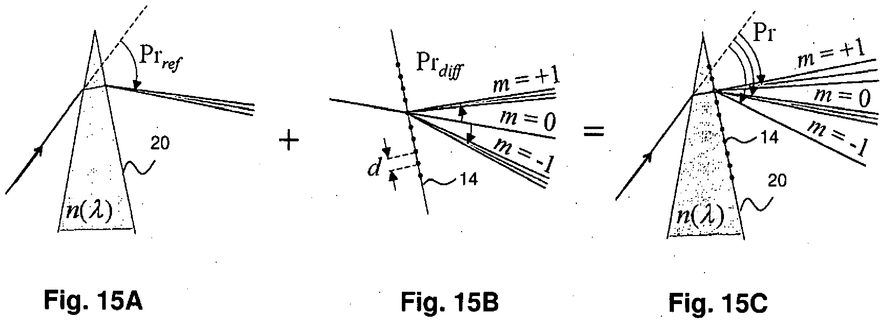

**Fig. 15** zeigt das Prinzip der Farbsaumkorrektur durch ein diffraktives Gitter bei einem refraktiven Prisma. **Fig. 15A** zeigt den Farbsaum eines Prismas 20 mit einem Prismenwinkel $\alpha$, welcher durch die wellenlängenabhängige prismatische Wirkung $Pr_{ref}$ des Prismas 20 bedingt ist. **Fig. 15B** zeigt die wellenlängenabhängige Beugung durch das diffraktive Gitter 14. **Fig. 15C** zeigt die kombinierte Wirkung des Prismas 20 und des diffraktiven Gitters 14. Für die gegebene Gitterkonstante d findet eine Farbsaumkorrektur in der Ordnung m = -1 statt. Die wellenlängenabhängige prismatische Wirkung des Prismas 20 ist $Pr_{ref}=-(n(\lambda)-1)\alpha$. Das diffraktive Gitter 14 mit der Gitterkonstante $d$ hat eine prismatische Wirkung $Pr_{diff}=\dfrac{m\lambda}{d}$. Die kombinierte Wirkung des Prismas 20 mit dem Gitter 14 ist $Pr=Pr_{ref}+Pr_{diff}$.

Für eine Farbsaumkorrektur wird verlangt, dass $\left.\dfrac{\partial Pr}{\partial\lambda}\right|_{\lambda=\lambda_D}=0$ für eine vorgegebene Designwellenlänge $\lambda_D$ ist.

Für die Gitterkonstante ergibt sich dann $d\approx\dfrac{m}{\alpha\cdot\partial n/\partial\lambda}$.

Soll statt an einem Prisma der Farbsaum an einem optischen Element mit gekrümmten Flächen korrigiert werden, können die Ergebnisse der Farbsaumkorrektur mittels eines Prismas auf die Farbsaumkorrektur des optischen Elements übertragen werden indem der Wert von $d$ lokal so einstellt wird, dass er das lokale Prisma korrigiert. Im Allgemeinen ist das so ermittelte Gitter jedoch nicht mehr äquidistant (d.h. weist keine äquidistanten Gitterlinien auf). In der Regel variiert jedoch die nun variable Funktion $d(r)$ so langsam, dass die Modellvorstellung der Periodizität, die zur Herleitung der wellenoptischen Gleichungen verwendet wurde, näherungsweise gültig bleibt.

Da das lokale Prisma nach der Prentice'schen Regel proportional zu r ist, kann die Periode $d(r)$ eines Gitters, welches den Farbsaum eines Brillenglases korrigieren soll, umgekehrt proportional zu r gewählt werden, d.h. $d(r)=A/r$. Die Konstante $A$ ist dabei proportional zur Abbezahl und der Beugungsordnung und umgekehrt proportional zum Scheitelbrechwert. Analog zum Prisma wird wegen der Prentice'schen Regel auch der Betrag des Scheitelbrechwerts durch den diffraktiven Beitrag um 5% bis 10% erhöht.

Bei der obigen Betrachtung wird jedoch die tatsächliche Gebrauchsstellung der Linse nicht berücksichtigt. Insbesondere wird nicht berücksichtigt, dass das Prisma in Gebrauchsstellung der Linse von dem nach der Prentice'schen Regel ermittelten Prisma abweichen kann. Im Allgemeinen ist daher die Abhängigkeit der Periode von $r$ komplexer. Die Periode $d(r)$ kann daher in Form eines Potenzreihenansatzes mit Termen proportional zu $r^2$, $r$, 1, $1/r$, $1/r^2$, ... dargestellt werden. Vorzugsweise werden die Koeffizienten der einzelnen Terme durch eine simultane Optimierung von Gitter und refraktiver Fläche ermittelt.

Diese Gesetzmäßigkeiten gelten sowohl für Plus- als auch für Minusgläser.

## Geometrische Wellenfronten und wave-tracing

Um zu Gesetzen zweiter Ordnung mittels wave-tracing zu gelangen, wird zu dem o.g. geometrischen Strahlenbild ein Bild mit geometrischen Wellenfronten eingeführt. Diese Wellenfronten entsprechen nicht den Wellenfronten, welche im wellenoptischen Bild die Flächen gleicher Phase beschreiben, sondern sie kommen zustande, nachdem eine Beugungsordnung selektiert wurde und indem sie als Flächen eingeführt werden, zu denen die Strahlen dieser einen Beugungsordnung senkrecht stehen.

In diesem Bild spielt das diffraktive Gitter (auch diffraktives optisches Element oder DOE genannt) die Rolle eines Phasengitters, das abhängig von $r$, allgemeiner abhängig von den Koordinaten $x,y$, eine Phasenfunktion $\psi(x,y)$ einführt, die zur optischen Weglänge von durchlaufenden Strahlen addiert wird. Die Funktion $\psi(x,y)$ wird so eingeführt, dass die Strahlen, die dann senkrecht auf den Flächen konstanter optischer Weglänge stehen, automatisch das diffraktive Brechungsgesetz $n'\sin\varphi'-n\sin\varphi=m\lambda/d$ erfüllen bzw. dessen vektorielle Erweiterung. Wie sich herausstellt, muss dann der Gradient von $\psi(x,y)$ die Bedingung $|\nabla\psi|=m\lambda/d$ erfüllen.

Ebenfalls hat sich überaschenderweise gezeigt, dass es eine diffraktive Verallgemeinerung der Coddington-Gleichungen gibt, gemäß welcher der PowerVektor des Flächenbrechwerts (bis auf einen Vorfaktor) additiv um einen Vektor erweitert wird, welcher aus den drei zweiten Ableitungen $\psi_{xx}$, $\psi_{xy}$, $\psi_{yy}$ besteht.

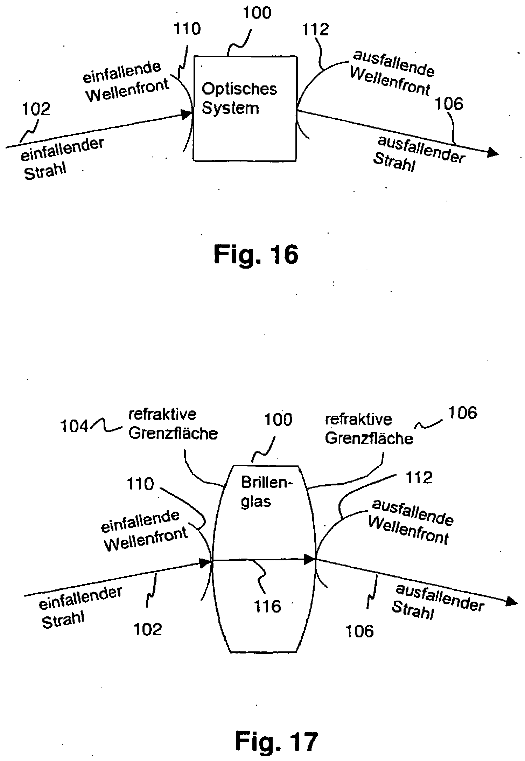

Der Durchgang des Lichts durch ein beliebiges optisches Element, welches auch mehrere optische Komponenten umfassen kann, bzw. durch ein beliebiges optisches System 100 kann anhand von Strahldurchrechnung und Wellenfrontdurchrechnung beschrieben werden, wie in **Fig. 16** und **Fig. 17** schematisch gezeigt. Dabei hat eine Strahldurchrechnung die Aufgabe, zu einem gegebenen optischen Element/System 100 aus einem einfallenden Strahl 102, welcher bis zur eintrittsfläche 104 des optischen Elements/Systems gegeben ist, den ausfallenden Strahl 108 auszurechnen, der an der Austrittsfläche 106 aus dem Element/System ausfällt. Eine Wellenfrontdurchrechnung hat die Aufgabe, zu einem gegebenen optischen Element/System 100 aus einer einfallenden Wellenfront 110, die an der Eintrittsfläche 104 eines optischen Elements/Systems 100 gegeben ist, die ausfallende Wellenfront 112 an der Austrittsfläche 106 aus dem Element/System 100 zu berechnen. Eine lokale Wellenfrontdurchrechnung hat die Aufgabe, zu einem gegebenen optischen Element/System 100 aus den lokalen Eigenschaften einer einfallenden Wellenfront 112, die an der Eintrittsfläche 104 des optischen Elements 100 gegeben ist, die lokalen Eigenschaften der ausfallende Wellenfront 112 an der Austrittsfläche 112 des Elements/Systems 100 zu berechnen.

Ein optisches Element bzw. ein optisches System kann aus einer beliebigen Abfolge von dünnen Grenzflächen, homogenen Materialien oder inhomogenen Materialien bestehen. Insbesondere kann ein optisches Element (z.B. ein Brillenglas, wie in Fig. 17 gezeigt) aus der Abfolge aus einer gekrümmten refraktiven Grenzfläche 104 von Luft in ein dichteres homogenes Material 114, dem Durchgang 116 durch das Material und einer zweiten gekrümmten refraktiven Grenzfläche 106 zurück in Luft bestehen. **Fig. 17** zeigt schematisch die Strahldurchrechnung und Wellenfrontdurchrechnung durch ein solches optisches Element.

Zur Verbesserung von optischen Elementen bzw. von optischen Systemen, insbesondere von Brillengläsern, kann es jedoch von Vorteil sein, zusätzlich optische Komponenten in den Strahlengang zu bringen, die auf anderen physikalischen Effekten beruhen als auf reiner Refraktion an einer gekrümmten Grenzfläche. So ist vorgeschlagen worden, diffraktive optische Elemente, für welche Beugungseffekte von Bedeutung sind, einzusetzen. Insbesondere kann ein solches Element phasenverzögernd oder phasenmodulierend sein und zwar derart, dass die Änderung der optischen Weglänge durch Hinzufügen des Elements vom Durchtrittspunkt des Strahls abhängt.

Bisher sind jedoch keine Verfahren bekannt, welche es ermöglichen, eine genaue Durchrechnung der Eigenschaften (insbesondere der Abbildungseigenschaften) von optischen Elementen, welche ebenfalls diffraktive optische Komponenten umfassen, insbesondere unter Berücksichtigung einer vorgegebenen Gebrauchsstellung des optischen Elements, durchzuführen.

Nachfolgend wird eine erweiterte Wellenfrontdurchrechnung für den Fall von komplexen optischen Elementen, welche zumindest ein diffraktives Gitter aufweisen, im Detail beschrieben. Das Verfahren kann auch als eine Erweiterung der, z.B. aus der Druckschrift WO 2008/089999A1 bekannten, Wellenfrontdurchrechnung durch rein refraktive Grenzflächen auf den Fall von komplexen optischen Systemen mit zumindest einem diffraktiven Gitter betrachtet werden.

Die elementarste Beschreibung einer Wellenfrontdurchrechnung zweiter Ordnung durch eine rein refraktive Grenzfläche ist im Stand der Technik (siehe z.B. der Lehrbuch "Optik und Technik der Brille" von H. Diepes und R. Blendowske, 2002 Optische Fachveröffentlichung GmbH, Heidelberg, Seite 485 ff.) als sogenannte BAD-Gleichung oder anders genannt Vergenzgleichung bekannt. Im Fall einer rotationssymmetrischen, refraktiven Fläche und unter einem senkrechten Strahleinfall lautet die BAD Gleichung (die Vergenzgleichung)

$$B = A + D. \qquad (101)$$

Dabei ist A die Vergenz (also ein Maß für die lokale Wellenfrontkrümmung) der einfallenden Wellenfront, $B$ die Vergenz der ausfallenden Wellenfront und D der Flächenbrechwert der brechenden Fläche.

Wenn die Voraussetzungen für Rotationssymmetrie nicht erfüllt sind, dann wird für rein refraktive Flächen nach dem Stand der Technik (siehe z.B. das oben zitierte Lehrbuch "Optik und Technik der Brille") die BAD-Gleichung vektoriell geschrieben, also

$$\mathbf{B} = \mathbf{A} + \mathbf{D}. \qquad\qquad\qquad (102)$$

Dabei ist A die Powervektorform der Vergenzmatrix der einfallenden Wellenfront, B die Powervektorform der Vergenzmatrix der ausfallenden Wellenfront und D die Powervektorform der Flächenbrechwertmatrix der brechenden Fläche. Statt eines Powervektors können auch Linearkombinationen von Powervektorkomponenten, die zu einem neuen Vektor zusammengefasst werden, verwendet werden. Insbesondere können dabei die Normalkrümmungen und die Torsion, also die zweiten Ableitungen nach den Querkoordinaten und die gemischte Ableitung, verwendet werden.

Statt der Symbolen $A$ bzw. **A** , $B$ bzw. **B und** $D$ bzw. **D** werden häufig die folgenden Symbole verwendet:

$A$ bzw. **A** $\rightarrow$ $S$ bzw. **S**
$B$ bzw. **B** $\rightarrow$ $S'$ bzw. **S'**
$D$ bzw. **D** $\rightarrow$ $F$ bzw. **F**

Die Gleichungen (101) und (102) lauten dann entsprechend $S'=S+F$ und **S'=S+F**

Falls der Strahleinfall nicht senkrecht erfolgt, lassen sich nach dem Stand der Technik für rein refraktive Grenzflächen weitere Modifikationen der BAD-Gleichung einführen, mit denen sich der Wellenfrontdurchgang dann wieder exakt beschreiben lässt (siehe z.B. G. Esser, W. Becken, W. Müller, P. Baumbach, J. Arasa, and D. Uttenweiler, "Derivation of the refraction equations for higher-order aberrations of local wavefronts at oblique incidence", JOSA. A, Vol. 27, Nr. 2, Februar 2010, Seiten 218 - 237). Diese Modifikationen stellen die Coddington-Gleichung und die verallgemeinerte Coddington-Gleichung für Abbildungsfehler zweiter und höherer Ordnung dar. Insbesondere wird in der Publikation von G. Esser et al. die Powervektorform der verallgemeinerten Coddington-Gleichung für Abbildungsfehler zweiter und höherer Ordnung beschrieben.

Die aus dem Stand der Technik bekannten Gleichungen (in Powervektorform) für die Wellenfrontdurchrechnungen zweiter und höherer Ordnung bei einem Durchgang durch eine rein refraktive Grenzfläche sind in Tabelle 1 zusammengefasst:

**Tabelle 1**

| | senkrechter Einfall + Rotationssymmetrie | senkrechter Einfall ohne Rot. symmetrie | keine Symmetrie |
|---|---|---|---|
| 2.Ordnung | $S'^{(2)} = S^{(2)} + F^{(2)}$<br>alternative Schreibweise:<br>$S'=S+F$<br>$B=A+D$ | $\mathbf{S}'^{(2)} = \mathbf{S}^{(2)} + \mathbf{F}^{(2)}$<br>alternative Schreibweise:<br>**S'=S+F**<br>**B = A + D** | $\mathbf{T}'_2\mathbf{S}'^{(2)} = \mathbf{T}_2\mathbf{S}^{(2)} + v\mathbf{F}^{(2)}$ |
| 3.Ordnung | $S'^{(3)}= S^{(3)} + F^{(3)} \quad + R_3(S^{(2)},F^{(2)})$ | $\mathbf{S}'^{(3)}=\mathbf{S}^{(3)} + \mathbf{F}^{(3)} \quad + \mathbf{R}_3(\mathbf{S}^{(2)},\mathbf{F}^{(2)})$ | $\mathbf{T}'_3\mathbf{S}'^{(3)}=\mathbf{T}_3\mathbf{S}^{(3)} + v\mathbf{F}^{(3)} + \mathbf{Q}_3(\mathbf{S}^{(2)},\mathbf{F}^{(2)})$ |
| 4.Ordnung | $S'^{(4)}=S^{(4)}+F^{(4)} + R_4(S^{(3)},F^{(3)},S^{(2)},F^{(2)})$ | $\mathbf{S}'^{(4)}=\mathbf{S}^{(4)} + \mathbf{F}^{(4)} + \mathbf{R}_4(\mathbf{S}^{(3)},\mathbf{F}^{(3)},\mathbf{S}^{(2)},\mathbf{F}^{(2)})$ | $\mathbf{T}'_4\mathbf{S}'^{(4)}=\mathbf{T}_4\mathbf{S}^{(4)}+v\mathbf{F}^{(4)} + \mathbf{Q}_4(\mathbf{S}^{(3)},\mathbf{F}^{(3)},\mathbf{S}^{(2)},\mathbf{F}^{(2)})$ |
| etc. | | | |

Tabellen 1A bis 1C enthalten Erläuterungen zu den in der Tabelle 1 enthaltenen Gleichungen für die 2. Ordnung (Tabelle 1A), für die dritte Ordnung (Tabelle 1B) und für die vierte Ordnung (Tabelle 1C).

**Tabelle 1A**

| | |
|---|---|
| $S^{(2)} = nW_{\text{In}}^{(2)}(0)$ | Vergenz der einfallenden Wellenfront : Brechungsindex auf der Einfallsseite multipliziert mit der zweiten Ableitung der Pfeilhöhe der einfallenden Wellenfront |
| $S'^{(2)} = n'W_{\text{Out}}'^{(2)}(0)$ | Vergenz der ausfallenden Wellenfront : Brechungsindex auf der Ausfallsseite multipliziert mit der zweiten Ableitung der Pfeilhöhe der ausfallenden Wellenfront |
| $F^{(2)}=(n'-n)\overline{S}^{(2)}(0)$ | Flächenbrechwert der brechenden Fläche: Brechungsindexdifferenz multipliziert mit der zweiten Ableitung der Pfeilhöhe der brechenden Fläche |
| $S$ bzw. $A$ | Vergenz der einfallenden Wellenfront |
| $S'$ bzw. $B$ | Vergenz der ausfallenden Wellenfront |

(fortgesetzt)

| | |
|---|---|
| *F* bzw. *D* | Flächenbrechwert der brechenden Fläche |
| $$\mathbf{S}^{(2)} = n \begin{pmatrix} W_{\text{In}}^{(2,0)}(0,0) \\ W_{\text{In}}^{(1,1)}(0,0) \\ W_{\text{In}}^{(0,2)}(0,0) \end{pmatrix}$$ | Brechungsindex auf der Einfallsseite multipliziert mit dem Powervektor der zweiten Ableitung der Pfeilhöhe einfallenden Wellenfront |
| $$\mathbf{S}'^{(2)} = n \begin{pmatrix} W'^{(2,0)}_{\text{Out}}(0,0) \\ W'^{(1,1)}_{\text{Out}}(0,0) \\ W'^{(0,2)}_{\text{Out}}(0,0) \end{pmatrix}$$ | Brechungsindex auf der Ausfallsseite multipliziert mit dem Powervektor der zweiten Ableitung der Pfeilhöhe ausfallenden Wellenfront |
| $$\mathbf{F}^{(2)} = (n'-n) \begin{pmatrix} \overline{S}^{(2,0)}(0,0) \\ \overline{S}^{(1,1)}(0,0) \\ \overline{S}^{(0,2)}(0,0) \end{pmatrix}$$ | Brechungsindexdifferenz multipliziert mit dem Powervektor der zweiten Ableitungen der Pfeilhöhe der brechenden Fläche |
| S bzw. A | Powervektor der Vergenz der einfallenden Wellenfront |
| **S'** bzw. **B** | Powervektor der Vergenz der ausfallenden Wellenfront |
| **F** bzw. **D** | Powervektor des Flächenbrechwerts der brechenden Fläche |
| **T**$_2$ | vom Einfallswinkel abhängige Matrix zur Korrektur des schiefen Einfalls |
| **T'**$_2$ | vom Ausfallswinkel abhängige Matrix zur Korrektur des schiefen Einfalls |
| $v = n'\cos\varphi' - n\cos\varphi$ | Faktor zur Korrektur des schiefen Einfalls |

**Tabelle 1B:**

| | |
|---|---|
| $$S^{(3)} = n W_{\text{In}}^{(3)}(0)$$ | Brechungsindex auf der Einfallsseite multipliziert mit der dritten Ableitung der Pfeilhöhe einfallenden Wellenfront |
| $$S'^{(3)} = n' W'^{(3)}_{\text{Out}}(0)$$ | Brechungsindex auf der Ausfallsseite multipliziert mit der dritten Ableitung der Pfeilhöhe der ausfallenden Wellenfront |
| $F^{(3)} = (n'-n)\overline{S}^{(3)}(0)$ | Brechungsindexdifferenz multipliziert mit der dritten Ableitung der Pfeilhöhe der brechenden Fläche |
| $$\mathbf{S}^{(3)} = n \begin{pmatrix} W_{\text{In}}^{(3,0)}(0,0) \\ W_{\text{In}}^{(2,1)}(0,0) \\ W_{\text{In}}^{(1,2)}(0,0) \\ W_{\text{In}}^{(0,3)}(0,0) \end{pmatrix}$$ | Brechungsindex auf der Einfallsseite multipliziert mit dem Powervektor der dritten Ableitung der Pfeilhöhe der einfallenden Wellenfront |
| $$\mathbf{S}'^{(3)} = n \begin{pmatrix} W'^{(3,0)}_{\text{Out}}(0,0) \\ W'^{(2,1)}_{\text{Out}}(0,0) \\ W'^{(1,2)}_{\text{Out}}(0,0) \\ W'^{(0,3)}_{\text{Out}}(0,0) \end{pmatrix}$$ | Brechungsindex auf der Ausfallsseite multipliziert mit dem Powervektor der dritten Ableitung der Pfeilhöhe der ausfallenden Wellenfront |

(fortgesetzt)

| | |
|---|---|
| $\mathbf{F}^{(3)} = (n'-n)\begin{pmatrix} \overline{S}^{(3,0)}(0,0) \\ \overline{S}^{(2,1)}(0,0) \\ \overline{S}^{(1,2)}(0,0) \\ \overline{S}^{(0,3)}(0,0) \end{pmatrix}$ | Brechungsindexdifferenz multipliziert mit dem Powervektor der dritten Ableitung der Pfeilhöhe der brechenden Fläche |
| $\mathbf{T}_3$ | vom Einfallswinkel abhängige Matrix zur Korrektur des schiefen Einfalls |
| $\mathbf{T'}_3$ | vom Ausfallswinkel abhängige Matrix zur Korrektur des schiefen Einfalls |
| $v = n' \cos \varphi' - n \cos \varphi$ | Faktor zur Korrektur des schiefen Einfalls |
| $R_3(S^{(2)}, F^{(2)})$ | Zusatzterm, der nur von den Größen niedrigerer Ordnung (hier 2. Ordnung) abhängt |
| $\mathbf{R}_3(\mathbf{S}^{(2)}, \mathbf{F}^{(2)})$ | vektorieller Zusatzterm, der nur von den Größen niedrigerer Ordnung (hier 2. Ordnung) abhängt |
| $\mathbf{Q}_3(\mathbf{S}^{(2)}, \mathbf{F}^{(2)})$ | vektorieller Zusatzterm, der den schiefen Einfall berücksichtigt, und der nur von den Größen niedrigerer Ordnung (hier 2. Ordnung) abhängt |

**Tabelle 1C**

| | |
|---|---|
| $R_4(S^{(3)}, F^{(3)}, S^{(2)}, F^{(2)})$ | Zusatzterm, der nur von den Größen niedrigerer Ordnung (hier 2. und 3. Ordnung) abhängt |
| $\mathbf{R}_4(\mathbf{S}^{(3)}, \mathbf{F}^{(3)}, \mathbf{S}^{(2)}, \mathbf{F}^{(2)})$ | vektorieller Zusatzterm, der nur von den Größen niedrigerer Ordnung (hier 2. und 3. Ordnung) abhängt |
| $\mathbf{Q}_4(\mathbf{S}^{(3)}, \mathbf{F}^{(3)}, \mathbf{S}^{(2)}, \mathbf{F}^{(2)})$ | vektorieller Zusatzterm, der den schiefen Einfall berücksichtigt, und der nur von den Größen niedrigerer Ordnung (hier 2. und 3. Ordnung) abhängt |

Die Form der Zusatzterme $R_3(S^{(2)}, F^{(2)})$, $\mathbf{R}_3(\mathbf{S}^{(2)}, \mathbf{F}^{(2)})$, $\mathbf{Q}_3(\mathbf{S}^{(2)}, \mathbf{F}^{(2)})$ ist ferner in der Veröffentlichung [G. Esser, W. Becken, W. Müller, P. Baumbach, J. Arasa, und D. Uttenweiler, "Derivation of the refraction equations for higher-order aberrations of local wavefronts at oblique incidence", JOSA. A, Vol. 27, Nr. 2, Februar 2010, Seiten 218 - 237] beschrieben. Diese Terme verschwinden, sobald die Terme niedrigerer Ordnung $S^{(2)}, F^{(2)}$ bzw. $\mathbf{S}^{(2)}, \mathbf{F}^{(2)}$ verschwinden bzw. gleich Null sind.

Die weiteren Erläuterungen für die 4. Ordnung, etc. sind analog zu den Erläuterungen für die 2. und 3. Ordnung.

Es hat sich überraschenderweise herausgestellt, dass die Gleichungen, welche die Wellenfrontdurchrechnung zweiter und höherer Ordnung durch gewöhnliche refraktive Grenzflächen beschreiben, sich in vergleichsweise einfacher Weise modifizieren lassen, so dass ebenfalls diffraktive optische Elemente bzw. diffraktive Gitter mit einbezogen werden können. Dabei kann entweder der Durchgang von Licht durch ein isoliertes diffraktives Gitter beschrieben werden oder der Durchgang durch eine unmittelbar aufeinanderfolgende Kombination aus einem diffraktiven Gitter und einer refraktiven Grenzfläche.

Ferner hat sich herausgestellt, dass sich jedem beliebigen, auch nicht-rotationssymmetrischen, diffraktiven Gitter auch bei beliebigen schiefwinkligen Strahleinfallbedingungen eine im Allgemeinen vektorielle Größe $\mathbf{PK}^{(k)}$, $k=2,3,4,...$, nachfolgend auch Phasenkrümmung (für $k = 2$) bzw. Phasenableitungen (für $k > 2$) genannt, zuordnen lässt, so dass die entsprechende BAD Gleichung und die Gleichungen höherer Ordnung für refraktive Flächen im Wesentlichen nur additiv um den Zusatzterm $\mathbf{PK}^{(k)}$, $k=2,3,4,...$ erweitert werden müssen, um die Vergenzen beim Wellenfrontdurchgang bei Anwesenheit eines nicht-rotationssymmetrischen diffraktiven Gitters korrekt zu beschreiben.

Mit anderen Worten ist es auch in jeder noch so asymmetrischen Situation, für die sich für rein refraktive Flächen die Wellenfrontdurchrechnung exakt beschreiben ließe, ausreichend, die entsprechende Gleichung im Wesentlichen nur durch einen additiven Zusatzterm PK zu erweitern, um auch das diffraktive Gitter korrekt zu beschreiben.

Ferner ist erkannt worden, dass die Vergenz der ausfallenden Wellenfront unabhängig von der Reihenfolge ist, in der die brechende Fläche und das diffraktive Gitter aufeinander folgen.

Im Falle einer Wellenfrontdurchrechnung zweiter Ordnung (d.h. für $k = 2$) für ein rotationssymmetrisches, diffraktives Gitter und unter senkrechtem Strahleinfall wird Gleichung (101) somit additiv um den Zusatzterm $PK^{(2)}$ erweitert, um die Vergenzen beim Wellenfrontdurchgang auch bei Anwesenheit eines diffraktiven Gitters korrekt zu beschreiben:

$$B = A + D + PK^{(2)}.\tag{103}$$

Die Gleichung (101) ist allerdings nur exakt gültig für den Fall, dass der Strahl senkrecht auf die brechende Fläche trifft und die einfallende Wellenfront und die brechende Fläche rotationssymmetrisch sind. Aber auch für Abweichungen von diesen Voraussetzungen ist Gleichung (101) eine gute Näherung. Entsprechend ist dann Gleichung (103) eine gute Näherung bei Anwesenheit eines diffraktiven Gitters. Im Fall einer Wellenfrontdurchrechnung zweiter Ordnung (d.h. für $k = 2$) für ein nicht-rotationssymmetrisches diffraktives Gitter und bei einem senkrechten Strahleinfall kann dem diffraktiven Gitter eine vektorielle Größe $PK^{(2)}$ zugeordnet werden, so dass die entsprechende vektorielle BAD-Gleichung nur additiv um den vektoriellen Zusatzterm $PK^{(2)}$ erweitert werden muss, um die Vergenzen beim Wellenfrontdurchgang bei Anwesenheit eines nicht-rotationssymmetrischen diffraktiven Gitters korrekt zu beschreiben. In diesem Fall gilt

$$\mathbf{B} = \mathbf{A} + \mathbf{D} + \mathbf{PK}^{(2)}.\tag{104}$$

Wie nachfolgend im Detail dargelegt wird, kann jedem beliebigen, auch nicht-rotationssymmetrischen, diffraktiven Gitter auch unter beliebigen schiefwinkligen Strahleinfallbedingungen ebenfalls eine im Allgemeinen vektorielle Größe $\mathbf{PK}^{(k)}$ zugeordnet werden, so dass die entsprechende allgemeine BAD-Gleichung und die Gleichungen höherer Ordnung für die Wellfrontdurchrechnung durch refraktive Flächen im Wesentlichen nur additiv um den Zusatzterm $\mathbf{PK}^{(k)}$ ($\mathbf{PK}^{(2)},\mathbf{PK}^{(3)}\mathbf{PK}^{(4)}$, ...) erweitert werden müssen, um die Vergenzen beim Wellenfrontdurchgang bei Anwesenheit eines nicht-rotationssymmetrischen diffraktiven Gitter korrekt zu beschreiben.

Es ist ferner erkannt worden, dass die Komponenten des additiven Zusatzterms $\mathbf{PK}^{(k)}$ durch den Vektor der Ableitungen zweiter oder höherer Ordnung einer Phasenfunktion $\Psi(\overline{x},\overline{y})$ nach den Koordinaten $\overline{x},\overline{y}$ tangential zur brechenden Fläche (Grundfläche) beschrieben werden können. Für den additiven Zusatzterm zweiter Ordnung gilt z.B.:

$$\mathbf{PK}^{(2)} = -\begin{pmatrix} \Psi^{(2,0)}(0,0) \\ \Psi^{(1,1)}(0,0) \\ \Psi^{(0,2)}(0,0) \end{pmatrix} = -\begin{pmatrix} \partial^2\Psi(\overline{x},\overline{y})/\partial\overline{x}^2 \\ \partial^2\Psi(\overline{x},\overline{y})/\partial\overline{x}\partial\overline{y} \\ \partial^2\Psi(\overline{x},\overline{y})/\partial\overline{y}^2 \end{pmatrix}\Bigg|_{(\overline{x},\overline{y})=(0,0)}\tag{105}$$

Aus diesem Grunde wird der additive Zusatzterm zweiter Ordnung $\mathbf{PK}^{(2)}$ auch "Phasenkrümmung" genannt.

Die Phasenfunktion $\Psi(\overline{x},\overline{y})$ stellt die optische Pfadlängendifferenz (Optical Path Difference oder OPD), welche durch das diffraktive Gitter eingeführt wird, als Funktion der Koordinaten $\overline{x},\overline{y}$ tangential zur brechenden Fläche dar. Die Beschreibung eines diffraktiven Gitters durch die Phasenfunktion $\Psi(\overline{x},\overline{y})$ ermöglicht, den additiven Zusatzterm $\mathbf{PK}^{(k)}$ ($\mathbf{PK}^{(2)},\mathbf{PK}^{(3)},\mathbf{PK}^{(4)}$,...) konstruktiv zu bestimmen. Anders ausgedrückt wird vorgeschlagen, zur Beschreibung eines beliebigen diffraktiven Gitters eine Phasenfunktion $\Psi(\overline{x},\overline{y})$ zu verwenden, wobei der additive Zusatzterm $\mathbf{PK}^{(k)}$ ($\mathbf{PK}^{(2)},\mathbf{PK}^{(3)},\mathbf{PK}^{(4)}$,...) durch den Vektor der Ableitungen zweiter oder höheren Ordnung der Phasenfunktion nach den Koordinaten $\overline{x},\overline{y}$ tangential zur brechenden Fläche gegeben ist (vgl. Gleichung (105) für $k = 2$).

Tabelle 2 fasst die Gleichungen bzw. Wellenfrontgleichungen (in Powervektorform) für die Wellenfrontdurchrechnung bei dem Durchgang durch eine refraktive Grenzfläche (Grundfläche) zusammen, auf welcher zusätzlich ein phasenänderndes optisches Element aufgebracht ist. Tabellen 2A und 2B enthalten Erläuterungen zu den in der Tabelle 2 enthaltenen Gleichungen für die 2. Ordnung (Tabelle 2A) und für die dritte Ordnung (Tabelle 2B).

**Tabelle 2**

|  | senkrechter Einfall + Rotationssymmetrie | senkrechter Einfall ohne Rot.-Symmetrie | keine Symmetrie |
|---|---|---|---|
| 2.Ord. | $S^{(2)} = S^{(2)} + F^{(2)} - \Psi^{(2)}$ <br> alternative Schreibweise: | $\mathbf{S}^{(2)} = \mathbf{S}^{(2)} + \mathbf{F}^{(2)} - \Psi^{(2)}$ <br> alternative Schreibweise: | $\mathbf{T'}_2\,\mathbf{S'}^{(2)} = \mathbf{T}_2\mathbf{S}^{(2)} + v\mathbf{F}^{(2)} - \Psi^{(2)}$ <br> alternative Schreibweise: <br> $\mathbf{T'}_2\,\mathbf{S'}^{(2)} = \mathbf{T}_2\mathbf{S}^{(2)} + v\mathbf{F}^{(2)} + \mathbf{PK}^{(2)}$ |
|  | $S' = S + F + PK^{(2)}$ | $\mathbf{S'} = \mathbf{S} + \mathbf{F} + \mathbf{PK}^{(2)}$ |  |

(fortgesetzt)

|  |  | senkrechter Einfall + Rotationssymmetrie | senkrechter Einfall ohne Rot.-Symmetrie | keine Symmetrie |
|---|---|---|---|---|
|  |  | $B = A + D + PK^{(2)}$ | $\mathbf{B = A + D + PK}^{(2)}$ |  |
|  | 3.Ord. | $S'^{(3)} = S^{(3)} + F^{(3)} - \Psi^{(3)} + R_3(S^{(2)},F^{(2)})$ alternative Schreibweise: $PK^{(3)} = -\Psi^{(3)}$ | $\mathbf{S'}^{(3)} = \mathbf{S}^{(3)} + \mathbf{F}^{(3)} - \Psi^{(3)} + \mathbf{R}_3(\mathbf{S}^{(2)},\mathbf{F}^{(2)})$ alternative Schreibweise: $\mathbf{PK}^{(3)} = -\Psi^{(3)}$ | $\mathbf{T'}_3\,\mathbf{S'}^{(3)} = \mathbf{T}_3\mathbf{S}^{(3)} + v\mathbf{F}^{(3)} - \Psi^{(3)} + \mathbf{Q}_3(\mathbf{S}^{(2)},\mathbf{F}^{(2)})$ alternative Schreibweise: $\mathbf{PK}^{(3)} = -\Psi^{(3)}$ |
|  | 4.Ord. | $S'^{(4)} = S^{(4)} + F^{(4)} - \Psi^{(4)} + R_4(S^{(3)},F^{(3)},S^{(2)},F^{(2)})$ alternative Schreibweise: $PK^{(4)} = -\Psi^{(4)}$ | $\mathbf{S'}^{(4)} = \mathbf{S}^{(4)} + \mathbf{F}^{(4)} - \Psi^{(3)} + \mathbf{R}_4(\mathbf{S}^{(3)},\mathbf{F}^{(3)},\mathbf{S}^{(2)},\mathbf{F}^{(2)})$ alternative Schreibweise: $\mathbf{PK}^{(4)} = -\Psi^{(4)}$ | $\mathbf{T'}_4\mathbf{S'}^{(4)} = \mathbf{T}_4\mathbf{S}^{(4)} + v\mathbf{F}^{(4)} - \Psi^{(4)} + \mathbf{Q}_4(\mathbf{S}^{(3)},\mathbf{F}^{(3)},\mathbf{S}^{(2)},\mathbf{F}^{(2)})$ alternative Schreibweise $\mathbf{PK}^{(4)} = -\Psi^{(4)}$ |
|  | etc. |  |  |  |

**Tabelle 2A**

| | |
|---|---|
| $\Psi^{(2)} = \Psi^{(2)}(0)$ | zweite Ableitung der Phasenfunktion |
| $PK^{(2)} = -\Psi^{(2)}(0)$ | Phasenkrümmung, d.h. negative zweite Ableitung der Phasenfunktion |
| $\boldsymbol{\Psi}^{(2)} = \begin{pmatrix} \boldsymbol{\Psi}^{(2,0)}(0,0) \\ \boldsymbol{\Psi}^{(1,1)}(0,0) \\ \boldsymbol{\Psi}^{(0,2)}(0,0) \end{pmatrix}$ | Powervektor der zweiten Ableitungen der Phasenfunktion |
| $\mathbf{PK}^{(2)} = -\Psi^{(2)}(0,0)$ | Powervektor der Phasenkrümmung, d.h. der negativen zweiten Ableitungen der Phasenfunktion |

**Tabelle 2B**

| | |
|---|---|
| $\Psi^{(3)} = \Psi^{(3)}(0)$ | dritte Ableitung der Phasenfunktion |
| $PK^{(3)} = -\Psi^{(3)}(0)$ | Zusatzterm im Sinne der Erfindung, gegeben durch negative dritte Ableitung der Phasenfunktion |
| $\boldsymbol{\Psi}^{(3)} = \begin{pmatrix} \boldsymbol{\Psi}^{(3,0)}(0,0) \\ \boldsymbol{\Psi}^{(2,1)}(0,0) \\ \boldsymbol{\Psi}^{(1,2)}(0,0) \\ \boldsymbol{\Psi}^{(0,3)}(0,0) \end{pmatrix}$ | Powervektor der dritten Ableitungen der Phasenfunktion |
| $\mathbf{PK}^{(3)} = -\Psi^{(3)}(0,0)$ | Vektorieller Zusatzterm im Sinne der Erfindung, gegeben durch den Powervektor der negativen dritten Ableitungen der Phasenfunktion |

Die Gleichungen für die 4. Ordnung und für alle höheren Ordnungen sind analog aufgebaut.

Das Koordinatensystem $\bar{x},\bar{y},\bar{z}$ ist ein lokales Koordinatensystem, welches dazu dient, den Durchtritt eines Strahls durch eine Grenzfläche zu beschreiben, wobei am Durchstoßpunkt des Hauptstrahls mit der Grenzfläche $(\bar{x},\bar{y},\bar{z})=(0,0,0)$ gilt, und wobei die $\bar{z}$-Achse dort senkrecht zur Grundfläche steht. Eine spezielle mögliche Wahl eines solchen lokalen Systems besteht darin, zu fordern, dass der einfallende Strahl beispielsweise in der $\bar{x}$-$\bar{z}$-Ebene oder in der $\bar{y}$-$\bar{z}$-Ebene liegt. Im Allgemeinen muss jedoch diese Bedingung nicht notwendigerweise erfüllt sein. Die Verwendung von lokalen Koordinatensystemen ist z.B. aus WO 2008/089999 A1 bekannt und wird z.B. bei der Wellenfrontdurchrechnung 2.Ordnung durch Flächen ohne diffraktive Gitter verwendet. Typischerweise werden so viele lokale Systeme wie Hauptstrahlen gerechnet werden sollen verwendet. Darüber hinaus kann ein globales Koordinatensystem verwendet werden.

Ebenfalls ist erkannt worden, dass sich ein Zusammenhang herstellen lässt zwischen den Gitterlinien des diffraktiven optischen Elements bzw. des diffraktiven Gitters und der Phasenfunktion $\Psi(\bar{x},\bar{y})$, welche darauf beruht, dass die Gitterlinien auf Kurven mit $\Psi(\bar{x},\bar{y})=const.$ liegen. Die Bestimmung der Phasenfunktion $\Psi(\bar{x},\bar{y})$ anhand von Parametern des diffraktiven Gitters wird nachfolgend im Detail beschrieben.

Ferner ist erkannt worden, dass anders als bei der Brechung an einer rein refraktiven Grenzfläche (wie z.B. in WO 2008 089999 A1 beschrieben), der einfallende Hauptstrahl, der ausfallende Hauptstrahl und der Normalenvektor der brechenden Fläche bei Vorhandensein eines diffraktiven Gitters im Allgemeinen nicht mehr in ein- und derselben Ebene liegen müssen.

Im einfachsten Fall einer refraktiven, homogenen Grenzfläche zwischen zwei Medien mit den Brechungsindizes n und n' ohne diffraktive optische Elemente bzw. diffraktive Gitter wird die Strahlablenkung durch das Brechungsgesetz $n'\sin\varphi'-n\sin\varphi = 0$, wobei $\varphi$ der Einfallswinkel und $\varphi'$ der Ausfallswinkel ist, beschrieben.

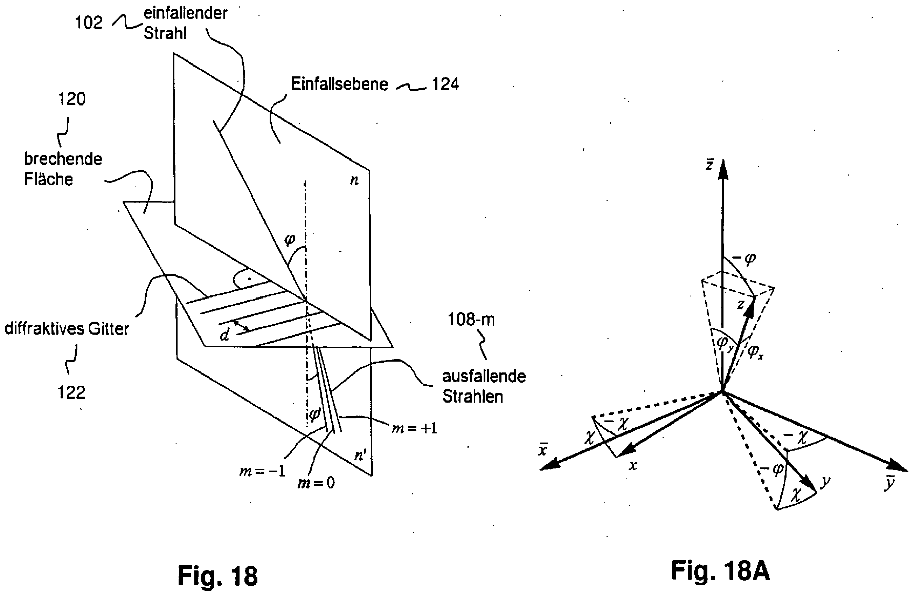

Fig. 18 illustriert schematisch den Strahlengang bei Beugung an einer Grenzfläche 120 mit einem diffraktiven Gitter 122 in einem speziellen einfachen Fall, in welchem es möglich ist, die Strahlablenkung durch ein geschlossenes Gesetz zu beschreiben. Dieses Gesetz lässt sich als eine Modifikation dieses Brechungsgesetzes auffassen. Dieser Fall ist dadurch gekennzeichnet, dass die brechende Fläche 120 eine Ebene ist und das diffraktive Gitter 122 eine Unregelmäßigkeit dieser Fläche 120 ist, welche senkrecht zur Einfallsebene 124 translationsinvariant ist und in Richtung der Brechungsebene (die Ebene der brechenden Fläche 120) äquidistant mit Periode $d$ ist (siehe **Fig. 18**). Die Unregelmäßigkeit kann z.B. ein Sägezahngitter sein, ein Rechteckgitter, ein Wechsel von lichtdurchlässigen und lichtundurchlässigen Zonen oder jede andere periodische Abweichung von der homogenen, ebenen, lichtdurchlässigen, brechenden Fläche. In diesem einfachen Fall wird ein einfallender monochromatischer Strahl 102, welcher zu Licht mit der Wellenlänge $\lambda$ gehört, durch Beugung in viele Einzelstrahlen 108-m, welche zu den verschiedenen Beugungsordnungen m , $m=...,-2,-1,0,1,2,...$ gehören, aufgespalten. Die Beugungsordnung m kann beliebig aber fest gewählt werden und nachfolgend kann die Situation für den einen Strahl zur Beugungsordnung $m$ isoliert, d.h. ungeachtet der möglichen anderen Beugungsordnungen, beschrieben werden. Für einen Strahl zur Beugungsordnung $m$ gilt dann das modifizierte Brechungsgesetz $n'\sin\varphi'-n\sin\varphi=m\lambda/d$, wobei n und n' jeweils den Brechungsindex des Materials vor und nach der Grenzfläche 120 bezeichnen und $\varphi$ der Einfallswinkel und $\varphi'$ der Ausfallswinkel ist.

Für jeden allgemeineren Fall, z.B. bei schräg zu den Gitterlinien einfallenden Strahlen, bei einem nicht äquidistanten Gitter und/oder bei einem Gitter mit gekrümmten Gitterlinien und/oder bei einer gekrümmten Fläche sind bisher keine umfassenden Gesetze für die Strahlablenkung und Wellenfrontrechnung bekannt. Um ein optisches Element mit beliebigen, insbesondere asphärischen Flächen und zumindest einem diffraktiven Gitter in Gebrauchsstellung unter Berücksichtigung der Abbildungsfehler 2.Ordnung (z.B. Brechkraft und Astigmatismus) und gegebenenfalls der Abbildungsfehler höherer Ordnung (z.B. Koma oder sphärische Aberration) berechnen oder optimieren zu können, ist es jedoch vorteilhaft, eine genaue Wellenfrontdurchrechnung auch für den allgemeinen Fall durchführen zu können.

Nachfolgend werden die Grundsätze der Strahl- und Wellenfrontdurchrechnung in dem allgemeinen Fall eines optischen Elements bzw. eines optischen Systems (z.B. eines Brillenglases) mit einem diffraktiven Gitter näher beschrieben.

**Koordinatensysteme**

Zunächst werden Größen eingeführt, welche eine Grenzfläche einschließlich zumindest eines diffraktiven Gitters möglichst allgemein beschreiben können. Hierzu werden - in Analogie zum Fall rein refraktiver Flächen - grundsätzlich zwei Arten von Koordinaten bzw. Koordinatensystemen verwendet.

Die eine Art sind globale Koordinaten $\bar{x}^0,\bar{y}^0,\bar{z}^0$, welche dazu dienen, die Grundfläche (d.h. die rein refraktive Fläche ohne das diffraktive Gitter durch ihre Pfeilhöhe $\bar{z}^0(\bar{x}^0,\bar{y}^0)$ zu beschreiben. Hierbei wird die gegebenenfalls vorhandene Pfeilhöhe des diffraktiven Gitters nicht zur Pfeilhöhe der Grundfläche hinzugerechnet. Stattdessen wird das diffraktive Gitter selbst durch eine separate Eigenschaft $h(\bar{x}^0,\bar{y}^0)$ beschrieben. Hierbei kann $h(\bar{x}^0,\bar{y}^0)$ die Rolle einer zusätzlichen Pfeilhöhe spielen, so dass die wahre (mikroskopische) physikalische Pfeilhöhe der Grenzfläche durch

$$\bar{z}_{\mathrm{m}}^{0}(\bar{x}^{0},\bar{y}^{0}) = \bar{z}^{0}(\bar{x}^{0},\bar{y}^{0}) + h(\bar{x}^{0},\bar{y}^{0})$$ gegeben ist. Es ist jedoch möglich, dass $h(\bar{x}^0,\bar{y}^0)$ die Rolle einer Transmissionseigenschaft oder einer sonstigen Eigenschaft des POE spielt.

Die andere Art von Koordinaten sind - wie oben beschrieben - lokale Koordinaten $\bar{x},\bar{y},\bar{z}$, welche dazu dienen, den Hindurchtritt eines Strahls durch die Grenzfläche so zu beschreiben, dass am Durchstoßpunkt $(\bar{x},\bar{y},\bar{z})=(0,0,0)$ gilt, und dass die $\bar{z}$-Achse dort senkrecht zur Grundfläche steht. Eine spezielle mögliche Wahl eines solchen lokalen Systems besteht darin zu fordern, dass der einfallende Strahl in beispielsweise der $\bar{x}$-$\bar{z}$-Ebene oder der $\bar{y}$-$\bar{z}$-Ebene liegt. Im Allgemeinen muss jedoch diese Bedingung nicht notwendigerweise erfüllt sein. Die Verwendung von lokalen Systemen ist z.B. aus WO 2008/089999 A1 bekannt und wird z.B. bei der Wellenfrontdurchrechnung 2.Ordnung durch Flächen ohne diffraktives Gitter verwendet. Typischerweise wird nur ein globales Koordinatensystem, aber so viele lokale Systeme wie Strahlen gerechnet werden sollen, verwendet.

**Fig. 18A** stellt die Lage des Koordinatensystems $\bar{x},\bar{y},\bar{z}$ der einfallenden Wellenfront bezüglich des Koordinatensystems $x,y,z$ der brechenden Fläche (Grundfläche) dar, ausgedrückt durch die Winkel $\varphi_x,\varphi_y,\varphi$ und $x$.

In Fig. 18A sind der Einfachheit halber lediglich das Koordinatensystem der einfallenden Wellenfront und das Koordinatensystem der brechenden Fläche gezeigt. Das Koordinatensystem $x',y',z'$ der ausfallenden Wellenfront kann analog zu dem Koordinatensystem der einfallenden Wellenfront vorgegeben werden. Des Weiteren wird auf Fig. 1 in der Publikation [G. Esser, W. Becken, W. Müller, P. Baumbach, J. Arasa, und D. Uttenweiler, "Derivation of the refraction equations for higher-order aberrations of local wavefronts at oblique incidence", JOSA. A, Vol. 27, Nr. 2, Februar 2010, Seiten 218 - 237] verweisen, welche eine zweidimensionale Darstellung der entsprechenden gegenseitigen Lage für alle drei Koordinatensysteme zeigt.

**Beschreibung eines diffraktiven Gitters durch die Phasenfunktion** $\Psi(\bar{x},\bar{y})$

Die Phasenfunktion $\Psi(\bar{x},\bar{y})$ stellt die optische Pfadlängendifferenz (Optical Path Difference oder OPD), welche durch das diffraktive Gitter eingeführt wird, als Funktion der Koordinaten $\bar{x},\bar{y}$ tangential zur brechenden Fläche (Grundfläche) dar. Die Phasenfunktion $\Psi(\bar{x},\bar{y})$ kann anhand der Gitterlinien bestimmt werden. Umgekehrt ist es möglich bei einer vorgegebenen Phasenfunktion die Gitterlinien des entsprechenden diffraktiven Gitters zu bestimmen.

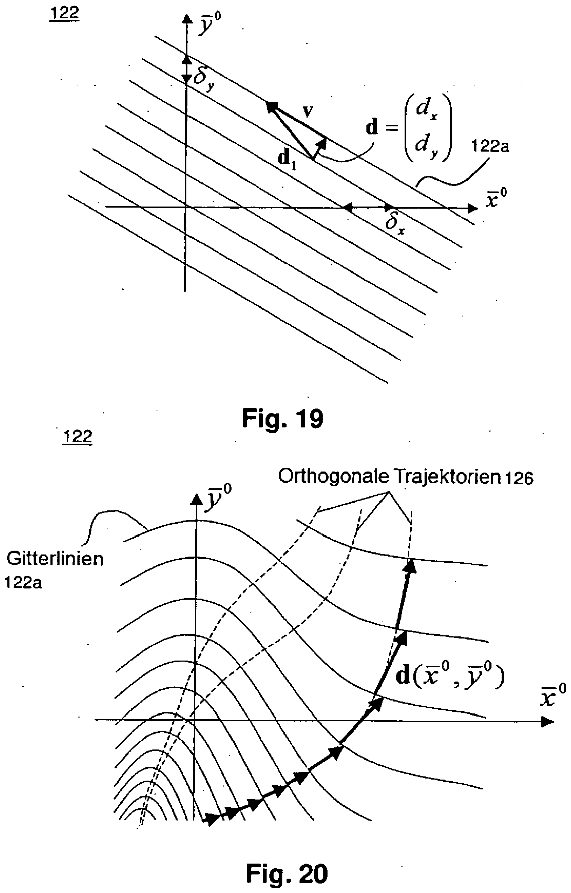

Im einfachsten Fall eines konstanten, äquidistanten diffraktiven Gitters 122 auf einer ebenen Fläche 120 (siehe z.B. **Fig. 18** und **Fig. 19**), die in globalen Koordinaten durch $\bar{z}^0(\bar{x}0,\bar{y}^0)=a_x\bar{x}^0+a_y\bar{y}^0+t$ beschrieben wird, kann zwischen einem einfach-periodischen und einem doppelt-periodischen Gitter unterschieden werden.

Beim einfach-periodischen Gitter gibt es einen Periodenvektor $\mathbf{d}_1$, so dass für alle Punkte $\bar{r}^0=(\bar{x}^0,\bar{y}^0)$

$$h(\bar{\mathbf{r}}^0 + \mathbf{d}_1) = h(\bar{\mathbf{r}}^0) \qquad (106a)$$

gilt. Ferner gibt es eine Richtung mit Translationsinvarianz, d.h. einen Vektor v mit

$$h(\bar{\mathbf{r}}^0 + \alpha\mathbf{v}) = h(\bar{\mathbf{r}}^0) \qquad (106b)$$

für alle $\alpha$.

In einem solchen Fall zeigen die Gitterlinien 112a in die Richtung von v, dagegen muss $\mathbf{d}_1$ nicht unbedingt den Abstand zwischen den Gitterlinien 122a beschreiben, weil $\mathbf{d}_1$ nicht notwendigerweise senkrecht auf v stehen muss. In einem solchen Fall kann der Vektor d, durch den Vektor mit den Komponenten $\mathbf{d} = \begin{pmatrix} d_x \\ d_y \end{pmatrix}$ ersetzt werden, welcher durch

$$\mathbf{d} = \mathbf{d}_1 - (\mathbf{d}_1 \cdot \mathbf{v})\mathbf{v} \qquad (107)$$

definiert ist.

Dieser Vektor d steht senkrecht auf **v** und es gilt ferner

$$\begin{aligned} h(\bar{\mathbf{r}}^0 + \mathbf{d}) &= h\big(\bar{\mathbf{r}}^0 + \mathbf{d}_1 - (\mathbf{d}_1 \cdot \mathbf{v})\mathbf{v}\big) \\ &= h\big(\bar{\mathbf{r}}^0 + \mathbf{d}_1 - \alpha\mathbf{v}\big) \\ &= h\big(\bar{\mathbf{r}}^0 + \mathbf{d}_1\big) \\ &= h\big(\bar{\mathbf{r}}^0\big) \end{aligned} \qquad (108)$$

so dass auch der Vektor **d** ein Periodenvektor ist. Der Vektor **d** gibt jedoch im Gegensatz zu $\mathbf{d}_1$ auch den Abstand

zwischen zwei Gitterlinien an (siehe **Fig. 19**). Die Gitterperiode ist dann durch den Betrag $d=|\mathbf{d}|$ gegeben.

Bei einem einfach-periodischen Gitter 122, wie z.B. in Fig. 19 gezeigt, existieren ferner noch zwei weitere Periodenvektoren von praktischer Bedeutung. Diese hängen vom Koordinatensystem ab und sind durch die Vektoren

$$\boldsymbol{\delta}_x = \begin{pmatrix} \delta_x \\ 0 \end{pmatrix}, \quad \boldsymbol{\delta}_y = \begin{pmatrix} 0 \\ \delta_y \end{pmatrix}, \tag{109}$$

die in Richtung der Koordinatenachsen zeigen, gegeben (siehe Fig. 19). Der Zusammenhang zwischen d und den Vektoren $\delta_x, \delta_y$ ist durch:

$$\delta_x = \frac{|\mathbf{d}|^2}{d_x}, \quad \delta_y = \frac{|\mathbf{d}|^2}{d_y}, \tag{110a}$$

sowie

$$d_x = \frac{\delta_x \delta_y^2}{\delta_x^2 + \delta_y^2}, \quad d_y = \frac{\delta_y \delta_x^2}{\delta_x^2 + \delta_y^2} \tag{110b}$$

gegeben.

Bei einem doppelt-periodischen Gitter 122 - existieren zwei Periodenvektoren $\mathbf{d}_1, \mathbf{d}_2$ mit

$$h(\overline{\mathbf{r}}^0 + \mathbf{d}_1) = h(\overline{\mathbf{r}}_S)$$
$$h(\overline{\mathbf{r}}^0 + \mathbf{d}_2) = h(\overline{\mathbf{r}}_S) \tag{111}$$

Doppelt-periodisch in diesem Sinne bedeutet, dass es in keiner Richtung eine Translationsinvarianz gibt, d.h. es gibt keinen Vektor v mit $h(\overline{\mathbf{r}}^0 + \alpha\mathbf{v}) = h(\overline{\mathbf{r}}_S)$ für alle $\alpha$.

Aus Betrachtungen der Wellenoptik ergibt sich, dass eine ebene monochromatische Welle der Wellenlänge $\lambda$, die schräg auf ein einfach- oder doppelt-periodisches Gitter fällt, auf der ausfallenden Seite durch Interferenz zu einer richtungsabhängigen Intensitätsverteilung führt. Diese Verteilung lässt sich als Produkt aus zwei richtungsabhängigen Faktoren darstellen, wobei der eine Faktor (der Formfaktor) nur durch die Form des diffraktiven Gitters innerhalb einer Gitterperiode bestimmt wird, und der zweite Faktor (der Gitter- bzw. Beugungsfaktor) nur durch die Gitterperiodizität bestimmt wird. Der zweite Faktor nimmt ein Maximum in jeder einer solchen Richtung an, in der der Gangunterschied zwischen zwei Stellen des Wellenfeldes auf der Grenzfläche, die um eine Gitterperiode versetzt liegen, ein ganzzahliges Vielfaches der Wellenlänge des Lichts auf der ausfallenden Seite beträgt.

Wird im Bild der geometrischen Strahlenoptik dem einfallenden Wellenfeld der Richtungsvektor

$$\mathbf{N} = \begin{pmatrix} \sin\varphi_x \\ \sin\varphi_y \\ \sqrt{1 - \sin^2\varphi_x - \sin^2\varphi_y} \end{pmatrix} \tag{112a}$$

zugeordnet und auf der ausfallenden Seite einer jeder Richtung, in der ein Maximum des Gitterfaktors liegt, ein Richtungsvektor der Form

$$\mathbf{N'} = \begin{pmatrix} \sin\varphi'_x \\ \sin\varphi'_y \\ \sqrt{1 - \sin^2\varphi'_x - \sin^2\varphi'_y} \end{pmatrix} \tag{112b}$$

zugeordnet, dann werden die Strahlen durch die Gesetze

$$n'\sin\varphi'_x - n\sin\varphi_x = \frac{m_x\lambda}{\delta_x}$$

$$\tag{113}$$

$$n'\sin\varphi'_y - n\sin\varphi_y = \frac{m_y\lambda}{\delta_y}$$

beschrieben, wobei $m_x = ..., -3, -2, -1, 0, 1, 2, 3, ...$ und $m_y = ..., -3, -2, -1, 0, 1, 2, 3, ...$ ganze Zahlen sind. Die Gesetze (113) können als die erweiterten Brechungsgesetze bei Anwesenheit eines diffraktiven Gitters betrachtet werden.

Insbesondere beschreibt der Fall $m_x = 0, m_y = 0$, d.h. die nullte Beugungsordnung, die Situation ohne diffraktive Elemente.

Bei einem doppelt-periodischen diffraktiven Element kommen alle ganzen Zahlen $m_x, m_y$ unabhängig voneinander vor. Bei einem einfach-periodischen Gitter kommen nur beitragsgleiche Beugungsordnungen $m_x = \sigma \cdot m_y$ vor, wobei $\sigma = +1$ für den Fall gilt, dass die Gitterlinien für zunehmende Werte von $\bar{x}^0$ fallen (wie in **Fig. 19**, $\partial\bar{y}^0/\partial\bar{x}^0 < 0$) und $\sigma = -1$ für den Fall steigender Gitterlinien gilt ($\partial\bar{y}^0/\partial\bar{x}^0 > 0$).

Nachfolgend werden einfach-periodische, diffraktiven Gitter ($m := m_x = \sigma \cdot m_y$) betrachtet. Alle Berechnungen können jedoch ebenfalls für den Fall von doppelt-periodischen diffraktiven Gittern entsprechend modifiziert werden.

Die Gleichung (113) mit $m := m_x = \sigma \cdot m_y$ auf der rechten Seite lässt sich so interpretieren, dass zwei Strahlen, die an zwei benachbarten Gitterlinien gebrochen werden, einen nichtverschwindenden Gangunterschied besitzen, d.h. eine Phasendifferenz, die proportional zu m und proportional zu $\lambda$ ist. Somit gibt es zwei Möglichkeiten, den Verlauf der Gitterlinien zu charakterisieren, nämlich zum einen durch die (z.B. mit einem Mikroskop) messbaren, auf dem Vektor **d** basierenden Gittereigenschaften und zum anderen durch die abstrakte Eigenschaft, in den Strahlengang einen zusätzlichen ortsabhängigen Gangunterschied einzuführen. Im zweiten Fall wird der Verlauf der Gitterlinien durch die Differenz zwischen den Werten einer Phasenfunktion $\Psi^0(\bar{x}^0, \bar{y}^0; \lambda, m)$ bestimmt, welche außer von den Koordinaten $\bar{x}^0, \bar{y}^0$ auch noch von der Wellenlänge $\lambda$ und der Beugungsordnung $m$ abhängt. Da diese Phasenfunktion in jedem Fall proportional zu $\lambda$ und $m$ ist, können diese Faktoren abgespalten werden. Statt der Phasenfunktion $\Psi^0(\bar{x}^0, \bar{y}^0; \lambda, m)$ kann die phasenfunktion $\psi^0(\bar{x}^0, \bar{y}^0)$ verwendet werden, wobei

$$\Psi^0(\bar{x}^0, \bar{y}^0; \lambda, m) = m\lambda \cdot \psi^0(\bar{x}^0, \bar{y}^0). \tag{114}$$

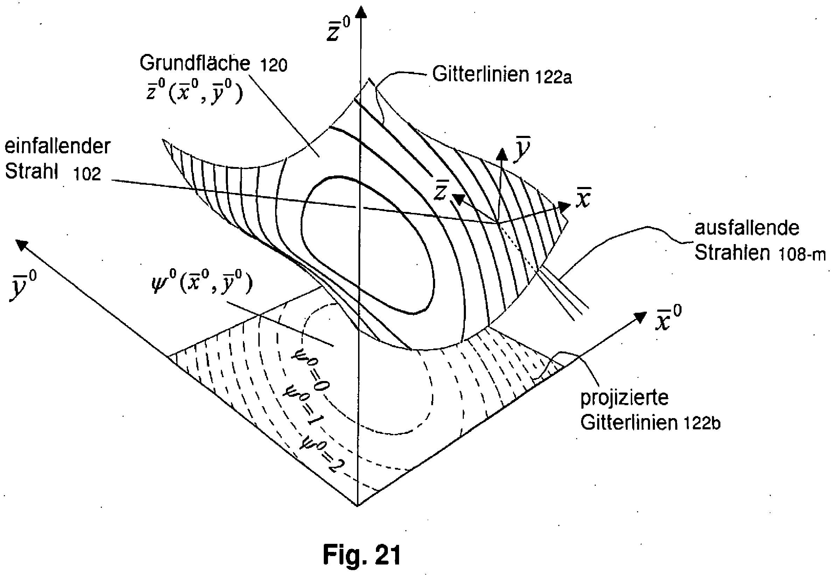

Fig. 20 zeigt Gitterlinien eines diffraktiven Gitters 122 auf einer ebenen Grenzfläche 120 und Fig. 21 zeigt Gitterlinien eines diffraktiven Gitters 122 auf einer gekrümmten Grenzfläche 122.

Außer im einfachsten Fall eines konstanten, äquidistanten Gittes auf einer ebenen Fläche verlaufen im allgemeinen Fall die Gitterlinien an jeder Stelle eines optischen Elements in einer anderen Richtung, wie z.B. in **Fig. 20** und **Fig. 21** gezeigt. Darüber hinaus ist im Allgemeinen ihr Abstand an jeder Stelle verschieden (siehe z.B. **Fig. 20**). Eine strenge Periodizität liegt dann im Grunde nicht mehr vor. Der Periodenvektor **d** kann folglich nicht mehr definiert werden. Es wird daher vorgeschlagen, den Periodenvektor **d** durch eine koordinatenabhängige Funktion $\mathbf{d}(\bar{x}^0, \bar{y}^0)$ oder, anders ausgedrückt, durch ein Vektorfeld $\mathbf{d}(\bar{x}^0, \bar{y}^0)$ zu ersetzen, welches als das Tangentialvektorfeld zu den Trajektorien 126, die orthogonal auf den Gitterlinien 122a stehen, definiert ist.

Zusätzlich muss im allgemeinen Fall einer gekrümmten Grundfläche 120, wie in **Fig. 21** gezeigt, berücksichtigt werden, dass das Gitter 122 zwar einerseits in globalen Koordinaten $\bar{x}^0, \bar{y}^0$ spezifiziert ist, andererseits jedoch für die Auswirkung auf den Strahldurchgang lokale Eigenschaften relevant sind, wie z.B. der lokale Gitterabstand, den das Gitter 122 entlang der verkippten Achsen eines lokalen Koordinatensystems $\bar{x}, \bar{y}$ aufweist.

Anstelle von $\mathbf{d}(\overline{x}^0,\overline{y}^0)$ lässt sich die Auswirkung des Gitters 122 auch in diesem allgemeinen Fall durch die Phasenfunktion $\psi^0(\overline{x}^0,\overline{y}^0)$ beschreiben.

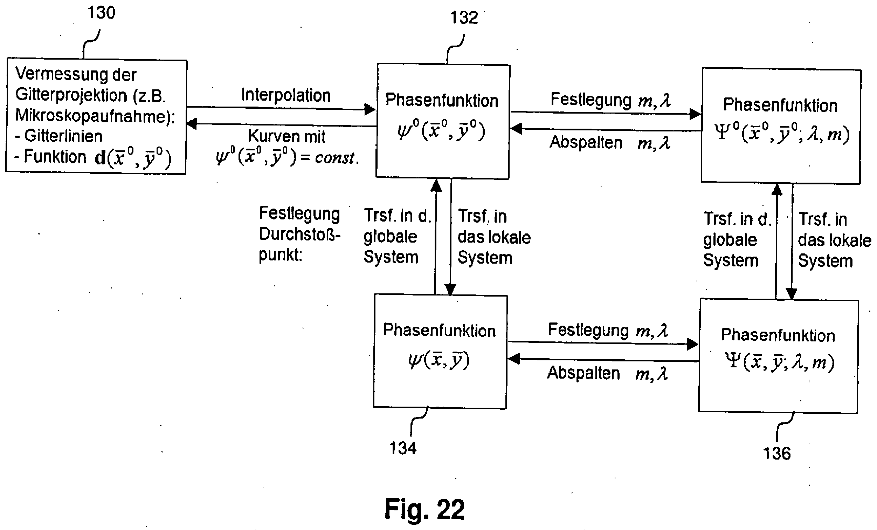

Die Phasenfunktion eines diffraktiven Gitters $\psi^0(\overline{x}^0,y^0)$ ist zur Wellenfrontdurchrechnung geeigneter als das Vektorfeld $\mathbf{d}(\overline{x}^0,\overline{y}^0)$, jedoch ist sie nicht unmittelbar messbar. Um eine auf der Phasenfunktion $\psi^0(\overline{x}^o,\overline{y}^0)1°)$ basierende Wellenfrontrechnung durchzuführen, wird daher ein Verfahren zum Bestimmen des Übergangs zwischen den Funktionen $\mathbf{d}(\overline{x}^0,\overline{y}^0)$, und $\psi^0(\overline{x}^0,\overline{y}^0)$ in beiden Richtungen (d.h. $\mathbf{d}(\overline{x}^0,\overline{y}^0)\leftrightarrow\psi(\overline{x}^0,\overline{y}^0))$ vorgeschlagen. Das in Fig. 22 gezeigte Abtaufschema illustriert den Übergang zwischen dem Vektorfeld $\mathbf{d}(\overline{x}^0,\overline{y}^0)$ und der Phasenfunktion $\psi^0(\overline{x}^0,\overline{y}^0)$.

Insbesondere kann bei vorgegebenem Gitter, welches z.B. durch eine Vermessung (siehe Block 130 in Fig. 22) der Mikroskopaufnahme einer Gitterprojektion oder durch eine Projektion einer anderen messbaren Eigenschaft des Gitters (z.B. einer Transmissionseigenschaft) bekannt sein kann, die Phasenfunktion $\psi^0(\overline{x}^0,\overline{y}^0)$ im globalen Koordi-natensystem dadurch erhalten werden (siehe Block 132 in Fig. 22), dass die Gitterlinien durchgezählt und als Kurven $\psi^0(\overline{x}^0,\overline{y}^0)=const.$ aufgefasst werden. Für die Kurven werden nacheinander die Werte $\psi^0(\overline{x}^0,\overline{y}^0)=0$, $\psi^0(\overline{x}^0,\overline{y}^0)=1$, $\psi^0(\overline{x}^0,\overline{y}^0)=2$, etc., angenommen (siehe **Fig. 22**). Für alle Punkte $(\overline{x}^0,\overline{y}^0)$, welche nicht auf sondern zwischen den Gitterlinien liegen, können die Werte der Phasenfunktion durch geeignete Interpolation ermittelt werden. Ist umgekehrt die Phasen-funktion $\psi^0(\overline{x}^0,\overline{y}^0)$ bekannt, so können die Gitterlinien durch Berechnung der Kurven $\psi^0(\overline{x}^0,\overline{y}^0)=const.$ mit $\psi^0(\overline{x}^0,\overline{y}^0)=0$, $\psi^0(\overline{x}^0,\overline{y}^0)=1$, $\psi^0(\overline{x}^0,\overline{y}^0)=2$, etc. ermittelt werden.

Diejenige Phasenfunktion, die für die lokale Strahldurchrechnung relevant ist, ist nach Festlegung eines lokalen Koordinatensystems $(\overline{x},\overline{y},\overline{z})$ die Funktion

$$\psi(\overline{x},\overline{y}) = \psi^0\left(\overline{x}^0(\overline{x},\overline{y}),\overline{y}^0(\overline{x},\overline{y})\right), \qquad (115)$$

(siehe Block 134 in Fig. 22), wobei sich die Zusammenhänge $\overline{x}^0(\overline{x},\overline{y})$, $y^0(\overline{x},\overline{y})$ aus der Transformation vom globalen Koordinatensystem in das lokale Koordinatensystem (für dem jeweiligen Durchstoßpunkt) ergeben. Durch die Festlegung (siehe Block 136 in Fig. 22)

$$\Psi(\overline{x},\overline{y};\lambda,m) = m\lambda \cdot \psi(\overline{x},\overline{y}) \qquad (116)$$

analog zu der Gleichung (114) kann schließlich die lokale Phasenfunktion unter Einbeziehung der Beugungsordnung und der Wellenlänge erhalten werden.

**Wellenfrontdurchrechnung im Fall eines optischen Elements/Systems umfassend zumindest ein diffraktives Gitter**

Eigenschaften erster Ordnung (Strahlablenkung)

Eine Wellenfrontdurchrechnung ergibt für die Durchrechnung von Strahlen, die im lokalen System durch die Vektoren **N,N**' (vgl. Gleichungen (112a) und (112b)) beschrieben werden, die Gesetze für die Strahlablenkung

$$n'\sin\varphi'_x - n\sin\varphi_x = \frac{\partial}{\partial\overline{x}}\Psi(\overline{x},\overline{y};\lambda,m)$$

$$n'\sin\varphi'_y - n\sin\varphi_y = \frac{\partial}{\partial\overline{y}}\Psi(\overline{x},\overline{y};\lambda,m). \qquad (117)$$

Beispiel 1:

Im einfachsten Fall eines konstanten äquidistanten Gitters auf einer ebenen Fläche, das z.B. Fig. 19 entspricht, ist im globalen System die Phasenfunktion durch

$$\psi^0(\bar{x}^0, \bar{y}^0) = \frac{\bar{x}^0}{\delta_x} + \frac{\bar{y}^0}{\delta_y} + \psi_0 \qquad (118)$$

gegeben, wobei $\psi_0$ eine Konstante ist. Da die Grundfläche eben ist, kann das lokale System identisch mit dem globalen System gewählt werden, so dass $\psi(\bar{x}, \bar{y}) = \psi^0(\bar{x}, \bar{y})$ ist. Da in diesem Fall

$$\frac{\partial}{\partial \bar{x}} \Psi(\bar{x}, \bar{y}; \lambda, m) = \frac{m\lambda}{\delta_x}$$

$$\frac{\partial}{\partial \bar{y}} \Psi(\bar{x}, \bar{y}; \lambda, m) = \frac{m\lambda}{\delta_y} \qquad (119)$$

gilt, führt Gleichung (117) genau zu dem Spezialfall der Gleichung (113).

Beispiel 2:

Ist bei einem beliebigen Gitter das lokale System $\bar{x}, \bar{y}, \bar{z}$ am Durchstoßpunkt so gewählt, dass der einfallende Strahl in der $\bar{y}\text{-}\bar{z}$-Ebene liegt, dann ist $\varphi_x = 0$. Wenn die Phasenfunktion in diesem lokalen System durch $\Psi(\bar{x}, \bar{y}; \lambda, m)$ gegeben ist, dann lauten die Gesetze für die Strahlablenkung nach Gleichung (117)

$$n'\sin \varphi'_x = \frac{\partial}{\partial \bar{x}} \Psi(\bar{x}, \bar{y}; \lambda, m)$$

$$n'\sin \varphi'_y - n\sin \varphi_y = \frac{\partial}{\partial \bar{y}} \Psi(\bar{x}, \bar{y}; \lambda, m). \qquad (120)$$

Wenn $\partial\Psi(\bar{x}, \bar{y}; \lambda, m)/\partial\bar{x} \neq 0$, ist auch $\varphi'_x \neq 0$. Dies bedeutet, dass - falls die Gitterlinien nicht senkrecht auf der Einfallsebene stehen - eine seitliche Strahlablenkung stattfindet und dass die Ausfallsebene nicht mit der Einfallsebene zusammenfällt (anders als im Fall reiner Brechung). Ist umgekehrt $\partial\Psi(\bar{x}, \bar{y}; \lambda, m)/\partial\bar{x} = 0$, dann ist $\varphi'_x = 0$ und die Strahlablenkung findet ausschließlich in der $\bar{y}\text{-}\bar{z}$-Ebene statt.

Eigenschaften zweiter Ordnung (Krümmungseigenschaften der Wellenfront)

Um Wellenfronteigenschaften zu beschreiben, wird vorgeschlagen, zuerst die Strahldurchrechnung ("ray tracing") eines Hauptstrahls, welcher durch eine Bewertungsstelle des optischen Element verläuft, durchzuführen. Der Hauptstrahl unterscheidet sich somit von etwaigen Nachbarstrahlen, welche abseits der Bewertungsstelle verlaufen. Ein Hauptstrahl ist im beispielhaften Fall eines Brillenglases insbesondere ein Lichtstahl, welcher ausgehend vom Objektpunkt durch die Mitte der Eintrittspupille verläuft. Die Eintrittspupille fällt bei Blickbewegungen mit dem Augendrehpunkt und nicht notwendigerweise mit der physikalischen Pupille des Auges zusammen. Die Winkel $\varphi_x$, $\varphi_y$, $\varphi'_x$, $\varphi'_y$ und damit die Vektoren **N,N'** in Gleichungen (112a) und (112b) sind nach diesem Schritt bekannt.

Zusätzlich wird vorgeschlagen, außer einem lokalen Koordinatensystem, das zur Beschreibung der Grundfläche dient und in dem auch der einfallende und der ausfallende Strahl beschrieben werden, noch weitere Koordinatensysteme einzuführen.

Das Koordinatensystem $(x,y,z)$ dient dazu, die einfallende Wellenfront zu beschreiben und ist so gerichtet, dass die $z$-Achse in Lichtrichtung entlang der einfallenden Strahlrichtung N gerichtet ist und der Ursprung $(x, y, z)=(0,0,0)$ mit dem Punkt $(\bar{x}, \bar{y}, \bar{z})=(0,0,0)$ zusammenfällt.

Das Koordinatensystem $(x',y',z')$ dient dazu, die ausfallende Wellenfront zu beschreiben und ist so gerichtet, dass die $z'$-Achse in Lichtrichtung entlang der ausfallenden Strahlrichtung N' gerichtet ist und der Ursprung $(x',y',z') = (0,0,0)$ ebenfalls mit dem Punkt $(\bar{x}, \bar{y}, \bar{z}) = (0,0,0)$ zusammenfällt.

Die Koordinaten eines räumlichen Vektors können entweder durch die Größe **v**$=(v_x, v_y, v_z)$ im Koordinatensystem

$(x,y,z)$, durch die Größe $\mathbf{v}'=(v'_x,v'_y,v'_z)$ im Koordinatensystem $(x',y',z')$ oder durch die Größe $\overline{\mathbf{v}}=(\overline{v}_x,\overline{v}_y,\overline{v}_z)$ im Koordina-tensystem $(\overline{x},\overline{y},\overline{z})$ beschrieben werden. Die gegenseitige Lage der Koordinatensysteme ist abhängig von den Strahlen und ist nur bis auf die Freiheitsgrade festgelegt, die einer Rotation des Systems $(x,y,z)$ um den einfallenden Strahl und einer zweiten unabhängigen Rotation des Systems $(x',y',z')$ um den ausfallenden Strahl entspricht.

Vorzugsweise wird die gegenseitige Lage der Koordinatensysteme durch

$$\mathbf{v} = \mathbf{R} \cdot \overline{\mathbf{v}} \qquad\qquad \mathbf{v}' = \mathbf{R}' \cdot \overline{\mathbf{v}}$$
$$\mathbf{R} = \mathbf{R}_z(\chi)\mathbf{R}_x(\varphi)\mathbf{R}_z(-\chi) \qquad\qquad \mathbf{R}' = \mathbf{R}_z(\chi')\mathbf{R}_x(\varphi')\mathbf{R}_z(-\chi') \qquad (121)$$

festgelegt, wobei

$$\mathbf{R}_x(\varepsilon) = \begin{pmatrix} 1 & 0 & 0 \\ 0 & \cos\varepsilon & -\sin\varepsilon \\ 0 & \sin\varepsilon & \cos\varepsilon \end{pmatrix},$$

$$\mathbf{R}_y(\varepsilon) = \begin{pmatrix} \cos\varepsilon & 0 & \sin\varepsilon \\ 0 & 1 & 0 \\ -\sin\varepsilon & 0 & \cos\varepsilon \end{pmatrix}, \qquad\qquad (122)$$

$$\mathbf{R}_z(\varepsilon) = \begin{pmatrix} \cos\varepsilon & -\sin\varepsilon & 0 \\ \sin\varepsilon & \cos\varepsilon & 0 \\ 0 & 0 & 1 \end{pmatrix}.$$

Die Hilfswinkel $\varphi$, $\varphi'$, $\chi$, $\chi'$ in Gleichung (121) müssen durch die vor der Wellenfrontdurchrechnung bekannten Größen $\varphi_x$, $\varphi_y$, $\varphi'_x$, $\varphi'_y$ ausgedrückt werden. Die Matrizen R, **R'** sind so konstruiert, dass $\varphi$, $\varphi'$ die Ein- und Ausfallswinkel gegen die Flächennormale sind und es gilt

$$\cos\varphi = \sqrt{1-\sin^2\varphi_x-\sin^2\varphi_y} \qquad\qquad \cos\varphi' = \sqrt{1-\sin^2\varphi'_x-\sin^2\varphi'_y}$$
$$\sin\varphi = \sqrt{\sin^2\varphi_x+\sin^2\varphi_y} \qquad,\qquad \sin\varphi' = \sqrt{\sin^2\varphi'_x+\sin^2\varphi'_y} \quad, \quad (123)$$

sowie

$$\sin\chi = \frac{-\sin\varphi_x}{\sqrt{\sin^2\varphi_x+\sin^2\varphi_y}} \qquad\qquad \sin\chi' = \frac{-\sin\varphi'_x}{\sqrt{\sin^2\varphi'_x+\sin^2\varphi'_y}}$$
$$\cos\chi = \frac{\sin\varphi_y}{\sqrt{\sin^2\varphi_x+\sin^2\varphi_y}} \qquad\qquad \cos\chi' = \frac{\sin\varphi'_y}{\sqrt{\sin^2\varphi'_x+\sin^2\varphi'_y}} \qquad (124)$$

Aus den obigen Gleichungen (123) und (124) folgt, dass

$$\tan\chi = -\frac{\sin\varphi_x}{\sin\varphi_y}, \qquad\qquad \tan\chi' = -\frac{\sin\varphi'_x}{\sin\varphi'_y}. \qquad (126)$$

Ist die einfallende Wellenfront im lokalen Koordinatensystem $(x,y,z)$ durch $W_{In}(x,y)$, die brechende Grundfläche im System $(\bar{x},\bar{y},\bar{z})$ durch $\bar{S}(\bar{x},\bar{y})$ sowie die gesuchte ausfallende Wellenfront im System $(x',y',z')$ durch $W'_{Out}(x',y')$ gegeben, dann beschreiben die nachfolgenden Formeln (127) und (128) die Abhängigkeit der zweiten lokalen Ableitungen der Wellenfronten (d.h. der einfallenden und der ausfallenden Wellenfront), der Grundfläche sowie der Phase $\Psi(\bar{x},\bar{y};\lambda,m)$.

$$n'\mathbf{R}_2(\chi')\mathbf{C}'_2\mathbf{R}_2(-\chi')\begin{pmatrix} W'^{(2,0)}_{Out}(0,0) \\ W'^{(1,1)}_{Out}(0,0) \\ W'^{(0,2)}_{Out}(0,0) \end{pmatrix} - n\mathbf{R}_2(\chi)\mathbf{C}_2\mathbf{R}_2(-\chi)\begin{pmatrix} W^{(2,0)}_{In}(0,0) \\ W^{(1,1)}_{In}(0,0) \\ W^{(0,2)}_{In}(0,0) \end{pmatrix} =$$

$$= v\begin{pmatrix} \bar{S}^{(2,0)}(0,0) \\ \bar{S}^{(1,1)}(0,0) \\ \bar{S}^{(0,2)}(0,0) \end{pmatrix} - \begin{pmatrix} \Psi^{(2,0)}(0,0) \\ \Psi^{(1,1)}(0,0) \\ \Psi^{(0,2)}(0,0) \end{pmatrix},$$

$$(127)$$

wobei

$$v = n'\cos\varphi' - n\cos\varphi$$
$$= n'\sqrt{1-\sin^2\varphi'_x - \sin^2\varphi'_y} - n\sqrt{1-\sin^2\varphi_x - \sin^2\varphi_y} \tag{128}$$

erfüllt ist. Die Phase $\Psi(\bar{x},\bar{y};\lambda,m)$ ist dabei die in der Gleichung (116) definierte Phase.

Die einzelnen Termen der Gleichung (127) entsprechend dabei den Termen der BAD Gleichung **B - A** = D + **PK**$^{(2)}$.

In Gleichung (127) stehen die hochgestellten Symbole für Ableitungen. Für eine beliebige Funktion $h(x,y)$ gilt:

$$h^{(k-m,m)}(0,0) := \partial^k/\partial x^{k-m}\partial y^m h(x,y)\big|_{x=0,y=0}. \tag{129}$$

Die Funktion $h(x,y)$ in der Formel (129) spielt dabei wahlweise die Rolle der Funktionen $W_{In}(x,y)$, $W'_{Out}(x',y')$, $S(\bar{x},\bar{y})$ und $\Psi(\bar{x},\bar{y};\lambda,m)$, wobei im Fall von $\Psi(\bar{x},\bar{y};\lambda,m)$ die Ableitungen auf $\bar{x},\bar{y}$ bezogen sind. Die Matrizen $\mathbf{C}_2$ und $\mathbf{C}'_2$ sind wie im rein refraktiven Fall definiert (siehe z.B. G. Esser, W. Becken, W. Müller, P. Baumbach, J. Arasa und D. Uttenweiler, "Derivation of the refraction equations for higher-order aberrations of local wavefronts at oblique incidence", J. Opt. Soc. Am. A/Vol. 27, No. 2/February 2010):

$$\mathbf{C}_2 = \begin{pmatrix} 1 & 0 & 0 \\ 0 & \cos\varphi & 0 \\ 0 & 0 & \cos^2\varphi \end{pmatrix}, \qquad \mathbf{C}'_2 = \begin{pmatrix} 1 & 0 & 0 \\ 0 & \cos\varphi' & 0 \\ 0 & 0 & \cos^2\varphi' \end{pmatrix}. \tag{130}$$

Zusätzlich geht in die Gleichung (127) die Matrix $\mathbf{R}_2(\chi)$ ein, welche die Drehung der Wellenfront beschreibt. Ist allgemein eine Wellenfront durch die Funktion $w(x,y)$ gegeben, dann wird diese in gedrehten Koordinaten

$$\begin{pmatrix} \tilde{x} \\ \tilde{y} \end{pmatrix} = \mathbf{Rot}(\alpha)\begin{pmatrix} x \\ y \end{pmatrix} \qquad \text{mit} \qquad \mathbf{Rot}(\alpha) = \begin{pmatrix} \cos\alpha & -\sin\alpha \\ \sin\alpha & \cos\alpha \end{pmatrix} \tag{132}$$

durch die transformierte Funktion

$$\widetilde{w}(\widetilde{x},\widetilde{y}) = w(x(\widetilde{x},\widetilde{y}), y(\widetilde{x},\widetilde{y})) \qquad (133)$$

beschrieben.

Die Ableitung k-ter Ordnung $\dfrac{\partial^k}{\partial\widetilde{x}^m\partial\widetilde{y}^{k-m}}\widetilde{w}(\widetilde{x},\widetilde{y})$ bzgl. der gedrehten Koordinaten kann als Linearkombination der Ableitungen $\dfrac{\partial^k}{\partial x^l\partial y^{k-l}}w(x,y)$ nach den ursprünglichen Koordinaten ausgedrückt werden. Die $(k+1)\times(k+1)$-Matrix $\mathbf{R}_k(\chi)$ beschreibt den Übergang zwischen der Ableitung der k-ten Ordnung in dem Koordinatensystem $(x,y)$ und der Ableitung der k-ten Ordnung in dem Koordinatensystem $(\overline{x},\overline{y})$.

$$\frac{\partial^k}{\partial\widetilde{x}^m\partial\widetilde{y}^{k-m}}\widetilde{w}(\widetilde{x},\widetilde{y}) = \sum_{l=0}^{k}\left(\mathbf{R}_k(\chi)\right)_{(m+1),(l+1)}\frac{\partial^k}{\partial x^l\partial y^{k-l}}w(x,y), \quad m=0,\ldots,k, \quad l=0,\ldots,k$$

$$(134)$$

Explizit gilt für die ersten drei Ordnungen

$$\mathbf{R}_1(\alpha) = \begin{pmatrix} \cos\alpha & -\sin\alpha \\ \sin\alpha & \cos\alpha \end{pmatrix} = \mathbf{Rot}(\alpha)$$

$$\mathbf{R}_2(\alpha) = \begin{pmatrix} \cos^2\alpha & -2\cos\alpha\sin\alpha & \sin^2\alpha \\ \cos\alpha\sin\alpha & \cos^2\alpha - \sin^2\alpha & -\cos\alpha\sin\alpha \\ \sin^2\alpha & 2\cos\alpha\sin\alpha & \cos^2\alpha \end{pmatrix}$$

$$\mathbf{R}_3(\alpha) = \begin{pmatrix} \cos^3\alpha & -3\cos^2\alpha\sin\alpha & 3\cos\alpha\sin^2\alpha & -\sin^3\alpha \\ \cos^2\alpha\sin\alpha & \cos^3\alpha-2\cos\alpha\sin^2\alpha & \sin^3\alpha-2\cos^2\alpha\sin\alpha & \cos\alpha\sin^2\alpha \\ \cos\alpha\sin^2\alpha & -(\sin^3\alpha-2\cos^2\alpha\sin\alpha) & \cos^3\alpha-2\cos\alpha\sin^2\alpha & -\cos^2\alpha\sin\alpha \\ \sin^3\alpha & 3\cos\alpha\sin^2\alpha & 3\cos^2\alpha\sin\alpha & \cos^3\alpha \end{pmatrix}$$

$$\mathbf{R}_4(\alpha) = \ldots$$

$$(135)$$

Nachfolgend werden einige spezielle Fälle von optischen Systemen, insbesondere von Brillengläsern mit POE, betrachtet. So gilt bei einem senkrechten Lichteinfall:

$$v = n'-n;$$

$$\mathbf{R}_2 = \mathbf{1};$$

$$\mathbf{C}_2 = \mathbf{1};$$

$$\mathbf{C'}_2 = \mathbf{1}.$$

Für die Gleichung (127) ergibt sich:

$$n'\begin{pmatrix} W'^{(2,0)}_{Out}(0,0) \\ W'^{(1,1)}_{Out}(0,0) \\ W'^{(0,2)}_{Out}(0,0) \end{pmatrix} - n\begin{pmatrix} W^{(2,0)}_{In}(0,0) \\ W^{(1,1)}_{In}(0,0) \\ W^{(0,2)}_{In}(0,0) \end{pmatrix} = (n'-n)\begin{pmatrix} \overline{S}^{(2,0)}(0,0) \\ \overline{S}^{(1,1)}(0,0) \\ \overline{S}^{(0,2)}(0,0) \end{pmatrix} - \begin{pmatrix} \Psi^{(2,0)}(0,0) \\ \Psi^{(1,1)}(0,0) \\ \Psi^{(0,2)}(0,0) \end{pmatrix}$$

$$(127a)$$

Bei einem eindimensionalen Problem (Meridionalebene) treten statt gemischter Ableitungen nach $\overline{x}, \overline{y}$ nur Ableitungen nach einer Koordinate auf (z.B. nach $\overline{y}$). Ferner gilt

$$\mathbf{R}_2 = R_2 = 1;$$

$$\mathbf{C}_2 = C_2 = \cos^2 \varphi ;$$

$$\mathbf{C'}_2 = C'_2 = \cos^2 \varphi'.$$

Folglich kann Gleichung (127) als

$$n'\cos^2 \varphi' W'^{(2)}_{Out}(0) - n\cos^2 \varphi W^{(2)}_{In}(0) = \nu \overline{S}^{(2)}(0) - \Psi^{(2)}(0) \qquad (127b)$$

geschrieben werden.

Bei einem senkrechten Lichteinfall und einem eindimensionalen Problem treten statt gemischter Ableitungen nach $\overline{x}, \overline{y}$ nur Ableitungen nach einer Koordinate auf (z.B. nach $\overline{y}$). Ferner gilt

$$\nu = n' - n$$

$$\mathbf{R}_2 = R_2 = 1$$

$$\mathbf{C}_2 = C_2 = 1$$

$$\mathbf{C'}_2 = C'_2 = 1$$

Folglich kann Gleichung (127) als

$$n' W'^{(2)}_{Out}(0) - n W^{(2)}_{In}(0) = (n'-n)\overline{S}^{(2)}(0) - \Psi^{(2)}(0) \qquad (127c)$$

geschrieben werden.

Eigenschaften höherer Ordnung der Wellenfront (eigenschaften 3.,4,... Ordnung)

Analog zu Gleichung (127) gilt für Ableitungen 3. Ordnung

$$n'\mathbf{R}_3(\chi')\mathbf{C'}_3\,\mathbf{R}_3(-\chi')\begin{pmatrix} W'^{(3,0)}_{\text{Out}}(0,0) \\ W'^{(2,1)}_{\text{Out}}(0,0) \\ W'^{(1,2)}_{\text{Out}}(0,0) \\ W'^{(0,3)}_{\text{Out}}(0,0) \end{pmatrix} - n\mathbf{R}_3(\chi)\mathbf{C}_3\mathbf{R}_3(-\chi)\begin{pmatrix} W^{(3,0)}_{\text{In}}(0,0) \\ W^{(2,1)}_{\text{In}}(0,0) \\ W^{(1,2)}_{\text{In}}(0,0) \\ W^{(0,3)}_{\text{In}}(0,0) \end{pmatrix} =$$

$$= v\begin{pmatrix} \overline{S}^{(3,0)}(0,0) \\ \overline{S}^{(2,1)}(0,0) \\ \overline{S}^{(1,2)}(0,0) \\ \overline{S}^{(0,3)}(0,0) \end{pmatrix} - \begin{pmatrix} \Psi'^{(3,0)}(0,0) \\ \Psi'^{(2,1)}(0,0) \\ \Psi'^{(1,2)}(0,0) \\ \Psi'^{(0,3)}(0,0) \end{pmatrix} + \mathbf{Q}_3(\mathbf{S}^{(2)},\mathbf{F}^{(2)}) \qquad (136)$$

wobei analog zu Gleichung (130) gilt:

$$\mathbf{C}_3 = \begin{pmatrix} 1 & 0 & 0 & 0 \\ 0 & \cos\varphi & 0 & 0 \\ 0 & 0 & \cos^2\varphi & 0 \\ 0 & 0 & 0 & \cos^3\varphi \end{pmatrix},\; \mathbf{C'}_3 = \begin{pmatrix} 1 & 0 & 0 & 0 \\ 0 & \cos\varphi' & 0 & 0 \\ 0 & 0 & \cos^2\varphi' & 0 \\ 0 & 0 & 0 & \cos^3\varphi' \end{pmatrix}. \qquad (137)$$

Gleichungen für die noch höheren Ordnungen k = 4,5,... können analog gebildet werden.

Mit der oben beschriebenen Vorgehensweise ist es möglich, ein optisches System (z.B. ein Brillenglas) mit zumindest einem diffraktiven Gitter exakt zu beschreiben. Insbesondere ist es möglich, die Eigenschaften zweiter oder höherer Ordnung der aus dem optischen System austretenden Wellenfront exakt zu bestimmen. Anhand der Eigenschaften der Wellenfront zweiter Ordnung oder höherer Ordnung können die Abbildungsfehler des optischen Elements (z.B. des Brillenglases) in an sich bekannter Weise ermittelt werden. Diesbezüglich wird insbesondere auf die Druckschrift WO 2008/089999 A1, auf den Artikel von W. Becken et al. "Brillengläser im Sport: Optimierung der Abbildungseigenschaften unter physiologischen Aspekten", Z. Med. Phys., 17 (2007), Seiten 56 - 66 oder auf den Artikel von G. Esser "Derivation of the refraction equations for higher-order aberrations of local wavefronts at oblique incidence", JOSA A, Vol. 27, Nr. 2, Februar 2010, Seiten 218-237 verwiesen. Auf diese Druckschriften wird hinsichtlich der verwendeten Fachterminologie und insbesondere der in Gleichungen (121) bis (137) verwendeten Symbole sowie bezüglich des Zusammenhangs der Sphäre, Zylinder, Achse (SZA-Werte) mit Wellenfronteigenschaften ausdrücklich Bezug genommen. Die entsprechenden Ausführungen stellen insoweit einen integralen Offenbarungsbestandteil der vorlegenden Anmeldung dar.

**Bezugszeichenliste**

| | |
|---|---|
| 10 | einfallende Wellenfront |
| 12 | Grenzfläche |
| 14 | periodische Struktur (diffraktives Gitter) |
| 16 | ausfallende Wellenfront |
| 20 | Prisma |
| 100 | optisches Element/System (z.B. Brillenglas) |
| 102 | einfallender Strahl |
| 104,106 | refraktive Grenzflächen |
| 108 | ausfallender Strahl |
| 108-m | ausfallender Strahl der m-ten Beugungsordnung |
| 110 | einfallende Wellenfront |
| 112 | ausfallende Wellenfront |
| 122 | diffraktives Gitter |

| | |
|---|---|
| 114 | optisches Material |
| 116 | Durchgang durch das optische Material |
| 122a | Gitterlinien |
| 112b | projizierte Gitterlinien |
| 124 | Einfallsebene |
| 126 | orthogonale Trajektorien |
| 130-134 | Schritte des Übergangs zwischen einer Periodenfunktion und einer Phasenfunktion |

**Patentansprüche**

1. Computerimplementiertes Verfahren zum Optimieren eines optischen Elements (100) umfassend zumindest ein diffraktives Gitter (14; 122), wobei zumindest eine zur refraktiven Lichtablenkung beitragende, refraktive Fläche und/oder das zumindest eine diffraktive Gitter (14; 122) des optischen Elements (100) derart optimiert wird bzw. werden, den Farbsaum und zumindest einen Abbildungsfehler zweiter Ordnung des optischen Elements (100) zu minimieren, wobei das Verfahren ein Optimieren der zumindest einen refraktiven Fläche und/oder des zumindest einen diffraktiven Gitters (14; 122) durch ein Minimieren oder ein Maximieren einer Zielfunktion $F_2$ oder $F_3$, welche von dem zumindest einen Abbildungsfehler und von dem Farblängs- oder dem Farbquerfehler des optischen Elements (100) abhängt, wobei das Optimieren für eine Mehrzahl von Bewertungsstellen erfolgt, wobei

$$F_2 = F_{\text{monochrom}}(\lambda_0) + \sum_i g_{\text{FLF}}(i) \times f\left(\mathbf{S}_{\text{SK}}(i,\lambda_2) - \mathbf{S}_{\text{SK}}(i,\lambda_1)\right)^2$$

$$F_3 = F_{\text{monochrom}}(\lambda_0) + \sum_i g_{\text{FQF}}(i) \times g\left(\Delta\varphi_{\text{SK}}(i,\lambda_2,\lambda_1)\right)^2$$

und wobei

$F_{\text{monochrom}}(\lambda)$ eine monochromatische Zielfunktion für die Wellenlänge $\lambda$;
$g_{\text{FLF}}(i)$ die Gewichtung des Farblängsfehlers an der $i$-ten Bewertungsstelle des optischen Elements (100);
$g_{\text{FQF}}(i)$ die Gewichtung des Farbquerfehlers an der $i$-ten Bewertungsstelle des optischen Elements (100);
$\mathbf{S}_{\text{SK}}(i,\lambda_1)$ die Vergenzmatrix der Wellenfront an der Scheitelpunktkugel für Wellenlänge $\lambda_1$ und für die $i$-te Bewertungsstelle;
$\mathbf{S}_{\text{SK}}(i,\lambda_2)$ die Vergenzmatrix der Wellenfront an der Scheitelpunktkugel für Wellenlänge $\lambda_2$ und für die $i$-te Bewertungsstelle; und
$f(\mathbf{S}_{\text{SK}}(i,\lambda_2)\text{-}\mathbf{S}_{\text{SK}}(i,\lambda_1))$ eine Funktion der Differenz der Vergenzmatrizen der Wellenfront an der Scheitelpunktkugel für die unterschiedlichen Wellenlängen $\lambda_1$ und $\lambda_2$;
$\Delta\varphi_{\text{SK}}(i,\lambda_2,\lambda_1)$ den Winkel zwischen den objektseitigen Hauptstrahlen für unterschiedlichen Wellenlängen $\lambda_1$ und $\lambda_2$; und
$g(\Delta\varphi_{\text{SK}}(i,\lambda_2,\lambda_1))$ eine Funktion des Winkels zwischen den objektseitigen Hauptstrahlen für die unterschiedlichen Wellenlängen $\lambda_1$ und $\lambda_2$

bezeichnen.

2. Verfahren gemäß Anspruch 1, wobei sowohl die zumindest eine refraktive Fläche als auch das zumindest eine diffraktive Gitter (14; 122) des optischen Elements (100) optimiert werden.

3. Verfahren nach Anspruch 1 oder 2, wobei die Zielfunktion $F_2$ eine Zielfunktion:

$$F_2 = \sum_i \left( g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 + g_{\text{FLF}}(i) \times f\left(\mathbf{S}_{\text{SK}}(i,\lambda_2) - \mathbf{S}_{\text{SK}}(i,\lambda_1)\right)^2 \right)$$

ist, wobei

$Z_\Delta(i,\lambda)$ den Ist-Wert des Betrags des astigmatischen Fehlers an der *i*-ten Bewertungsstelle des optischen Elements (100) für die Wellenlänge $\lambda$;

$Z_{\Delta,\text{Soll}}(i,\lambda)$ den Sollwert des Betrags des astigmatischen Fehlers an der *i*-ten Bewertungsstelle des optischen Elements (100) für die Wellenlänge $\lambda$;

$S_\Delta(i,\lambda)$ den Ist-Wert des Refraktionsfehlers an der *i*-ten Bewertungsstelle des optischen Elements (100) für die Wellenlänge $\lambda$;

$S_{\Delta,\text{soll}}(i,\lambda)$ den Sollwert des Refraktionsfehlers an der *i*-ten Bewertungsstelle des optischen Elements (100) für die Wellenlänge $\lambda$;

$g_Z(i,\lambda)$ die Gewichtung des Betrags der astigmatischen Abweichung an der *i*-ten Bewertungsstelle des optischen Elements (100) für die Wellenlänge $\lambda$; und $g_S(i,\lambda)$ die Gewichtung des Refraktionsfehlers an der *i*-ten Bewertungsstelle des optischen Elements (100) für die Wellenlänge $\lambda$

bezeichnen.

4. Verfahren nach Anspruch 1 oder 2, wobei die Zielfunktion $F_3$ eine Funktion:

$$F_3 = \sum_i \left( g_Z(i)(Z_\Delta(i,\lambda_0) - Z_{\Delta.\text{Soll}}(i,\lambda_0))^2 + g_S(i)(S_\Delta(i,\lambda_0) - S_{\Delta,\text{Soll}}(i,\lambda_0))^2 \right. \\ \left. + g_{\text{FQF}}(i) \times g(\Delta\varphi_{\text{SK}}(i,\lambda_2,\lambda_1))^2 \right)$$

ist, wobei

$Z_\Delta(i,\lambda)$ den Ist-Wert des Betrags des astigmatischen Fehlers an der *i*-ten Bewertungsstelle des optischen Elements (100) für die Wellenlänge $\lambda$; $Z_{\Delta,\text{Soll}}(i,\lambda)$ den Sollwert des Betrags des astigmatischen Fehlers an der *i*-ten Bewertungsstelle des optischen Elements (100) für die Wellenlänge $\lambda$;

$S_\Delta(i,\lambda)$ den Ist-Wert des Refraktionsfehlers an der *i*-ten Bewertungsstelle des optischen Elements (100) für die Wellenlänge $\lambda$;

$S_{\Delta,\text{Soll}}(i,\lambda)$ den Sollwert des Refraktionsfehlers an der *i*-ten Bewertungsstelle des optischen Elements (100) für die Wellenlänge $\lambda$;

$g_Z(i,\lambda)$ die Gewichtung des Betrags der astigmatischen Abweichung an der *i*-ten Bewertungsstelle des optischen Elements (100) für die Wellenlänge $\lambda$; und $g_S(i,\lambda)$ die Gewichtung des Refraktionsfehlers an der *i*-ten Bewertungsstelle des optischen Elements (100) für die Wellenlänge $\lambda$

bezeichnen.

5. Verfahren nach einem der vorangegangenen Ansprüche, wobei die zumindest eine refraktive Fläche und das zumindest eine diffraktive Gitter (14; 122) des optischen Elements (100) simultan oder sequentiell optimiert werden.

6. Verfahren nach einem der vorangegangenen Ansprüche, umfassend ferner die Schritte
Vorgeben eines refraktiven optischen Elements,
Berechnen eines diffraktiven Gitters (14; 122), welches den Farbsaum des vorgegebenen refraktiven optischen Elements minimiert, und Hinzufügen des so berechneten diffraktiven Gitters (14; 122) zu dem refraktiven optischen Element;
Optimieren zumindest einer der refraktiven Flächen des so entstandenen optischen Elements bei festgehaltenem diffraktiven Gitter (14; 122) derart, dass der durch das diffraktive Gitter (14; 122) eingeführte Refraktionsfehler minimiert wird; und
Optimieren des zumindest einen diffraktiven Gitters (14; 122) bei festgehaltenen refraktiven Flächen des optischen Elements derart, dass der durch die Flächenänderung der zumindest einen refraktiven Fläche eingeführte Farbsaum minimiert wird.

7. Verfahren nach Anspruch 6, wobei das Vorgeben eines refraktiven optischen Elements ein Optimieren zumindest einer der refraktiven Flächen des refraktiven optischen Elements umfasst, welches derart erfolgt, zumindest einen Abbildungsfehler zweiter Ordnung, vorzugsweise den Refraktionsfehler des optischen Elements zu minimieren.

8. Verfahren nach einem der Ansprüche 1 bis 5, umfassend ferner die Schritte
Vorgeben eines refraktiven optischen Elements;

Optimieren zumindest einer der refraktiven Flächen des vorgegebenen refraktiven optischen Elements derart, dass der refraktive Anteil $S_{\text{ref},0}(\lambda_d)$ des Brechwerts in einem vorgegeben Bezugspunkt des refraktiven optischen Elements und für eine vorgegebene Wellenlänge $\lambda_d$ den Wert $\dfrac{S_{\text{Rezept}}}{\left(1 - \dfrac{1}{v_d} \cdot \dfrac{\lambda_d}{\lambda_F - \lambda_C}\right)}$ erreicht; und

Berechnen eines diffraktiven Gitters (14; 122), welches den Farbsaum des refraktiven optischen Elements minimiert, und Hinzufügen des so berechneten diffraktiven Gitters (14; 122) zu dem optimierten refraktiven optischen Elements, wobei

$S_{\text{Rezept}}$ einen vorgegebenen Sollwert;
$v_d$ die Abbezahl der Basisgläser;
$\lambda_F$ die F-Fraunhofer Linie, welche in die Definition der Abbezahl eingeht;
$\lambda_C$ die C-Fraunhofer Linie, welche in die Definition der Abbezahl eingeht bezeichnen.

9. Verfahren nach einem der Ansprüche 1 bis 5, umfassend ferner die Schritte

Vorgeben eines refraktiven optischen Elements mit einem Brechwert $S_{\text{ref},0}(\lambda_d) = \dfrac{S_{\text{Rezept}}}{\left(1 - \dfrac{1}{v_d} \cdot \dfrac{\lambda_d}{\lambda_F - \lambda_C}\right)}$ in einem vorgegebenen Bezugspunkt und für eine vorgegebene Wellenlänge $\lambda_d$;

Berechnen eines diffraktiven Gitters (14; 122), welches ausgelegt ist, den Farbsaum des refraktiven optischen Elements zu minimieren, und Hinzufügen des so berechneten diffraktiven Gitters (14; 122) zu dem refraktiven optischen Element; und

Optimieren zumindest einer der refraktiven Flächen des so entstandenen optischen Elements bei festgehaltenem diffraktiven Gitter (14; 122) derart, dass der durch das optische Gitter (14; 122) eingeführte Refraktionsfehler minimiert wird, wobei

$S_{\text{Rezept}}$ einen vorgegebenen Sollwert;
$v_d$ die Abbezahl der Basisgläser;
$\lambda_F$ die F-Fraunhofer Linie, welche in die Definition der Abbezahl eingeht;
$\lambda_C$ die C-Fraunhofer Linie, welche in die Definition der Abbezahl eingeht

bezeichnen.

10. Verfahren nach einem der vorangegangenen Ansprüche, wobei der zumindest eine Abbildungsfehler des optischen Elements (100) mit dem zumindest einen diffraktiven Gitter (14; 122) mittels einer Wellenfrontdurchrechnung unter Berücksichtigung des diffraktiven Gitters (14; 122) berechnet wird.

11. Verfahren nach einem der vorangegangenen Ansprüche, wobei das optische Element (100) ein Brillenglas ist.

12. Computerprogrammerzeugnis, welches ausgelegt ist, wenn geladen und ausgeführt auf einem Computer, ein Verfahren zum Optimieren eines optischen Elements (100) mit zumindest einem diffraktiven Gitter (14; 122) gemäß einem der Ansprüche 1 bis 11 durchzuführen.

13. Vorrichtung zum Optimieren eines optischen Elements (100) mit zumindest einem diffraktiven Gitter (14; 122), umfassend Optimierungsmittel, welche ausgelegt sind, ein Optimieren des optischen Elements (100) nach dem Verfahren zum Optimieren eines optischen Elements (100) gemäß einem der Ansprüche 1 bis 11 durchzuführen.

14. Verfahren zum Herstellen eines optischen Elements (100), insbesondere eines Brillenglases, mit zumindest einem diffraktiven Gitter (14; 122), umfassend die Schritte:

Optimieren des optischen Elements (100) nach dem Verfahren zum Optimieren eines optischen Elements gemäß einem der Ansprüche 1 bis 11;

Bereitstellen von Bearbeitungsdaten des optimierten optischen Elements (100); und
Fertigen des optischen Elements (100) nach den bereitgestellten Bearbeitungsdaten.

**15.** Vorrichtung zum Herstellen eines optischen Elements (100), insbesondere eines Brillenglases mit zumindest einem diffraktiven Gitter (14; 122), umfassend

- Optimierungsmittel, welche ausgelegt sind, ein Optimieren des optischen Elements (100) nach dem Verfahren zum Optimieren eines optischen Elements (100) gemäß einem der Ansprüche 1 bis 11 durchzuführen; und
- Bearbeitungsmittel, welche ausgelegt sind, das optimierte optische Element (100) zu fertigen.

**Claims**

**1.** Computer-implemented method for optimising an optical element (100) having at least one diffractive grating (14; 122), wherein at least one refractive surface, which contributes to the refractive deflection of light, and/or the at least one diffractive grating (14; 122) of the optical element (100) is/are optimised so as to minimise the colour fringe and at least one second-order imaging error of the optical element (100), wherein the method comprises optimising the at least one refractive surface and/or the at least one diffractive grating (14; 122) by minimising or maximising a target function $F_2$ or $F_3$, which is dependent on the at least one imaging error and on the longitudinal chromatic aberration or the transverse chromatic aberration of the optical element (100), wherein optimisation is carried out for a plurality of evaluation points, wherein

$$F_2 = F_{\text{monochrom}}(\lambda_0) + \sum_i g_{\text{FLF}}(i) \times f\big(S_{SK}(i,\lambda_2) - S_{SK}(i,\lambda_1)\big)^2$$

$$F_3 = F_{\text{monochrom}}(\lambda_0) + \sum_i g_{\text{FQF}}(i) \times g\big(\Delta\varphi_{SK}(i,\lambda_2,\lambda_1)\big)^2$$

and wherein

$F_{\text{monochrom}}(\lambda)$ represents a monochromatic target function for the wavelength $\lambda$;
$g_{\text{FLF}}(i)$ represents the weighting of the longitudinal chromatic aberration at the $i$-th evaluation point of the optical element (100);
$g_{\text{FQF}}(i)$ represents the weighting of the transverse chromatic aberration at the $i$-th evaluation point of the optical element (100);
$S_{SK}(i,\lambda_1)$ represents the vergence matrix of the wavefront on the vertex sphere for wavelength $\lambda_1$ and for the $i$-th evaluation point;
$S_{SK}(i,\lambda_2)$ represent the vergence matrix of the wavefront on the vertex sphere for the wavelength $\lambda_2$ and for the $i$-th evaluation point; and
$f(S_{SK}(i,\lambda_2) - S_{SK}(i,\lambda_1))$ represents a function of the difference between the vergence matrices of the wavefront on the vertex sphere for the different wavelengths $\lambda_1$ and $\lambda_2$;
$\Delta\varphi_{SK}(i,\lambda_2,\lambda_1)$ represents the angle between the object-side main beams for the different wavelength $\lambda_1$ and $\lambda_2$; and
$g(\Delta\varphi_{SK}(i,\lambda_2,\lambda_1))$ represents a function of the angle between the object-side main beams for the different wavelengths $\lambda_1$ and $\lambda_2$.

**2.** Method according to claim 1, wherein both the at least one refractive surface and the at least one diffractive grating (14; 122) of the optical element (100) are optimised.

**3.** Method according to either claim 1 or claim 2, wherein the target function $F_2$ is a target function:

$$F_2 = \sum_i \big( g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 + g_{\text{FLF}}(i) \times f(S_{SK}(i,\lambda_2) - S_{SK}(i,\lambda_1))^2 \big)$$

wherein

$Z_\Delta(i,\lambda)$ represents the actual value of the magnitude of the astigmatic error at the *i*-th evaluation point of the optical element (100) for the wavelength $\lambda$;

$Z_{\Delta,\text{Soll}}(i,\lambda)$ represents the target value of the magnitude of the astigmatic error at the *i*-th evaluation point of the optical element (100) for the wavelength $\lambda$;

$S_\Delta(i,\lambda)$ represents the actual value of the refraction error at the *i*-th evaluation point of the optical element (100) for the wavelength $\lambda$;

$S_{\Delta,\text{Soll}}(i,\lambda)$ represents the target value of the refraction error at the *i*-th evaluation point of the optical element (100) for the wavelength $\lambda$;

$g_Z(i,\lambda)$ represents the weighting of the magnitude of the astigmatic deviation at the *i*-th evaluation point of the optical element (100) for the wavelength $\lambda$; and

$g_S(i,\lambda)$ represents the weighting of the refraction error at the *i*-th evaluation point of the optical element (100) for the wavelength $\lambda$.

4. Method according to either claim 1 or claim 2, wherein the target function $F_3$ is a function:

$$F_3 = \sum_i \left( g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 + g_{FQF}(i) \times g(\Delta\varphi_{SK}(i,\lambda_2,\lambda_1))^2 \right)$$

wherein

$Z_\Delta(i,\lambda)$ represents the actual value of the magnitude of the astigmatic error at the *i*-th evaluation point of the optical element (100) for the wavelength $\lambda$;

$Z_{\Delta,\text{Soll}}(i,\lambda)$ represents the target value of the magnitude of the astigmatic error at the *i*-th evaluation point of the optical element (100) for the wavelength $\lambda$;

$S_\Delta(i,\lambda)$ represents the actual value of the refraction error at the *i*-th evaluation point of the optical element (100) for the wavelength A;

$S_{\Delta,\text{Soll}}(i,\lambda)$ represents the target value of the refraction error at the *i*-th evaluation point of the optical element (100) for the wavelength $\lambda$;

$g_Z(i,\lambda)$ represents the weighting of the magnitude of the astigmatic deviation at the *i*-th evaluation point of the optical element (100) for the wavelength A; and

$g_S(i,\lambda)$ represents the weighting of the refraction error at the *i*-th evaluation point of the optical element (100) for the wavelength $\lambda$.

5. Method according to any of the preceding claims, wherein the at least one refractive surface and the at least one diffractive grating (14; 122) of the optical element (100) are optimised either simultaneously or sequentially.

6. Method according to any of the preceding claims, further comprising the steps of
specifying a refractive optical element,
calculating a diffractive grating (14; 122), which minimises the colour fringe of the specified refractive optical element, and adding the diffractive grating (14; 122) calculated in this way to the refractive optical element;
optimising at least one of the refractive surfaces of the optical element thus produced while maintaining the diffractive grating (14; 122) such that the refraction error introduced by the diffractive grating (14; 122) is minimised; and optimising the at least one diffractive grating (14; 122) while maintaining the refractive surface of the optical element, such that the colour fringe introduced by the surface arrangement of the at least one refractive surface is minimised.

7. Method according to claim 6, wherein specifying a refractive optical element comprises optimising at least one of the refractive surfaces of the refractive optical element, which is carried out so as to minimise at least one second-order imaging error, preferably the refraction error of the optical element.

8. Method according to any of claims 1 to 5, further comprising the steps of
specifying a refractive optical element;
optimising at least one of the refractive surfaces of the specified refractive optical element such that the refractive portion $S_{ref,0}(\lambda_d)$ of the refractive index reaches the value $\dfrac{S_{Rezept}}{\left(1 - \dfrac{1}{v_d} \cdot \dfrac{\lambda_d}{\lambda_F - \lambda_C}\right)}$ at a specified reference point of the refractive optical element and for a specified wavelength $\lambda_d$; and

calculating a diffractive grating (14; 122) which minimises the colour fringe of the refractive optical element, and adding the diffractive grating (14; 122) calculated in this way to the optimised refractive optical element, wherein

$S_{Rezept}$ represents a predetermined target value;
$v_d$ represents the Abbe number of the base lenses;
$\lambda_F$ represents the F-Fraunhofer line which is included in the definition of the Abbe number; and
$\lambda_C$ represents the C-Fraunhofer line which is included in the definition of the Abbe number.

9.  Method according to any of claims 1 to 5, further comprising the steps of specifying a refractive optical element having a refractive index $S_{ref,0}(\lambda_d) = \dfrac{S_{Rezept}}{\left(1 - \dfrac{1}{v_d} \cdot \dfrac{\lambda_d}{\lambda_F - \lambda_C}\right)}$ in a specified reference point and for a specified wavelength $\lambda_d$;

calculating a diffractive grating (14; 122) which is designed to minimise the colour fringe of the refractive optical element, and adding the diffractive grating (14; 122) calculated in this way to the refractive optical element; and optimising at least one of the refractive surfaces of the optical element thus produced while maintaining the diffractive grating (14; 122) such that the refraction error introduced by the optical grating (14; 122) is minimised, wherein

$S_{Rezept}$ represents a specified target value;
$v_d$ represents the Abbe number of the base lenses;
$\lambda_F$ represents the F-Fraunhofer line which is included in the definition of the Abbe number; and
$\lambda_{C'}$ represents the C-Fraunhofer line which is included in the definition of the Abbe number.

10. Method according to any of the preceding claims, wherein the at least one imaging error of the optical element (100) comprising the at least one diffractive grating (14; 122) is calculated by means of wavefront tracing, taking into account the diffractive grating (14; 122).

11. Method according to any of the preceding claims, wherein the optical element (100) is a spectacle lens.

12. Computer program product designed to carry out a method for optimising an optical element (100) comprising at least one diffractive grating (14; 122) according to any of claims 1 to 11 when loaded and executed on a computer.

13. Device for optimising an optical element (100) having at least one diffractive grating (14; 122), comprising optimisation means designed to optimise the optical element (100) as per the method for optimising an optical element (100) according to any of claims 1 to 11.

14. Method for producing an optical element (100), in particular a spectacle lens, comprising at least one diffractive grating (14; 122), comprising the steps of:

optimising the optical element (100) as per the method for optimising an optical element according to any of claims 1 to 11;
providing processing data relating to the optimised optical element (100); and
manufacturing the optical element (100) according to the processing data provided.

15. Device for producing an optical element (100), in particular a spectacle lens, comprising at least one diffractive grating (14; 122), comprising

- optimisation means designed to optimise the optical element (100) as per the method for optimising an optical element (100) according to any of claims 1 to 11; and

- processing means designed to manufacture the optimised optical element (100).

**Revendications**

1. Procédé exécutable par ordinateur pour l'optimisation d'un élément optique (100) comprenant au moins un réseau de diffraction (14 ; 122), dans lequel au moins une surface réfringente contribuant à la déviation réfringente de la lumière et/ou ledit au moins un réseau de diffraction (14 ; 122) de l'élément optique (100) est ou sont optimisé(s) de manière à réduire au minimum la frange colorée et au moins une aberration du second ordre de l'élément optique (100),
dans lequel
ledit procédé consiste en une optimisation de ladite au moins une surface réfringente et/ou dudit au moins un réseau de diffraction (14 ; 122) par minimisation ou maximisation d'une fonction cible $F_2$ ou $F_3$ dépendant de ladite au moins une aberration et de l'aberration chromatique longitudinale ou de l'aberration chromatique latérale de l'élément optique (100), dans lequel l'optimisation est réalisée pour une pluralité de points d'évaluation, dans laquelle

$$F_2 = F_{\text{monochrom}}(\lambda_0) + \sum_i g_{\text{FLF}}(i) \times f(S_{\text{SK}}(i,\lambda_2) - S_{\text{SK}}(i,\lambda_1))^2$$

$$F_3 = F_{\text{monochrom}}(\lambda_0) + \sum_i g_{\text{FQF}}(i) \times g(\Delta\varphi_{\text{SK}}(i,\lambda_2,\lambda_1))^2$$

et dans laquelle

$F_{monochrom}(\lambda)$ est une fonction cible monochromatique pour la longueur d'onde $\lambda$ ;
$g_{\text{FLF}}(i)$ est la pondération de l'aberration chromatique longitudinale sur le i$^{\text{ème}}$ point d'évaluation de l'élément optique (100) ;
$g_{\text{FQF}}(i)$ est la pondération de l'aberration chromatique latérale an der i$^{\text{ème}}$ point d'évaluation de l'élément optique (100) ;
$S_{\text{SK}}(i,\lambda_1)$ est la matrice de vergence du front d'onde sur la sphère de sommet pour la longueur d'onde $\lambda_1$ et pour le i$^{\text{ème}}$ point d'évaluation ;
$S_{\text{SK}}(i,\lambda_2)$ est la matrice de vergence du front d'onde sur la sphère de sommet pour la longueur d'onde $\lambda_2$ et pour le i$^{\text{ème}}$ point d'évaluation ; et
$f(S_{\text{SK}}(i,\lambda_2) - S_{\text{SK}}(i,\lambda_1))$ est une fonction de la différence des matrices de vergence du front d'onde sur la sphère de sommet pour les différentes longueurs d'onde $\lambda_1$ et $\lambda_2$ ;
$\Delta\varphi_{\text{SK}}(i,\lambda_2,\lambda_1)$ est l'angle entre les faisceaux principaux côté objet pour les différentes longueurs d'onde $\lambda_1$ et $\lambda_2$ ; et
$g(\Delta\varphi_{\text{SK}}(i,\lambda_2,\lambda_1))$ est une fonction de l'angle entre les faisceaux principaux côté objet pour les différentes longueurs d'onde $\lambda_1$ et $\lambda_2$.

2. Procédé selon la revendication 1, dans lequel ladite au moins une surface réfringente ainsi que ledit au moins un réseau de diffraction (14 ; 122) de l'élément optique (100) sont optimisés.

3. Procédé selon la revendication 1 ou 2, dans lequel la fonction cible $F_2$ est une fonction cible :

$$F_2 = \sum_i \left( g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 + g_{\text{FLF}}(i) \times f(S_{\text{SK}}(i,\lambda_2) - S_{\text{SK}}(i,\lambda_1))^2 \right)$$

dans laquelle

$Z_\Delta(i,\lambda)$ est la valeur effective de l'aberration astigmatique sur le i$^{\text{ème}}$ point d'évaluation de l'élément optique (100) pour la longueur d'onde $\lambda$ ;
$Z_{\Delta,\text{Soll}}(i,\lambda)$ est la valeur de consigne de l'aberration astigmatique sur le i$^{\text{ème}}$ point d'évaluation de l'élément optique (100) pour la longueur d'onde $\lambda$ ;
$S_\Delta(i,\lambda)$ est la valeur effective de l'aberration de réfraction sur le i$^{\text{ème}}$ point d'évaluation de l'élément optique (100) pour la longueur d'onde $\lambda$ ;

$S_{\Delta,\text{Soll}}(i,\lambda)$ est la valeur de consigne de l'aberration de réfraction sur le $i^{\text{ème}}$ point d'évaluation de l'élément optique (100) pour la longueur d'onde $\lambda$ ;

$g_Z(i,\lambda)$ est la pondération de la valeur de déviation astigmate sur le $i^{\text{ème}}$ point d'évaluation de l'élément optique (100) pour la longueur d'onde $\lambda$ ; et

$g_S(i,\lambda)$ est la pondération de l'aberration de réfraction sur le $i^{\text{ème}}$ point d'évaluation de l'élément optique (100) pour la longueur d'onde $\lambda$.

4. Procédé selon la revendication 1 ou 2, dans lequel la fonction cible $F_3$ est une fonction :

$$F_3 = \sum_i \left\{ \begin{array}{l} g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 \\ + g_{\text{FQF}}(i) \times g(\Delta\varphi_{\text{SK}}(i,\lambda_2,\lambda_1))^2 \end{array} \right\}$$

dans laquelle

$Z_\Delta(i,\lambda)$ est la valeur effective de l'aberration astigmatique sur le $i^{\text{ème}}$ point d'évaluation de l'élément optique (100) pour la longueur d'onde $\lambda$ ;

$Z_{\Delta,\text{Soll}}(i,\lambda)$ est la valeur de consigne de l'aberration astigmatique sur le $i^{\text{ème}}$ point d'évaluation de l'élément optique (100) pour la longueur d'onde $\lambda$ ;

$S_\Delta(i,\lambda)$ est la valeur effective de l'aberration de réfraction sur le $i^{\text{ème}}$ point d'évaluation de l'élément optique (100) pour la longueur d'onde $\lambda$ ;

$S_{\Delta,\text{soll}}(i,\lambda)$ est la valeur de consigne de l'aberration de réfraction sur le $i^{\text{ème}}$ point d'évaluation de l'élément optique (100) pour la longueur d'onde $\lambda$ ;

$g_Z(i,\lambda)$ est la pondération de la valeur de déviation astigmate sur le $i^{\text{ème}}$ point d'évaluation de l'élément optique (100) pour la longueur d'onde $\lambda$ ; et

$g_S(i,\lambda)$ est la pondération de l'aberration de réfraction sur le $i^{\text{ème}}$ point d'évaluation de l'élément optique (100) pour la longueur d'onde A.

5. Procédé selon l'une des revendications précédentes, dans lequel ladite au moins une surface réfringente et ledit au moins un réseau de diffraction (14 ; 122) de l'élément optique (100) sont optimisés simultanément ou séquentiellement.

6. Procédé selon l'une des revendications précédentes, comprenant en outre les étapes :

de définition d'un élément optique réfringent,
de calcul d'un réseau de diffraction (14 ; 122) minimisant la frange colorée de l'élément optique réfringent défini, et ajout du réseau de diffraction (14 ; 122) ainsi calculé à l'élément optique défini ;
d'optimisation d'au moins une des surfaces réfringentes de l'élément optique ainsi formé avec un réseau de diffraction (14 ; 122) fixé de manière à minimiser l'aberration de réfraction introduite par le réseau de diffraction (14 ; 122) ; et
d'optimisation dudit au moins un réseau de diffraction (14 ; 122) avec des surfaces réfringentes fixées de l'élément optique de manière à minimiser la frange colorée introduite par la modification de surface de ladite au moins une surface réfringente.

7. Procédé selon la revendication 6, dans lequel la définition d'un élément optique réfringent comprend une optimisation d'au moins une des surfaces réfringentes de l'élément optique réfringent, laquelle est réalisée de manière à minimiser au moins une aberration du second ordre, préférentiellement l'aberration de réfraction de l'élément optique.

8. Procédé selon l'une des revendications 1 à 5, comprenant en outre les étapes :

de définition d'un élément optique réfringent ;

d'optimisation d'au moins une des surfaces réfringentes de l'élément optique réfringent défini de manière que, sur un point de référence défini de l'élément optique réfringent et pour une longueur d'onde $\lambda_d$ définie, la part

<div align="center">54</div>

réfringente $S_{\text{ref},0}(\lambda_d)$ de l'indice de réfraction devienne égale à la valeur $\dfrac{S_{\text{Rezept}}}{\left(1 - \dfrac{1}{v_d} \cdot \dfrac{\lambda_d}{\lambda_F - \lambda_C}\right)}$

et

de calcul d'un réseau de diffraction (14 ; 122) minimisant la frange colorée de l'élément optique réfringent, et ajout du réseau de diffraction (14 ; 122) ainsi calculé à l'élément optique réfringent optimisé,

dans laquelle

$S_{\text{Rezept}}$ est une valeur de consigne définie ;

$v_d$ est le nombre d'Abbe des verres de base ;

$\lambda_F$ est la raie F de Fraunhofer participant à la définition du nombre d'Abbe ;

$\lambda_C$ est la raie C de Fraunhofer participant à la définition du nombre d'Abbe.

9. Procédé selon l'une des revendications 1 à 5, comprenant en outre les étapes :

de définition d'un élément optique réfringent avec un indice de réfraction $S_{\text{ref},0}(\lambda_d) = \dfrac{S_{\text{Rezept}}}{\left(1 - \dfrac{1}{v_d} \cdot \dfrac{\lambda_d}{\lambda_F - \lambda_C}\right)}$

sur un point de référence défini et pour une longueur d'onde $\lambda_d$ définie ;

de calcul d'un réseau de diffraction (14 ; 122) prévu pour minimiser la frange colorée de l'élément optique réfringent, et ajout du réseau de diffraction (14 ; 122) ainsi calculé à l'élément optique réfringent ; et

d'optimisation d'au moins une des surfaces réfringentes de l'élément optique ainsi formé avec un réseau de diffraction (14 ; 122) fixé de manière à minimiser l'aberration de réfraction introduite par le réseau optique (14 ; 122),

dans laquelle

$S_{\text{Rezept}}$ est une valeur de consigne définie ;

$v_d$ est le nombre d'Abbe des verres de base ;

$\lambda_F$ est la raie F de Fraunhofer participant à la définition du nombre d'Abbe ;

$\lambda_C$ est la raie C de Fraunhofer participant à la définition du nombre d'Abbe.

10. Procédé selon l'une des revendications précédentes, dans lequel ladite au moins une aberration de l'élément optique (100) est calculée avec ledit au moins un réseau de diffraction (14 ; 12) au moyen d'un calcul global de front d'onde en tenant compte du réseau de diffraction (14 ; 122).

11. Procédé selon l'une des revendications précédentes, dans lequel l'élément optique (100) est un verre de lunette.

12. Produit logiciel informatique, prévu pour exécuter un procédé d'optimisation d'un élément optique (100) avec au moins un réseau de diffraction (14 ; 122) selon l'une des revendications 1 à 11, après chargement et exécution sur un ordinateur.

13. Dispositif pour l'optimisation d'un élément optique (100) avec au moins un réseau de diffraction (14 ; 122) comprenant des moyens d'optimisation prévus pour effectuer une optimisation de l'élément optique (100) conformément au procédé d'optimisation d'un élément optique (100) selon l'une des revendications 1 à 11.

14. Procédé de fabrication d'un élément optique (100), en particulier d'un verre de lunette, avec un au moins un réseau de diffraction (14 ; 122), comprenant les étapes :

d'optimisation de l'élément optique (100) conformément au procédé d'optimisation d'un élément optique selon l'une des revendications 1 à 11 ;

de préparation de données d'usinage de l'élément optique (100) optimisé ; et

de fabrication de l'élément optique (100) suivant les données d'usinage fournies.

15. Dispositif de fabrication d'un élément optique (100), en particulier d'un verre de lunette avec au moins un réseau de diffraction (14 ; 122), comprenant

- des moyens d'optimisation prévus pour effectuer une optimisation de l'élément optique (100) conformément au procédé d'optimisation d'un élément optique (100) selon l'une des revendications 1 à 11 ; et

- des moyens d'usinage prévus pour fabriquer l'élément optique (100) optimisé.

Fig. 1A

Fig. 1B

**Fig. 2A**

**Fig. 2B**

Fig. 3A

Fig. 3B

**Fig. 4A**

**Fig. 4B**

**Fig. 5A**

**Fig. 5B**

**Fig. 6A**

**Fig. 6B**

Fig. 7A

Fig. 7B

Fig. 7C

**Fig. 8A**

**Fig. 8B**

**Fig. 8C**

**Fig. 9A**

**Fig. 9B**

**Fig. 9C**

Farbsaum=pr/Abbezahl  [cm/m]

## Fig. 10A

Farbsaum=pr/Abbezahl  [cm/m]

## Fig. 10B

## Fig. 10C

Astigmatismus (Kom. Glas+Auge)

## Fig. 11A

Phase diffr. Gitter[mm]

**Fig. 11B**

Farbsaum=Prisma/Abbézahl [cm/m]

**Fig. 11C**

Farbsaum mit diffr. Gitter [cm/m]

Fig. 11D

**Fig. 12**

**Fig. 13**

**Fig. 14**

Fig. 15C

Fig. 15B

Fig. 15A

**Fig. 16**

**Fig. 17**

**Fig. 18A**

**Fig. 18**

einfallender Strahl
102

Einfallsebene ~ 124

brechende Fläche
120

diffraktives Gitter
122

108-m

ausfallende Strahlen

m = +1
m = 0
m = -1

73

**Fig. 19**

**Fig. 20**

Fig. 21

Vermessung der
Gitterprojektion (z.B.
Mikroskopaufnahme):
- Gitterlinien
- Funktion $\mathbf{d}(\vec{x}^0, \vec{y}^0)$

130

Interpolation

Kurven mit
$\psi^0(\vec{x}^0, \vec{y}^0) = const.$

Phasenfunktion
$\psi^0(\vec{x}^0, \vec{y}^0)$

132

Festlegung $m, \lambda$

Abspalten $m, \lambda$

Phasenfunktion
$\Psi^0(\vec{x}^0, \vec{y}^0, \lambda, m)$

Trsf. in
das lokale
System

Trsf. in d.
globale
System

Festlegung
Durchstoßpunkt

Phasenfunktion
$\psi(\vec{x}, \vec{y})$

134

Festlegung $m, \lambda$

Abspalten $m, \lambda$

Phasenfunktion
$\Psi(\vec{x}, \vec{y}, \lambda, m)$

Trsf. in
das lokale
System

Trsf. in d.
globale
System

136

Fig. 22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6070980 A
- EP 2108993 A2
- US 20040080710 A1
- EP 1424049 A1
- WO 2005098518 A1
- WO 2008089999 A1

**In der Beschreibung aufgeführte Nicht-Patentliteratur**

- **VON W. BECKEN et al.** Brillengläser im Sport: Optimierung der Abbildungseigenschaften unter physiologischen Aspekten. *Z. Med. Phys.,* 2007, vol. 17, 56-66
- **W. BECKEN et al.** Brillengläser im Sport: Optimierung der Abbildungseigenschaften unter physiologischen Aspekten. *Z. Med. Phys.,* 2007, vol. 17, 56-66
- **W. BECKEN.** Brillengläser im Sport: Optimierung der Abbildungseigenschaften unter physiologischen Aspekten. *Z. Med. Phys.,* 2007, vol. 17, 56-66
- **H. DIEPES ; R. BLENDOWSKE.** Optik und Technik der Brille. 2002
- **B. G. ESSER ; W. BECKEN ; W. MÜLLER ; P. BAUMBACH ; J. ARASA ; D. UTTENWEILER.** Derivation of the refraction equations for higher-order aberrations of local wavefronts at oblique incidence. *JOSA. A,* Februar 2010, vol. 27 (2), 218-237
- **G. ESSER ; W. BECKEN ; W. MÜLLER ; P. BAUMBACH ; J. ARASA ; D. UTTENWEILER.** Derivation of the refraction equations for higher-order aberrations of local wavefronts at oblique incidence. *JOSA. A,* Februar 2010, vol. 27 (2), 218-237
- **G. ESSER ; W. BECKEN ; W. MÜLLER ; P. BAUMBACH ; J. ARASA ; D. UTTENWEILER.** Derivation of the refraction equations for higher-order aberrations of local wavefronts at oblique incidence. *J. Opt. Soc. Am. A,* Februar 2010, vol. 27 (2
- **G. ESSER.** Derivation of the refraction equations for higher-order aberrations of local wavefronts at oblique incidence. *JOSA A,* Februar 2010, vol. 27 (2), 218-237